# EUROPEAN PATENT APPLICATION

(11) **EP 4 819 555 A1**
(43) Date of publication of application: **07.10.2026**
(21) Application number: 23959912.9
(22) Date of filing: 30.11.2023
(51) Int. Cl.: H04L 27/26

(54) **SIGNAL TRANSMISSION METHOD AND APPARATUS, AND DEVICE AND MEDIUM**

(71) Applicant: GUANGDONG OPPO MOBILE TELECOMMUNICATIONS CORP., LTD., Dongguan, Guangdong 523860 (CN)
(72) Inventor: XU, Weijie, Dongguan, Guangdong 523860 (CN); WANG, Ke, Dongguan, Guangdong 523860 (CN)
(74) Representative: RGTH
(86) International application number: PCT/CN2023/135704
(87) International publication number: WO 2025/112001

(57) **Abstract**

The present application belongs to the field of communications. Disclosed are a signal transmission method and apparatus, and a device and a medium. The method, which is executed by a network device, comprises: sending a first signal, wherein the first signal is generated on the basis of a binary sequence, and the first signal is used for radio resource management (RRM) measurement and/or downlink synchronization (1010). Low-power-consumption downlink synchronization and RRM measurement are realized by means of low-complexity synchronization sequence, and the possibility of transmitting a synchronization signal and a measurement signal is provided for some communication scenarios in which it is difficult to use an OFDM waveform.

## Description

### TECHNICAL FIELD

The present application relates to the field of communications, and in particular, to a signal transmission method, an apparatus, a device, and a medium.

### BACKGROUND

Some communication devices, due to their low complexity, have difficulty receiving or processing common orthogonal frequency-division multiplexing (OFDM) signals, and the ZC sequences typically used for generating OFDM signals are no longer applicable. Additionally, for some communication devices constrained by their operating frequency bands, receiving OFDM signals is not an optimal choice.

However, for these communication devices where OFDM signals are not suitable, the need to transmit synchronization signals and measurement signals still exists. Currently, there is no feasible solution for designing non-OFDM waveform-based synchronization signals and measurement signals for such communication devices.

### SUMMARY

The present application provides a signal transmission method, an apparatus, a device, and a medium. The technical solutions include at least the following aspects.

According to one aspect of the embodiments of the present application, a signal transmission method is provided, which is executed by a network device and includes:
transmitting a first signal, where the first signal is generated based on a binary sequence, and the first signal is used for radio resource management (RRM) measurement and/or downlink synchronization.

According to another aspect of the embodiments of the present application, a signal reception method is provided, which is executed by a terminal device and includes:
receiving a first signal, where the first signal is generated based on a binary sequence, and the first signal is used for radio resource management (RRM) measurement and/or downlink synchronization.

According to another aspect of the embodiments of the present application, a signal transmission apparatus is provided. The apparatus includes:
a transmitting module, configured to transmit a first signal, where the first signal is generated based on a binary sequence, and the first signal is used for radio resource management (RRM) measurement and/or downlink synchronization.

According to another aspect of the embodiments of the present application, a signal reception apparatus is provided. The apparatus includes:
a receiving module, configured to receive a first signal, where the first signal is generated based on a binary sequence, and the first signal is used for radio resource management (RRM) measurement and/or downlink synchronization.

According to one aspect of the embodiments of the present application, a communication device is provided. The communication device includes:
a processor, a receiver and/or a transmitter coupled to the processor, a memory configured to store executable instructions for the processor;
where the communication device is configured to implement the signal transmission method as described above.

According to another aspect of the embodiments of the present application, a communication device is provided. The communication device includes: a receiver and/or a transmitter;
where the communication device is configured to implement the signal reception method as described above.

According to one aspect of the embodiments of the present application, a computer-readable storage medium is provided, and the computer-readable storage medium has executable instructions stored thereon. The executable instructions are loaded and executed by a processor to implement the signal transmission method as described in the above aspects.

According to one aspect of the present application, a computer program product is provided, which includes computer instructions stored on a computer-readable storage medium. A processor of a computer device reads the computer instructions from the computer-readable storage medium, and the processor executes the computer instructions to cause the computer device to perform the signal transmission method as described in the above aspects.

According to one aspect of the present application, a chip is provided, which includes a programmable logic circuit and/or program instructions. The chip, when running, can implement the signal transmission method as described in the above aspects.

According to one aspect of the present application, a computer program is provided, which includes computer instructions. A processor of a computer device executes the computer instructions to cause the computer device to perform the signal transmission method as described in the above aspects.

The technical solutions provided by embodiments of the present application can include the following beneficial effects.

Since the first signal is generated based on a binary sequence, which has low complexity, is easy to generate and detect, and can be readily combined with non-OFDM waveforms such as OOK, PSK, and FSK waveforms, this provides the possibility of transmitting synchronization signals and measurement signals for communication scenarios where OFDM waveforms are difficult to adopt, thereby offering a new feasible solution for downlink synchronization and RRM measurement. If the receiver of the first signal is a low-power device or a terminal device including a WUR, then downlink synchronization and RRM measurement can be achieved while maintaining favorable characteristics of low complexity and low power consumption. If the receiver of the first signal is a terminal device operating in the millimeter-wave band, the first signal has advantages such as simple generation, easy implementation, and power saving. Combined with the high reliability and narrow beam characteristics of millimeter-wave transmission, the first signal can satisfy the requirements of downlink synchronization and RRM measurement in the millimeter-wave band.

### BRIEF DESCRIPTION OF THE DRAWINGS

To provide a clear explanation of the technical solutions in the embodiments of the present application, the accompanying drawings required for describing the embodiments are briefly introduced below. Apparently, the accompanying drawings in the following description are merely some embodiments of the present application. For those of ordinary skill in the art, other drawings can be derived from these drawings without creative effort.
FIG. 1 is a schematic diagram of a wireless communication system provided by an exemplary embodiment of the present application;
FIG. 2 is a schematic diagram of a communication system provided by an exemplary embodiment of the present application;
FIG. 3 is a schematic diagram of radio frequency power harvesting provided by an exemplary embodiment of the present application;
FIG. 4 is a schematic diagram of a backscatter communication process provided by an exemplary embodiment of the present application;
FIG. 5 is a schematic diagram of resistive load modulation provided by an exemplary embodiment of the present application;
FIG. 6 is a schematic diagram of a receiver provided by an exemplary embodiment of the present application;
FIG. 7 is a schematic diagram of a coding mode provided by an exemplary embodiment of the present application;
FIG. 8 is a schematic diagram of generating an m-sequence provided by an exemplary embodiment of the present application;
FIG. 9 is a schematic diagram of generating an m-sequence provided by an exemplary embodiment of the present application;
FIG. 10 is a schematic diagram of a signal transmission method provided by an exemplary embodiment of the present application;
FIG. 11 is a schematic diagram of a signal transmission method provided by an exemplary embodiment of the present application;
FIG. 12 is a schematic diagram of a signal transmission method provided by an exemplary embodiment of the present application;
FIG. 13 is a schematic diagram of cyclic shift provided by an exemplary embodiment of the present application;
FIG. 14 is a schematic diagram of a signal transmission method provided by an exemplary embodiment of the present application;
FIG. 15 is a schematic diagram of time-domain resources occupied by different sequences provided by an exemplary embodiment of the present application;
FIG. 16 is a schematic diagram of time-domain resource mapping provided by an exemplary embodiment of the present application;
FIG. 17 is a schematic diagram of time-domain resource mapping provided by an exemplary embodiment of the present application;
FIG. 18 is a schematic diagram of a signal reception method provided by an exemplary embodiment of the present application;
FIG. 19 is a schematic diagram of a signal reception method provided by an exemplary embodiment of the present application;
FIG. 20 is a schematic diagram of a signal reception method provided by an exemplary embodiment of the present application;
FIG. 21 is a block schematic diagram of a signal transmission apparatus provided by an exemplary embodiment of the present application;
FIG. 22 is a block schematic diagram of a signal transmission apparatus provided by an exemplary embodiment of the present application;
FIG. 23 is a block schematic diagram of a communication device provided by an exemplary embodiment of the present application;
FIG. 24 is a block schematic diagram of a communication device provided by an exemplary embodiment of the present application.

### DETAILED DESCRIPTION

To make the objectives, technical solutions, and advantages of the present application clearer, the embodiments of the present application will be described in detail below with reference to the accompanying drawings. Exemplary embodiments will be described in detail herein, with examples thereof illustrated in the accompanying drawings. When the following description refers to the accompanying drawings, the same numerals in different drawings represent the same or similar elements unless otherwise indicated. The implementations described in the following exemplary embodiments do not represent all implementations consistent with the present application. Rather, they are merely examples of apparatuses and methods consistent with some aspects of the present application as detailed in the appended claims.

The terms used in the present application are for the purpose of describing particular embodiments only and are not intended to limit the present application. The singular forms "a/an," "said," and "the" used in the present application and the appended claims are also intended to include the plural forms, unless the context clearly indicates otherwise. It should also be understood that the term "and/or" as used herein refers to and includes any and all possible combinations of one or more of the associated listed items.

It should be understood that although terms such as "first," "second," "third," may be used in the present application to describe various information, such information should not be limited by these terms. These terms are only used to distinguish the same type of information from one another. For example, without departing from the scope of the present application, first information may also be referred to as second information, and similarly, second information may also be referred to as first information. Depending on the context, the word "if" as used herein can be interpreted as "when" or "upon" or "in response to determining."

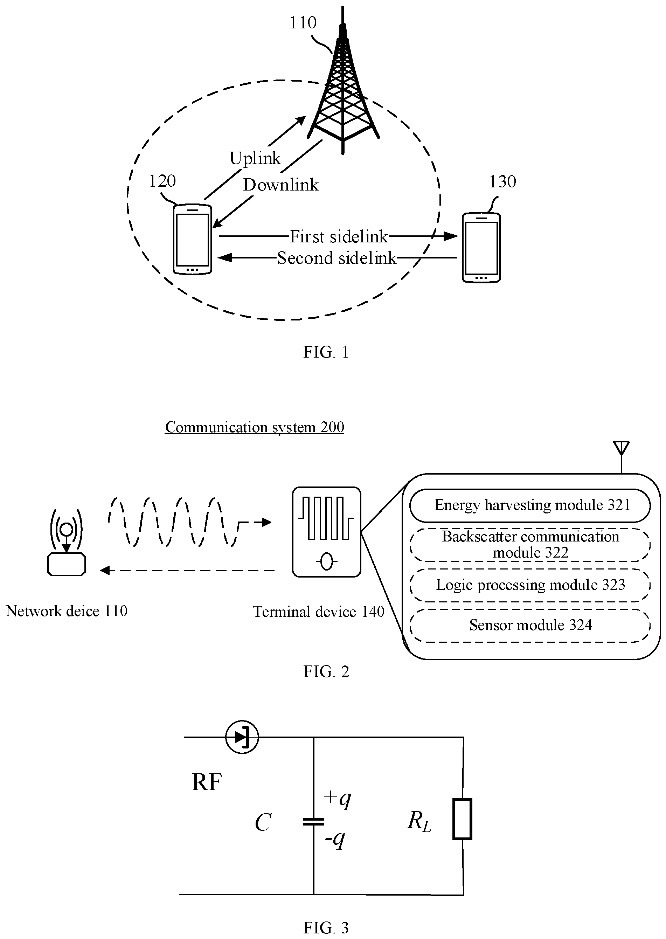

FIG. 1 shows a schematic diagram of a wireless communication system provided by an exemplary embodiment of the present application. The wireless communication system includes a network device 110 and a terminal device 120, and/or a terminal device 120 and a terminal device 130, which is not limited in the present application.

The network device 110 in the present application provides a wireless communication function, and the network device 110 includes but is not limited to: an evolved node B (eNB), a radio network controller (RNC), a node b (NB), a base station controller (BSC), a base transceiver station (BTS), a home base station (e.g., a home evolved node B or home node B, HNB), a baseband unit (BBU), an access point (AP) in a wireless fidelity (Wi-Fi) system, a wireless relay node, a wireless backhaul node, a transmission Point (TP), or a transmission and reception Point (TRP). It may also be a next generation node B (gNB) or a TRP (or TP) in a 5th generation (5G) mobile communication system, or may be one or a group (including multiple antenna panels) of antenna panels of a base station in a 5G system, or may be a network node constituting a gNB or a transmission point, such as a BBU or a distributed unit (DU), or may be a base station in a beyond fifth generation (B5G) or 6th generation (6G) mobile communication system, or may be a core network (CN), a fronthaul, a backhaul, a radio access network (RAN), a network slice, etc., or may be a reader/writer in a radio frequency identification (RFID) system.

In the present application, the terminal device 120 and/or terminal device 130 may also be referred to as user equipment (UE), an access terminal, a subscriber unit, a subscriber station,, a mobile station, a mobile platform, a remote station, a remote terminal, a mobile device, a user terminal, a terminal, a wireless communication device, a user agent, or a user apparatus. The terminal includes, but is not limited to: handheld devices, wearable devices, in-vehicle devices, and Internet of Things devices, such as: electronic tags, controllers, mobile phones, tablet computers, e-book readers, laptop computers, desktop computers, televisions, game consoles, mobile internet devices (MIDs), augmented reality (AR) terminals, virtual reality (VR) terminals, and mixed reality (MR) terminals, wearable devices, handsets, wireless terminals in industrial control, wireless terminals in self-driving, wireless terminals in remote medical, wireless terminals in smart grid, wireless terminals in transportation safety, wireless terminals in smart city, wireless terminals in smart home, wireless terminals in remote medical surgery, cellular phones, cordless phones, session initiation protocol (SIP) phones, wireless local loop (WLL) stations, personal digital assistants (PDAs), set top boxes (STBs), customer premise equipment (CPE).

In some embodiments, the network device 110 and the terminal device 120 communicate with each other through a certain air interface technology, such as the Uu interface.

In some embodiments, there are two communication scenarios between the network device 110 and the terminal device 120: an uplink communication scenario and a downlink communication scenario. The uplink communication refers to transmitting signals to the network device 110, and the downlink communication refers to transmitting signals to the terminal device 120.

In some embodiments, the terminal device 120 and the terminal device 130 communicate with each other through a certain direct communication interface, such as the PC5 interface.

In some embodiments, there are two communication scenarios between the terminal device 120 and the terminal device 130: a first sidelink communication scenario and a second sidelink communication scenario. The first sidelink communication refers to transmitting signals to the terminal device 130, and second sidelink communication refers to transmitting signals to the terminal device 120.

In some embodiments, both the terminal device 120 and the terminal device 130 are within network coverage and located in the same cell, or both the terminal device 120 and the terminal device 130 are within network coverage but located in different cells, or the terminal device 120 is within network coverage while the terminal device 130 is out of network coverage.

The technical solutions provided in the embodiments of the present application can be applied to various communication systems, such as: a global system for mobile communication (GSM) system, a code division multiple access (CDMA) system, a wideband code division multiple access (WCDMA) system, a general packet radio service (GPRS) system, a long term evolution (LTE) system, an LTE frequency division duplex (FDD) system, an LTE time division duplex (TDD) system, an advanced long term evolution (LTE-A) system, a universal mobile telecommunication system (UMTS), a worldwide interoperability for microwave access (WiMAX) communication system, a 5G mobile communication system, a new radio (NR) system, an evolution system of the NR system, an LTE-based access to unlicensed spectrum (LTE-U) system, an NR-based access to unlicensed spectrum (NR-U) system, a terrestrial network (TN) system, a non-terrestrial network (NTN) system, a wireless local area network (WLAN), wireless fidelity (Wi-Fi), a cellular Internet of Things system, a cellular passive Internet of Things system, an ambient power enabled Internet of Things (Ambient IoT/A-IoT) system, or a zero-power Internet of Things system. They can also be applied to subsequent evolution systems of the 5G NR system, as well as to B5G, 6G, and subsequent evolution systems. In some embodiments of the present application, "NR" may also be referred to as a 5G NR system or a 5G system. The 5G mobile communication system may include Non-Standalone (NSA) and/or Standalone (SA) deployment.

The technical solutions provided in the embodiments of the present application can also be applied to machine type communication (MTC), long term evolution-machine (LTE-M), device to device (D2D) networks, machine to machine (M2M) networks, Internet of things (IoT) networks, or other networks. The IoT network may include, for example, the Internet of vehicles. The communication methods in the Internet of vehicles system are collectively referred to as vehicle to X (V2X), where X can represent anything. For example, V2X can include: vehicle to vehicle (V2V) communication, vehicle to infrastructure (V2I) communication, vehicle to pedestrian (V2P) communication, or vehicle to network (V2N) communication, etc.

The wireless communication system provided in this embodiment can be applied to at least one of the following communication scenarios: an uplink communication scenario, a downlink communication scenario, or a sidelink communication scenario.

### Low-power devices:

In some embodiments, the terminal device shown in FIG. 1 may also be implemented as a low-power device.

A low-power device may also be referred to as at least one of the following: an ultra-low-power device, a zero-power device, a passive IoT device, or an ambient power enabled Internet of things (Ambient IoT/A-IoT) device.

Communication technologies implemented through low-power devices may also be referred to as at least one of the following: zero-power communication technology, ultra-low-power communication technology, low-power communication technology, ambient IoT/A-IoT technology, passive IoT technology, or zero-power IoT technology.

A low-power device can harvest energy from the environment (e.g., radio frequency energy, solar energy, light energy, thermal energy, mechanical energy, kinetic energy) to obtain energy for communication. Generally, based on the energy source and usage, low-power devices can be categorized into the following three types:
1. Passive devices: passive devices do not require a built-in battery. When a passive device approaches a network device (such as a reader in an RFID system), the passive device is located within the near-field range formed by the radiation from the network device's antenna. Consequently, the passive device's antenna generates an induced current through electromagnetic induction, which drives the low-power chip circuit of the passive device, thereby implementing operations such as demodulating a forward link signal, and modulating a backward link signal. For the backscatter link, the passive device can use backscattering or an extremely low-power active transmission method for signal transmission. The passive device does not require a built-in battery to drive either a forward link or a backward link, therefore, it can be considered as a zero-power device.
   In addition to not requiring a battery, the radio frequency circuit and baseband circuit of the passive device are very simple, for example, not requiring components such as an LNA, a power amplifier (PA), a crystal oscillator, or an analog-to-digital converter (ADC). This gives passive devices numerous advantages, including small size, light weight, very low cost, and long lifespan.
   Passive devices can also support other energy harvesting methods to harvest energy from the ambient energy (e.g., solar energy, light energy, thermal energy, kinetic energy, mechanical energy), thereby obtaining the energy for driving circuits and implementing communication.
2. Semi-passive devices: semi-passive devices do not have a conventional battery installed. They can use an radio frequency power harvesting module to harvest radio wave energy, or use an energy harvesting module to harvest energy from the environment energy (e.g., solar energy, light energy, thermal energy, kinetic energy, mechanical energy), and store the harvested energy in an energy storage unit (such as a capacitor). Once the energy storage unit obtains energy, it can drive the low-power chip circuits of the semi-passive device. This enables demodulation of forward link signals and modulation of backward link signals. For the backscatter link, the semi-passive device can use backscattering for signal transmission. The semi-passive device may also have active transmission capability, meaning the backward link can communicate not only through backscattering but also through active transmission.
   The semi-passive device does not require a built-in battery to drive either a forward link or a backward link. Although it uses energy stored in a capacitor during operation, this energy originates from radio wave energy or ambient energy harvested by the energy harvesting module. Therefore, a semi-passive device can also be considered a zero-power device.
   Semi-passive devices inherit many of the advantages of passive devices, such as small size, light weight, very low cost, and long lifespan.
3. Active devices: active devices may have a built-in battery. The battery is used to drive the low-power chip circuit of the active device, thereby implementing operations such as demodulating a forward link signal and modulating a backward link signal. . For signal transmission on the backscatter link, the active device may not need to consume its own power, as the backscatter link transmission can be implemented through backscattering, thus achieving a zero-power effect. The active device may also have active transmission capability, meaning that the backward link may communicate by means of active transmission in addition to backscattering.

Although active devices have a built-in battery, this type of active devices have extremely low power consumption and complexity, allowing the battery capacity to be set within a small range, thereby achieving low cost and small size. The built-in battery of an active device can also serve as an energy storage unit for storing ambient energy harvested by an energy harvesting module, allowing the active device to have a long maintenance cycle or even be maintenance-free.

In an active device, the use of a built-in battery for power supply increases the communication distance of the active device, for example, extending the read/write range of an electronic tag to improve communication reliability. Therefore, active devices are used in scenarios with relatively high requirements for communication distance, read latency, and other aspects.

In terms of communication methods, low-power devices can support a backscattering mode and/or an active transmission communication mode. Generally, based on the transmitter type, low-power devices can be categorized into the following three types.
(1) Backscatter-based low-power device: This type of device use the backscattering method described above for uplink data transmission. Such a device does not have an active transmitter with active transmission capability, but only has a backscatter transmitter. Therefore, when such a device performs uplink data transmission, the device requires a carrier wave provided by a network device, upon which the device performs backscattering to achieve uplink data transmission.
(2) Active transmitter-based low-power device: this type of device uses an active transmitter with active transmission capability for uplink data transmission. Therefore, when such a device sends uplink data, it can use its own active transmitter to send the data without requiring the network device to provide a carrier wave. Active transmitters applicable to this type of device may include, for example, ultra-low-power ASK transmitters or ultra-low-power FSK transmitters. Based on current implementations, such transmitters can achieve overall power consumption as low as 400 to 600 microwatts when transmitting a 100-microwatt signal.
(3) Low-power device equipped with both backscattering and active transmitters: this type of device can support both backscattering and active transmitters. Such a device can determine whether to use the backscattering mode or the active transmitter for active transmission based on different conditions (such as varying power levels or available ambient energy sources), or based on scheduling from a network device.

FIG. 2 shows a communication system 200 provided by an exemplary embodiment of the present application. The communication system 200 includes a network device 110 and a terminal device 140, which is a low-power device.

The terminal device 140, which is a low-power device, includes an energy harvesting module 321. Optionally, in addition to the energy harvesting module 321, the terminal device 140 also includes a backscatter communication module 322. Optionally, in addition to the energy harvesting module 321, the terminal device 140 also includes a logic processing module 323, illustratively, the logic processing module 323 includes a low-power computing module. Optionally, in addition to the energy harvesting module 321, the terminal device 140 also includes a sensor module 324. Optionally, in addition to the energy harvesting module 321, the terminal device 140 also includes a memory (not shown in the figure). Optionally, in addition to the energy harvesting module 321, the terminal device 140 also includes one or more of the following: a backscatter communication module 322, a logic processing module 323, a sensor module 324, and a memory.

For example, the energy harvesting module 321 can harvest energy carried by radio waves in space, or light energy, kinetic energy, mechanical energy, solar energy, etc., to power the various modules of the terminal device 140. After obtaining energy, the terminal device 140 can receive signals from the network device 110 via a receiver, reflect signals to the network device 110 via the backscatter communication module 322, or transmit signals to the network device 110 via a transmitter (not shown in the figure). The data reflected or transmitted by the terminal device 140 may be data stored by itself (such as an identity identifier or pre-written information, like a product's production date, brand, and manufacturer). The sensor module 324 may include various types of sensors, and the terminal device 140 can report the data collected by these various types of sensors based on a low-power mechanism. The memory is used to store basic information (such as item identifiers) or obtained sensor data like ambient temperature and humidity.

The terminal device 140 may use the logic processing module 323 to perform simple computational tasks such as signal demodulation, decoding or encoding, and modulation. The hardware design may be very simple, making the terminal device 140 very low-cost and small in size.

It should be understood that the modules included in the terminal device 140 shown in FIG. 2 are merely an example and not a limitation.

FIG. 3 illustrates a schematic diagram of the energy harvesting module 321 for radio frequency power harvesting. Based on the principle of electromagnetic induction, radio frequency power harvesting utilizes an radio frequency module RF, connected via electromagnetic induction to parallel connected capacitor C and load resistor RL, to capture energy from ambient electromagnetic waves, thereby obtaining energy required to drive low-power devices, such as low-power demodulation modules, modulation modules, sensors, and memory read circuits. Based on this, a low-power device can operate without the need for a conventional battery.

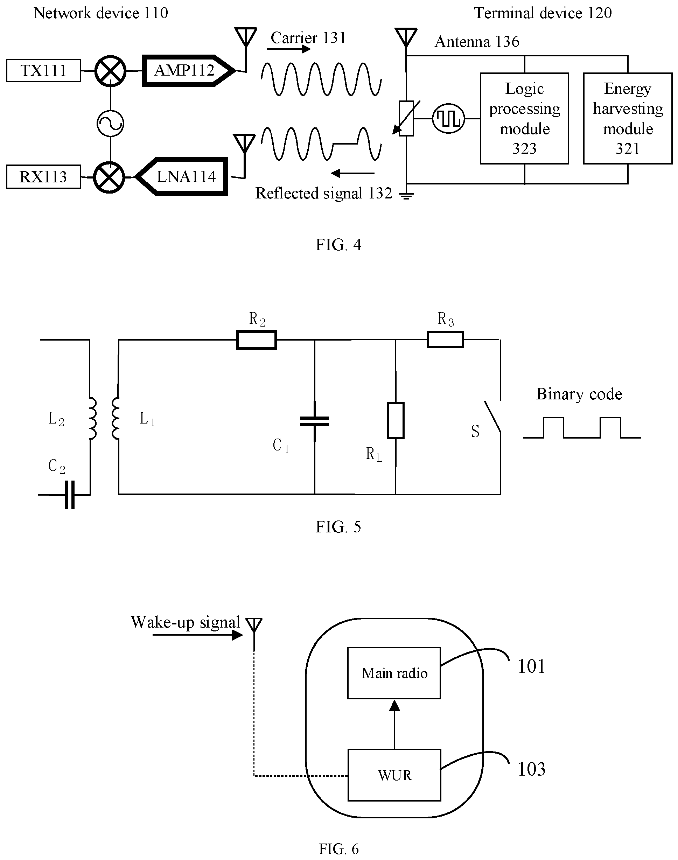

FIG. 4 illustrates a schematic diagram of backscatter (Back Scattering) communication by the backscatter communication module 322. The terminal device 140 receives a wireless signal carrier 131 transmitted by the transmit (TX) module 111 of the network device 110 via an amplifier (AMP) 112. The terminal device 140 modulates the wireless signal carrier 113, loads information to be transmitted using the logic processing module 323, and harvests radio frequency energy using the energy harvesting module 321. The terminal device 140 radiates the modulated reflected signal 132 using an antenna 316. This information transmission process is known as backscatter communication. The receive (RX) module 113 of the network device 110 receives the modulated reflected signal 132 using a low-noise amplifier (LNA) 114. The backscattering is inextricably linked with the functions of load modulation. Load modulation completes the modulation process by adjusting and controlling circuit parameters of an oscillation circuit of the terminal device 140 according to the pace of data streams, so that parameters such as an impedance of the terminal device 140 change accordingly.

Load modulation techniques primarily include resistive load modulation and capacitive load modulation. FIG. 5 illustrates a schematic diagram of resistive load modulation. In resistive load modulation, a load resistor RL is connected in parallel with a third resistor R3, and the third resistor R3 is turned on or off by a switch S controlled based on a binary code. The on/off of the third resistor R3 causes a voltage change in the circuit. The load resistor RL remains connected in parallel with a first capacitor C1, the load resistor RL remains connected in series with a second resistor R2, and the second resistor R2 remains connected in series with a first inductor L1. The first inductor L1 is coupled with a second inductor L2, and the second inductor L2 is connected in series with a second capacitor C2. As an example, amplitude shift keying (ASK) can be implemented, that is, signal modulation and transmission are achieved by adjusting the amplitude of the backscattered signal of the terminal device. Similarly, in capacitive load modulation, the on/off of a capacitor changes the circuit's resonant frequency, thereby implementing frequency shift keying (FSK), that is, signal modulation and transmission are achieved by adjusting the operating frequency of the backscattered signal of the terminal device.

The terminal device 140 can utilize load modulation to perform information modulation on an incoming signal, thereby realizing the process of backscatter communication.

Therefore, low-power devices offer the following significant advantages: (1) they do not need to actively transmit signals, thus eliminating the need for complex radio frequency links, such as PAs and radio frequency filters; (2) they do not need to actively generate high-frequency signals, thus eliminating the need for high-frequency crystal oscillators; (3) by leveraging backscatter communication, signal transmission does not consume the device's own energy.

Owing to significant advantages, including extremely low cost, extremely low power consumption, and small size, the communication system shown in FIG. 2 can be widely used in various industries, for example, in vertical industries such as logistics, smart warehousing, smart agriculture, energy and power, and industrial Internet, as well as personal applications like smart wearables and smart homes.

For instance, its applications include at least the following four types of scenarios: (1) object identification, such as in logistics, product management in production-line, and supply chain management; (2) environmental monitoring, such as tracking temperature, humidity, and hazardous gases in work environments and natural environments; (3) positioning, such as indoor positioning, smart object finding, and item tracking in production line; and (4) smart control, such as the intelligent control of various appliances in smart homes (e.g., turning air conditioners on/off, adjusting temperature), and smart control of various facilities in agricultural greenhouses (automatic irrigation and fertilization).

### Wake-up receiver (WUR):

In another scenario, to further conserve power for user equipment (UE), a mechanism is introduced where a WUR receives a power-saving signal. The WUR is characterized by extremely low cost, extremely low complexity, and ultra-low power consumption. The WUR primarily receives the power-saving signal using an envelope detection-based method. Therefore, the power-saving signal received by the WUR differs from conventional signals carried on the PDCCH in aspects such as modulation scheme and waveform. The power-saving signal is essentially an envelope signal generated by applying ASK modulation to a carrier signal. The demodulation of the envelope signal can also be accomplished by driving low-power circuits based on energy provided by the radio frequency signal, allowing it to be a passive component. Alternatively, the WUR can be powered by the UE. Regardless of the power supply method, the WUR significantly reduces power consumption compared to the conventional receiver of the UE. For example, the WUR can achieve a power consumption of less than 1 milliwatt (mW), which is substantially lower than the tens to hundreds of milliwatts consumed by the conventional receiver. The WUR can be integrated with the UE as an add-on module to the conventional receiver of the UE, or it can be a separate module of the UE, such as a wake-up function module.

A system block diagram of a receiver including a WUR is shown in FIG. 6. The WUR receives a power-saving signal. If the UE is required to activate its main radio 101, the network device can transmit a wake-up signal (WUS) to turn on the main radio 101 of the UE. Otherwise, the main radio 101 of the UE can remain in a deactivated state. Therefore, the UE can use the WUR 103 to detect a WUS. When there is no traffic or no paging message, the UE can keep using the WUR 103. Only when there is service, the UE will receive a WUS and wake up the main radio 101 to perform data transmission and reception. Thus, compared to the conventional mode where the UE always uses the main radio, the WUR 103 can significantly reduce the overall power consumption of the UE, achieving power savings on the UE side.

On one hand, a WUR can serve as an auxiliary receiver for a conventional UE to achieve power savings for the main radio. For instance, the terminal device 120 shown in FIG. 1 includes a main radio and a WUR, enabling power savings for the terminal device 120. On the other hand, a low-power receiver similar to a WUR can also serve as the receiver for a low-power device, and is used to receive downlink signals (e.g., control signaling and downlink data transmitted by a network device). For example, the terminal device 140 shown in FIG. 2 receives downlink signals via a low-power receiver (similar to a WUR), enabling power savings for the terminal device 140.

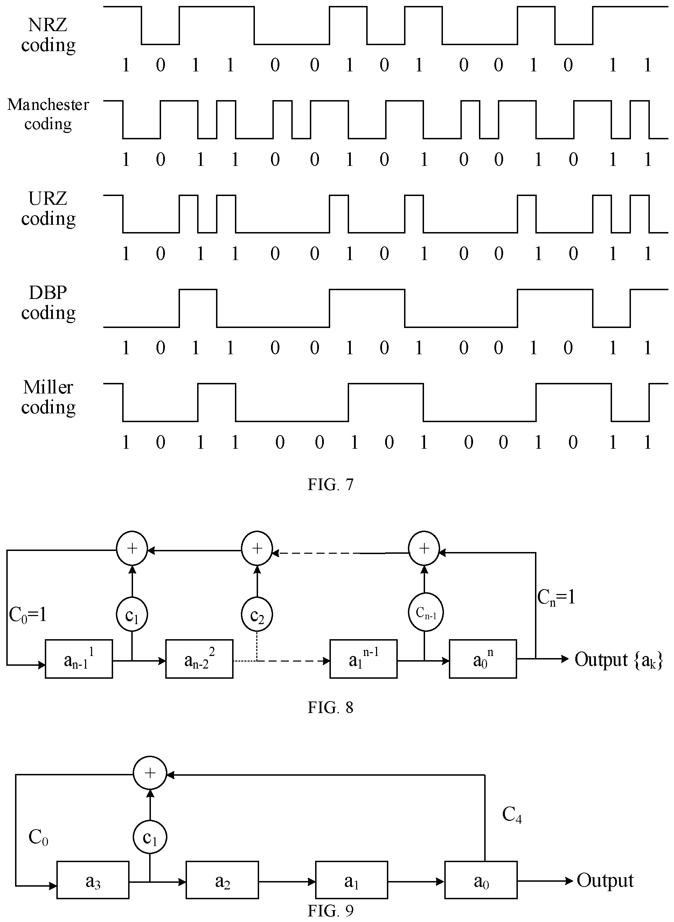

FIG. 7 illustrates a schematic diagram of the coding schemes adopted by the communication devices shown in FIGS. 1, 2, and 6. The signals transmitted by the communication devices shown in FIGS. 1, 2, and 6 can use different forms of codes to represent binary '1' and '0', that is, using different pulse signals to represent '0' and '1'. Several coding schemes are introduced as follows:
· Non-Return-to-Zero (NRZ) coding: not return to zero coding uses a high level to represent a binary '1', and a low level to represent a binary '0'. FIG. 6 shows a level diagram of the binary data 101100101001011 encoded using the NRZ scheme.
· Manchester coding: Manchester coding is also known as split-phase coding. In Manchester coding, a binary value is represented by a level transition (rising or falling) occurring at the midpoint of a bit period within the bit duration. A negative transition at the midpoint of a bit period represents a binary '1', while a positive transition at the midpoint of a bit period represents a binary '0'. When applied to carrier-based load modulation or backscatter modulation, Manchester coding is typically employed for data transmission from low-power devices to network devices, as it facilitates the detection of data transmission errors. This is because in Manchester coding, a state of 'no transition' within a bit period is not allowed. When multiple low-power devices simultaneously transmit data bits with different values, the received rising and falling edges can cancel each other out, resulting in an uninterrupted carrier signal throughout the entire bit duration. Since this state is not allowed, the network device can use this error to determine the specific location of a collision. FIG. 6 shows a level diagram of the binary data 101100101001011 encoded using the Manchester scheme.
· Unipolar Return-to-Zero (URZ) coding: In unipolar return-to-zero coding, a high level during the first half of a bit period represents a binary '1', while a low level throughout the entire bit period represents a binary '0'. FIG. 6 shows a level diagram of the binary data 101100101001011 encoded using the URZ scheme.
· Differential Biphase (DBP) coding: In differential biphase (DBP) coding, a transition at the midpoint of a bit period represents a binary '0', while the absence of a transition represents a binary '1'. Additionally, the level is inverted at the beginning of each bit period. Therefore, the bit timing is relatively easy for the receiver to reconstruct. FIG. 6 shows a level diagram of the binary data 101100101001011 encoded using the DBP scheme.
· Miller coding: In Miller coding, a transition at the midpoint of a bit period represents a binary '1', while a level that remains unchanged throughout the next bit period represents a binary '0'. A level transition occurs at the beginning of the bit period, making the bit timing relatively easy for the receiver to reconstruct. FIG. 6 shows a level diagram of the binary data 101100101001011 encoded using the Miller scheme.
· Differential coding: In differential coding, each binary '1' to be transmitted causes a change in the signal level, whereas for a binary '0', the signal level remains unchanged.

It should be noted that the coding schemes described above are examples of coding schemes that can be adopted by the communication devices shown in FIGS. 1, 2, and 6, rather than as limitations.

### Downlink synchronization:

In order to establish a connection with a network device, the terminal device needs to achieve time and/or frequency synchronization with the network device. The process by which a terminal device maintains time-domain synchronization and/or frequency-domain synchronization with a network device based on downlink signals transmitted by the network device is called downlink synchronization. The downlink signal used to achieve downlink synchronization may be referred to as a synchronization signal.

### Radio resource management (RRM) measurement:

RRM involves the management of channel interference, radio resources, and other aspects in a wireless communication system, and its objective is to guarantee a high quality of service for terminal devices under limited bandwidth conditions. RRM is implemented based on RRM measurement and reporting by terminal devices. The terminal device measures downlink signals transmitted by the network device and reports the measurement results. This allows the network device to promptly adjust one or more parameters, such as channel, power, bandwidth, and beam, enabling the wireless network to rapidly adapt to environmental changes, thereby maintaining a high quality of service within the communication system. The downlink signal used for RRM measurement may be referred to as a measurement signal, a reference signal, etc.

Low-power devices and terminal devices equipped with a WUR, as terminal devices with low-power characteristics, naturally also have requirements for downlink synchronization and RRM measurement.

Specifically, when a low-power device performs downlink synchronization and RRM measurement, the power consumption required for the low-power receiver to receive a synchronization signal for downlink synchronization is significantly less than that required for a conventional receiver to perform downlink synchronization, and the power consumption required for the low-power receiver to receive a measurement signal for RRM measurement is significantly less than that required for a conventional receiver to perform RRM measurement.

When a terminal device equipped with a WUR performs downlink synchronization and RRM measurement, the WUR can undertake the RRM measurement tasks of the main radio. This reduces or eliminates the need to wake up the main radio to perform RRM measurement, thereby achieving power savings for the main radio.

For example, if the WUR replaces the main radio for RRM measurement, power consumption of the main radio can be saved as the main radio is no longer needed for RRM measurement. Since the power consumption of the WUR is lower than that of the main radio, performing RRM measurement through the WUR can significantly reduce the overall power consumption of the UE. Illustratively, the WUR can take over a portion of the RRM measurement tasks, while the main radio handles the remaining portion. This reduces the duration and frequency of RRM measurement performed by the main radio, thus saving power consumption of the main radio.

Illustratively, the WUR receives the synchronization signal and performs downlink synchronization. Since the main radio is not required to perform downlink synchronization, power consumption of the main radio can be saved. After the main radio is awakened, it can directly use the downlink synchronization results from the WUR to transmit and receive data, thereby reducing service latency. Illustratively, the WUR receives the synchronization signal to perform coarse synchronization. The main radio is then awakened to perform fine synchronization. This reduces the duration and number of steps for downlink synchronization performed by the main radio, thereby saving power consumption of the main radio and reducing service latency.

However, the low-complexity characteristics of low-power receivers and WURs make it difficult for them to support the reception of common orthogonal frequency-division multiplexing (OFDM) waveforms. Therefore, for low-power devices and terminal devices equipped with a WUR, it is also difficult to use OFDM-based signals if it is desired to use the low-power receiver or WUR to achieve downlink synchronization and RRM measurement.

Consequently, in scenarios where it is difficult to transmit OFDM signals, there is currently no feasible solution for achieving downlink synchronization and RRM measurement. However, the need for various types of terminal devices to receive signals for downlink synchronization and RRM measurement is very urgent.

To address this, the present application provides a signal transmission method, an apparatus, a device, and a medium, which supports a network device to transmit a first signal generated based on a binary sequence to implement one or more of downlink synchronization and RRM measurement.

The binary sequence involved in the present application refers to a sequence that only includes sequence elements taking one of two values. In other words, each bit within the binary sequence has only two possible values. For example, any bit in a pseudo-noise (PN) sequence, an m-sequence, or a Gold sequence has a value of '1' or '0'. In another example, any element in a Walsh sequence has a value of '+1' or '-1'.

Three types of binary sequences are introduced here: m-sequences, Gold sequences, and Walsh sequences.

### M-sequence:

The m-sequence is the longest code sequence that can be generated by a multi-stage shift register or its delay elements through linear feedback. The m-sequence is also known as the longest linear feedback shift register sequence or the maximum-length sequence. The number of stages of a shift register can be understood as the number of shift registers. The sequence currently stored in a shift register is referred to as a state. After the shift register outputs one bit and the feedback function provides a new bit, the shift register transitions to the next state.

In a binary shift register, if r is the number of stages of the shift register, an r-stage shift register has a total of 2^{r} states. Excluding the all-zero state, there remain 2^{r} - 1 states. Therefore, the maximum-length code sequence it can generate has 2^{r} - 1 bits. In other words, the longest period of a sequence generated by an r-stage linear feedback shift register is equal to 2^{r} - 1.

First, the linear feedback shift register is introduced. FIG. 8 shows a general schematic diagram of a linear feedback shift register. Assuming that the initial state of the shift register is (a₀a₁ ... aᵣ₋₂aᵣ₋₁), after one linear feedback shift operation, the input to the first stage on the left end of the shift register is as shown in Equation (1) below. ${a}_{r} = {c}_{1} {a}_{r - 1} + {c}_{2} {a}_{r - 2} + ⋯ + {c}_{r - 1} {a}_{1} + {c}_{r} {a}_{0} = {\sum }_{i = 1}^{r} {c}_{i} {a}_{r - i}$ Equation (1)

After f shifts, the input to the first stage on the left end of the shift register is as shown in Equation (2) below. ${a}_{l} = {\sum }_{i = 1}^{r} {c}_{i} {a}_{e - i}$ Equation (2) where e = r + f - 1 ≥ r, f = 1,2,3, ···. It is evident that the input to the first stage of the shift register is influenced by the feedback logic and the initial state of the shift register. Equation (2) is called the recurrence relation of the r-stage linear feedback shift register.

Referring to the recurrence relation described by Equation (2), an r-stage shift register can generate 2^{r} - 1 non-all-zero sequences depending on the initial state. Therefore, the maximum-length code sequence that an r-stage linear feedback shift register can generate has 2^{r} - 1 bits, which means that the longest period of the sequence generated by an r-stage linear feedback shift register is equal to 2^{r} - 1.

The following Equation (3) is called the characteristic polynomial of the r-stage linear feedback shift register, which can be used to describe the feedback connection state of the r-stage linear feedback shift register. Here, the presence of xⁱ indicates that cᵢ = 1; otherwise, cᵢ = 0. The value of x itself has no practical significance. The value of cᵢ determines the feedback connections of the shift register. Since c₀ = Cᵣ = 1, f(x) is an r-degree polynomial with a constant term of 1. $f \left(x\right) = {c}_{0} + {c}_{1} x + ⋯ + {c}_{r} {x}^{r} = {\sum }_{i = 0}^{r} {c}_{i} {x}^{i}$ Equation (3)

The necessary and sufficient condition for an r-stage linear feedback shift register to generate an m-sequence is that f(x) is an r-degree primitive polynomial. If f(x) satisfies the following three conditions, it is considered an r-degree primitive polynomial: (1) f(x) is an irreducible polynomial, i.e., f(x) cannot be factored further; (2) f(x) divides (x^{p} + 1), where p = 2^{r} - 1; and (3) f(x) does not divide (x^{q} + 1), where q < p.

The generation of an m-sequence is illustrated using the example of r = 4. The longest period of a sequence generated by a 4-stage linear feedback shift register is 2^{r} - 1 = 15. When r = 4, the characteristic polynomial f(x) must be a primitive polynomial of degree 4 to generate an m-sequence. That is to say, it is required that f(x) cannot be factored further, and that f(x) divides (x¹⁵ + 1), and that f(x) does not divide (x^{q} + 1), where q < 15.

First, (x¹⁵ + 1) is factored as shown in Equation (4) below, such that each factor of (x¹⁵ + 1) is an irreducible polynomial, and then f(x) is sought. ${x}^{15} + 1 = \left(x+1\right) \left({x}^{2}+x+1\right) \left({x}^{4}+x+1\right) \left({x}^{4}+{x}^{3}+1\right) \left({x}^{4}+{x}^{3}+{x}^{2}+x+1\right)$ Equation (4)

There are three 4-degree factors of (x¹⁵ + 1). However, (x⁴ + x³ + x² + x + 1) divides (x⁵ + 1), so (x⁴ + x³ + x² + x + 1) is not a primitive polynomial. Therefore, two 4-degree primitive polynomials can be found, i.e., (x⁴ + x + 1) and (x⁴ + x³ + 1). An m-sequence can be generated from either of these polynomials.

As an example, taking f(x) = x⁴ + x + 1 as an example, the resulting m-sequence generator is shown in FIG. 9. The modulo-2 addition of a₀ and a₃ serves as the new most significant bit a₃ after the sequence is right-shifted, and the least significant bit a₀ is the output. Let the initial state of the 4-stage shift register be "1000", so c₄ = c₁ = c₀ = 1, c₃ = c₂ = 0. After a period of length 15, the least significant bit output at each shift constitutes an m-sequence. Thus, the m-sequence "100110101111000" is obtained.

An m-sequence exhibits the balance property. Within one period of an m-sequence, the number of bit '1' is approximately equal to that of bit '0'. To be precise, the number of '1's is one greater than the number of '0's.

The run distribution of an m-sequence also has specific properties. A subsequence of consecutive identical elements in a sequence is referred to as a run. The number of elements in a run is referred to as the run length. The number of runs of length h accounts for 2^{-h} of the total number of runs in an m-sequence. Furthermore, among the runs of length h, half are runs of consecutive '1's and half are runs of consecutive '0's. For example, in the m-sequence "100110101111000", there are a total of 8 runs, which include one run of length 4, i.e., 1111, one run of length 3, i.e., 000, two runs of length 2, i.e., 11 and 00, and four runs of length 1, i.e., two '1's and two '0's.

The sequence obtained by modulo-2 addition of an m-sequence and its shifted sequence is still a shifted sequence of the same m-sequence. This property is known as the shift-and-add property of the m-sequence, also known as linear superposition property. A shifted sequence is defined relative to a basic m-sequence, and a sequence obtained by cyclically shifting the basic m-sequence can be called a shifted sequence. For details, please refer to the "Cyclic shift" section below..

The m-sequence has excellent autocorrelation properties. Assume the autocorrelation function of an m-sequence is defined as Equation (5). Here, A is the number of elements that are the same in corresponding positions over one period between the m-sequence and its j-th shifted sequence, D is the number of elements that are different in corresponding positions over one period between the m-sequence and its j-th shifted sequence, and L is the period of the m-sequence. $R \left(j\right) = \frac{A - D}{A + D} = \frac{A - D}{L}$ (5)

Equation (5) can also be rewritten as Equation (6). $R \left(j\right) = \frac{Number of \left[{a}_{i}⊕{a}_{j + i}=0\right] - Number of \left[{a}_{i}⊕{a}_{j + i}=1\right]}{L}$ (6)

From the shift-and-add property of m-sequences, it is known that aᵢ⊕aⱼ₊ᵢ is still an element of the m-sequence. Therefore, the numerator of Equation (6) is equal to the difference between the number of '0's and the number of '1' s in one period of the m-sequence.

From the balance property of m-sequences, it is known that the number of '0's is one less than the number of '1's in one period, so the numerator is equal to -1.

Therefore, the autocorrelation function of an m-sequence can be obtained as shown in Equation (7). $R \left(j\right) = \left\{\begin{matrix}1 , j = 0 \\ - \frac{1}{L} , j = 1 , 2 , ⋯ , L - 1\end{matrix}\right.$ (7)

Since the balance property, run distribution, and autocorrelation property of m-sequences are very similar to the fundamental properties of random sequences, m-sequences are also referred to as pseudo-noise (PN) sequences or pseudo-random sequences.

### Gold sequence:

A Gold sequence is a code sequence derived from a preferred pair of m-sequences. First, the concept of a preferred pair of m-sequences is introduced. Two m-sequences are generated from two different primitive polynomials of the same degree r, respectively. The condition for these two m-sequences form a preferred pair is that their cross-correlation function satisfies Equation (8). $\left|{R}_{ab}\left(τ\right)\right| \leq \left\{\begin{matrix}{2}^{\left(r+1\right) / 2} + 1 , mod \left(r, 2\right) = 1 \\ {2}^{\left(r+2\right) / 2} + 1 , mod \left(r, 2\right) = 0\end{matrix}\right.$ (8)

Two m-sequences that satisfy Equation (8) can be referred to as a preferred pair of m-sequences. A Gold sequence is constructed by the modulo-2 addition of a preferred pair of m-sequences. Furthermore, each cyclic shift of one of the m-sequences can be used to generate a new Gold sequence. Therefore, a significant advantage of Gold sequences over m-sequences is the ability to generate a larger number of independent code sequences.

Gold sequences exhibit good cross-correlation properties and retain excellent properties similar to those of m-sequences, such as the excellent balance property, run distribution property, and autocorrelation property. Moreover, the maximum cross-correlation value between Gold sequences generated from a preferred pair of m-sequences does not exceed the maximum cross-correlation value of the preferred pair of m-sequences.

### Walsh sequence:

A Walsh sequence, also known as a Walsh code, is derived from a Hadamard matrix.

Assume a second-order Hadamard matrix is ${H}_{2} = \left[\begin{matrix}1 & 1 \\ 1 & - 1\end{matrix}\right]$, then second-order Walsh sequences (1,1) and (1,-1) can be obtained.

Assume a higher-order Hadamard matrix is ${H}_{2 n} = \left[\begin{matrix}{H}_{n} & {H}_{n} \\ {H}_{n} & - {H}_{n}\end{matrix}\right]$, Walsh sequences of length 2n can be obtained. As an example, fourth-order Walsh sequences (1,1,1,1), (1,-1,1,-1), (1,1,-1,-1), and (1,-1,-1,1) can be obtained.

Walsh sequences form a set of orthogonal sequences, which means that all elements in the Walsh sequences are mutually orthogonal, resulting in no interference between them. Each Walsh sequence is a binary sequence with a length that is a power of 2, such as a length of 2, 4, 8, or 16. Walsh sequences exhibit symmetry, meaning the positive and negative versions of a sequence are identical but in reverse order. Walsh sequences also have favorable cross-correlation properties.

In the present application, an "agreement" can be implemented by pre-storing corresponding codes, tables, or other means that can indicate relevant information in a communication device (e.g., a terminal device, or a network device). The present application does not limit the specific implementation method thereof. An agreement of a communication protocol can also be understood as being predefined by the communication protocol.

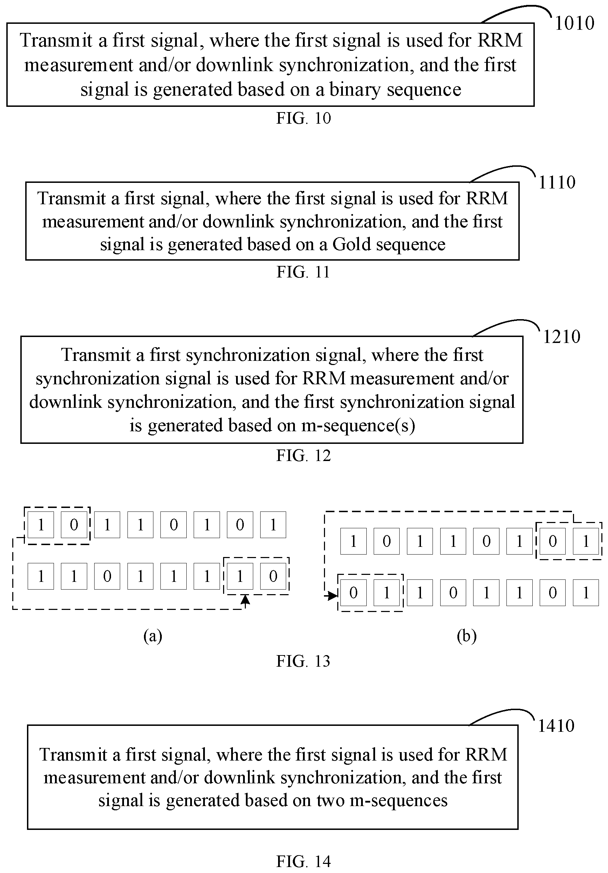

FIG. 10 shows a flowchart of a signal transmission method provided by an exemplary embodiment of the present application. The method is performed by a network device and includes the following step.

In **Step 1010**, transmit a first signal, which is used for RRM measurement and/or downlink synchronization. The first signal is generated based on a binary sequence.

The first signal involved in the present application can be used for both downlink synchronization and RRM measurement. Therefore, the first signal may also be referred to as at least one of the following: a first synchronization signal, a first measurement signal, a first reference signal, a low power synchronization signal (LP-SS), a low power reference signal (LP-RS), or a low-power measurement signal.

A binary sequence only contains sequence elements taking two possible values; therefore, a sequence of the first signal also only contains sequence elements taking two possible values. For example, the sequence of the first signal may consist only of '0's and '1's, or it may consist only of '+1's and '-1's.

In some embodiments, the first signal is generated based on at least one of the following: m-sequence(s), a Gold sequence, or a Walsh sequence.

In some embodiments, the modulation scheme for the first signal includes at least one of the following: on-off keying (OOK) modulation, phase shift keying (PSK) modulation, binary phase shift keying (BPSK) modulation, frequency shift keying (FSK) modulation.

It should be noted that the types of binary sequences provided in the present application are not limited to m-sequences, Gold sequences, or Walsh sequences. Other binary sequences or other sequences with properties similar to those of binary sequences are also applicable to the methods provided in the embodiments of the present application.

The network device executing Step 1010 may be the network device 110 shown in FIG. 1, the network device 110 shown in FIG. 2, or a network device operating in the millimeter wave (mmWave) band, etc.

In summary, in the method provided by the embodiments of the present application, because the first signal is generated based on a binary sequence, which has low complexity, is easy to generate and detect, and can be readily combined with non-OFDM waveforms such as OOK, PSK, and FSK waveforms, this provides the possibility of transmitting synchronization signals and measurement signals for communication scenarios where OFDM waveforms are difficult to adopt, thereby offering a new feasible solution for downlink synchronization and RRM measurement. If the receiver of the first signal is a low-power device or a terminal device including a WUR, then downlink synchronization and RRM measurement can be achieved while maintaining favorable characteristics of low complexity and low power consumption. If the receiver of the first signal is a terminal device operating in the millimeter-wave band, the first signal has advantages such as simple generation, easy implementation, and power saving. Combined with the high reliability and narrow beam characteristics of millimeter-wave transmission, the first signal can satisfy the requirements of downlink synchronization and RRM measurement in the millimeter-wave band.

**Next, using the generation of the first signal based on a Gold sequence as an example, the relevant content of generating the first signal based on a Gold sequence will be further described on the basis of Step 1010.**

FIG. 11 shows a flowchart of a signal transmission method provided by an exemplary embodiment of the present application. The method is performed by a network device and includes the following step.

In **Step 1110**, transmit a first signal, which is used for RRM measurement and/or downlink synchronization. The first signal is generated based on a Gold sequence.

As previously described, a Gold sequence is obtained by the modulo-2 addition of a preferred pair of m-sequences. In the embodiments of the present application, the two m-sequences included in a preferred pair are referred to as a first m-sequence and a second m-sequence. It is to be understood that in the present application, terms such as "first," "second," "third," "fourth," and "fifth" are used for descriptive distinction only and do not imply any limitation on the order, naming, etc., of the m-sequences. For example, the first m-sequence is either m-sequence in the preferred pair of m sequences, and the second m-sequence is the other m-sequence in the preferred pair of m sequences.

The present application provides three methods for generating a Gold sequence.

**Generation Method 1 for Gold sequence:** the first m-sequence remains unchanged, while the second m-sequence is cyclically shifted.

Assuming the number of stages of a shift register is r, if the first m-sequence remains unchanged and the second m-sequence undergoes cyclic shifts, at most 2^{r} - 1 Gold sequences can be obtained by modulo-2 addition of a fourth m-sequence and a cyclically shifted sequence of a fifth m-sequence. Counting the first and second m-sequences themselves, a maximum of 2^{r} - 1 + 2 = 2^{r} + 1 Gold sequences can be obtained through Method 1.

For ease of distinction, the multiple Gold sequences generated by Method 1 can be referred to as the first Gold sequence family, and the Gold sequences included in the first Gold sequence family are called first Gold sequences. The first Gold sequence family includes a maximum of 2^{r} + 1 first Gold sequences. For example, if r = 5, a maximum of 33 first Gold sequences can be obtained through Method 1.

It should be noted that 2^{r} + 1 represents the upper limit on the number of first Gold sequences that the first Gold sequence family can contain, but this does not imply that the first Gold sequence family must contain 2^{r} + 1 first Gold sequences.

Optionally, the number of first Gold sequences in the first Gold sequence family is determined according to at least one of the following: the number of stages r, the length L₀ of the first m-sequence, the length L₁ of the second m-sequence, the cyclic shift offset, or the cyclic shift step.

Optionally, the number of first Gold sequences in the first Gold sequence family is configured by a network device or specified by a communication protocol.

Assuming the number of preferred pairs of m-sequences is M, the upper limit on the number of Gold sequences that can be generated using Method 1 is M ∗ (2^{r} + 1). M is determined based on the number of stages r of the shift register and Equation (8) mentioned earlier, and M represents the number of preferred pairs of m-sequences that can be found for a given number of stages r.

**Generation Method 2 for Gold sequence:** the first m-sequence is cyclically shifted, and the second m-sequence is also cyclically shifted.

Assuming the number of stages of the shift register is r, if the first m-sequence remains unchanged and the second m-sequence is cyclically shifted, at most 2^{r} - 1 Gold sequences can be obtained by modulo-2 addition of a fourth m-sequence and a cyclically shifted sequence of a fifth m-sequence.

Assuming the number of stages of the shift register is r, if the second m-sequence remains unchanged and the first m-sequence is cyclically shifted, at most 2^{r} - 1 Gold sequences can be obtained by modulo-2 addition of a fifth m-sequence and a cyclically shifted sequence of a fourth m-sequence.

Therefore, with both the first m-sequence and the second m-sequence cyclically shifted, at most (2^{r} = 1) * (2^{r} - 1) Gold sequences can be obtained by modulo-2 addition of a cyclically shifted sequence of a fourth m-sequence and a cyclically shifted sequence of a fifth m-sequence.

For ease of distinction, the multiple Gold sequences generated by Method 2 can be referred to as the second Gold sequence family, and the Gold sequences included in the second Gold sequence family are called second Gold sequences. The second Gold sequence family includes a maximum of (2^{r} - 1) * (2^{r} - 1) second Gold sequences. For example, if r = 5, and both the first m-sequence and the second m-sequence are cyclically shifted, a maximum of 961 second Gold sequences can be obtained.

It should be noted that (2^{r} - 1) * (2^{r} - 1) represents the upper limit on the number of second Gold sequences that the second Gold sequence family can contain, but this does not imply that the second Gold sequence family must contain (2^{r} - 1) * (2^{r} - 1) second Gold sequences.

Optionally, the number of second Gold sequences in the second Gold sequence family is determined according to at least one of the following: the number of stages r, the length L₀ of the first m-sequence, the length L₁ of the second m-sequence, the cyclic shift offset, or the cyclic shift step.

Optionally, the number of second Gold sequences in the second Gold sequence family is configured by a network device or specified by a communication protocol.

Assuming the number of preferred pairs of m-sequences is M, the upper limit on the number of Gold sequences that can be generated using Method 2 is M * (2^{r} - 1) * (2^{r} - 1). M is determined based on the number of stages r of the shift register and Equation (8) mentioned earlier, and M represents the number of preferred pairs of m-sequences that can be found for a given number of stages r.

**Generation Method 3 for Gold sequence:** cyclically shifting the first Gold sequences.

As described in Method 1, when the number of stages of the shift register is r, the first Gold sequence family can include a maximum of 2^{r} + 1 first Gold sequences. Method 3 obtains more Gold sequences by further cyclically shifting the first Gold sequences from the first Gold sequence family.

After a single Gold sequence is cyclically shifted, a maximum of 2^{r} - 1 Gold sequences can be obtained. Therefore, after 2^{r} + 1 Gold sequences are cyclically shifted, a maximum of (2^{r} + 1) * (2^{r} - 1) Gold sequences can be obtained.

For ease of distinction, the multiple Gold sequences generated by Method 3 can be referred to as the third Gold sequence family, and the Gold sequences in the third Gold sequence family are called third Gold sequences. The third Gold sequence family can include a maximum of (2^{r} + 1) ∗ (2^{r} - 1) third Gold sequences. For example, if r = 5, a maximum of 33 first Gold sequences can be obtained through Method 1, and a maximum of 33*31=1023 third Gold sequences can be obtained through Method 3.

It should be noted that (2^{r} + 1) ∗ (2^{r} - 1) represents the upper limit on the number of third Gold sequences that the third Gold sequence family can contain, but this does not imply that the family must contain (2^{r} + 1) ∗ (2^{r} - 1) third Gold sequences.

Optionally, the number of third Gold sequences in the third Gold sequence family is determined by at least one of the following: the number of stages r, the length L₀ of the fourth m-sequence, the length L₁ of the fifth m-sequence, the cyclic shift offset, or the cyclic shift step..

Optionally, the number of third Gold sequences in the third Gold sequence family is configured by a network device or specified by a communication protocol.

Assuming the number of preferred pairs of m-sequences is M, the upper limit on the number of Gold sequences that can be generated using Method 3 is M ∗ (2^{r} + 1) ∗ (2^{r} - 1). M is determined based on the number of stages r of the shift register and Equation (8) mentioned earlier, and M represents the number of preferred pairs of m-sequences that can be found for a given number of stages r.

It should be noted that Method 1, Method 2, and Method 3 can be used individually or in combination. That is, the first Gold sequence family, the second Gold sequence family, and the third Gold sequence family are not mutually exclusive. Different types of Gold sequences may coexist in a communication system. For example, the first signal corresponding to cell A may be generated from the first Gold sequence, while the first signal corresponding to cell B may be generated from the second Gold sequence.

It can be observed that for the same number of stages, Method 2 and Method 3 can provide a larger number of sequences compared to Method 1. When it is desired to provide a unique first signal for a larger number of cells, Method 2 and Method 3 are more suitable. However, it is evident that Method 3 has higher complexity than Method 2, and Method 2 has higher complexity than Method 1. Consequently, if lower complexity in generating the first signal is desired, Method 1 is more applicable.

In the present application, a Gold sequence family may also be referred to as a Gold sequence group or a Gold sequence set. Each Gold sequence family corresponds to one preferred pair of m-sequences.

The first signal provided in the embodiments of the present application can be generated based on the first Gold sequence described above, or based on the second Gold sequence described above, or based on the third Gold sequence described above.

In some embodiments, the Gold sequence corresponding to the first signal is a Gold sequence from a Gold sequence set. The Gold sequence set is determined based on the number of stages r of the shift register and/or a preferred pair of m-sequences. Optionally, the Gold sequence set includes multiple Gold sequence families.

In some embodiments, the Gold sequence corresponding to the first signal is a Gold sequence from one of multiple Gold sequence families. The Gold sequence set is determined based on the number of stages r of the shift register and/or the preferred pair of m-sequences.

In some embodiments, the Gold sequence corresponding to the first signal is determined based on a cell identity. That is, the first signal corresponding to each cell is associated with its own cell identity. The cell identity ${N}_{ID}^{cell}$ is related to the total number S of cells in the communication system. For example, 0 ≤ ${N}_{ID}^{cell} \leq S - 1$.

In the embodiments of the present application, the Gold sequence used to generate the first signal is referred to as the target Gold sequence. The first signal is obtained by modulating the target Gold sequence.

The target Gold sequence is generated based on a first m-sequence and a second m-sequence, that is, the target Gold sequence is generated from a preferred pair of m-sequences. Therefore, **a problem to be solved is how to determine the target preferred pair of m-sequences for generating the target Gold sequence, that is, how to determine the target Gold sequence family to which the target Gold sequence belongs**. The Gold sequence family to which the target Gold sequence belongs is referred to as the target Gold sequence family. The preferred pair of m-sequences for generating the target Gold sequence family is referred to as the target preferred pair of m-sequences.

The target preferred pair of m-sequences is one of M preferred pairs of m-sequences. To determine the target preferred pair of m-sequences, it is first necessary to understand the generation of the M preferred pairs of m-sequences.

The M preferred pairs of m-sequences are determined based on the number of stages of the shift register. For example, when the number of stages of the shift register stage is r, a maximum of N first m-sequences can be generated. Based on Equation (8), M preferred pairs of m-sequences are derived from the N first m-sequences.

As previously discussed, M Gold sequence families can be generated from M preferred pairs of m-sequences. For details, refer to the aforementioned Generation Methods 1, 2, and 3 for Gold sequence. It is understood that for ease of distinction, these M Gold sequence families should have unique corresponding indices or numberings. The embodiments of the present application use indices as an example for explanation.

This section involves the indexing order of the M Gold sequence families, and this concept will be briefly introduced here.

In some embodiments, the indexing order of the M Gold sequence families is determined by a network device, specified by a communication protocol, or determined by a terminal device. Optionally, the indexing order of the M Gold sequence families is arranged based on at least one of the following: the index of the preferred pair of m-sequences, the number of stages r, the number of Gold sequences in a Gold sequence family, the length of Gold sequences in a Gold sequence family, the index of the Gold sequence family, the indices of Gold sequences in a Gold sequence family, the indices of the corresponding m-sequences, the indexing order of the corresponding m-sequences, the coefficients of the corresponding primitive polynomial, the binary numbers of the coefficients of the corresponding primitive polynomial, or the cyclic shift offset.

In some embodiments, the M Gold sequence families are indexed as 0,1,2 ··· , M - 1, or as 1,2 ··· , M, and so on. Other indexing schemes that can distinguish between the individual Gold sequences are also applicable to the embodiments of the present application.

In some embodiments, before assigning indices to the M Gold sequence families, the M Gold sequence families are first arranged according to a specific rule or in a random order. Then, unique indices are assigned to the M Gold sequence families sequentially according to the order of arrangement. For example, the M Gold sequence families with an indexing order of 0,1,2 ··· , M - 1 are formed.

In some embodiments, indices are first assigned to the M Gold sequence families, and then the families are arranged according to a specific rule, resulting in a shuffled indexing order for the M Gold sequence families. For example, the M Gold sequence families with an indexing order of 2,0, M - 1 ··· ,1 are formed.

Assume that when the number of stages of the shift register is r, there exist N m-sequences. The M preferred pairs of m-sequences are selected from these N m-sequences according to Equation (8). It is understood that the N m-sequences each have a unique sequence index, and there is an indexing order for these N m-sequences. Optionally, the indexing order of the N m-sequences may be a default order, a random order, an order arranged according to a specific rule, specified by a communication protocol, or indicated by a network device.

Then, the indices of all m-sequences included in the M preferred pairs of m-sequences may or may not be consistent or inconsistent with their original indices among the N m-sequences. For example, after selecting M preferred pairs of m-sequences from the N m-sequences, all m-sequences included in the M preferred pairs of m-sequences could retain their original indices from the N m-sequences. As another example, after selecting M preferred pairs of m-sequences from the N m-sequences, all m-sequences in the M preferred pairs of m-sequences are re-indexed starting from 0 or 1. Regardless of whether all m-sequences included in the M preferred pairs of m-sequences retain their indices from the N m-sequences, the embodiments of the present application support both scenarios, as long as each m-sequence has a unique index.

The indices of M preferred pair of m-sequences is related to the indices of the m-sequences they contain.

For example, the index of a preferred pair of m-sequences is the index of the first m-sequence in that preferred pair of m-sequences. Optionally, the first m-sequence is any m-sequence in the preferred pair of m-sequences, or the first m-sequence is the m-sequence with the smaller index value in the preferred pair of m-sequences, or the first m-sequence is the m-sequence with the larger index value in the preferred pair of m-sequences, and so on.

For example, the index of a preferred pair of m-sequences is the product of the indices of the two m-sequences included in the preferred pair of m-sequences. For example, if a preferred pair of m-sequences contains m-sequences with indices 2 and 4, then the index of the preferred pair of m-sequences is 8.

For example, the index of a preferred pair of m-sequences is the sum, difference, or modulo result of the indices of the two m-sequences included in the preferred pair of m-sequences.

In some embodiments, the index of each of M Gold sequence families is identical to the index of its corresponding preferred pair of m-sequences. For instance, if a preferred pair of m-sequences has an index of 3, the Gold sequence family generated from the preferred pair of m-sequences also has an index of 3.

In some embodiments, the M Gold sequence families are arranged in ascending order of the indices of the M preferred pairs of m-sequences, and then assigned indices from 0 to M - 1, or from 1 to M. For example, if M=5 and the indices of the M preferred pairs of m-sequences are 1, 3, 5, 7, and 9, the Gold sequence family generated from the preferred pair of m-sequences with index 1 is indexed by 1, and the Gold sequence family generated from the preferred pair of m-sequences with index 9 is indexed by 5.

In some embodiments, the M Gold sequence families are arranged in descending order of the indices of the M preferred pairs of m-sequences, and then assigned indices from 0 to M - 1, or from 1 to M. For example, if M=5 and the indices of the M preferred pairs of m-sequences are 9, 7, 5, 3, and 1, the Gold sequence family generated from the preferred pair of m-sequences with index 9 is indexed by 1, and the Gold sequence family generated from the preferred pair of m-sequences with index 1 is indexed by 5.

In some embodiments, the indexing order of the M Gold sequence families is arranged in ascending or descending order of index values of the Gold sequence families.

In some embodiments, the indexing order of the M Gold sequence families is arranged according to the indices and/or indexing order of the m-sequences from which the Gold sequence families are generated.

In some embodiments, the indexing order of the M Gold sequence families is identical to the indexing order of their corresponding preferred pairs of m-sequences. For example, if the indexing order of M preferred pairs of m-sequences is 2,0, M - 1 ··· ,1, then the indexing order of the M Gold sequence families is also 2,0, M - 1 ··· ,1.

In some embodiments, the indexing order of the M Gold sequence families is the ascending order of the indices of the M preferred pairs of m-sequences. For example, if M=5 and the indices of the M preferred pairs of m-sequences are 1, 3, 5, 7, and 9, then the Gold sequence family generated from the preferred pair of m-sequences with index 1 is arranged first in the order, and the Gold sequence family generated from the preferred pair of m-sequences with index 9 is arranged fifth in the order.

In some embodiments, the indexing order of the M Gold sequence families is the descending order of the indices of the M preferred pairs of m-sequences. For example, if M=5 and the indices of the M preferred pairs of m-sequences are 9, 7, 5, 3, and 1, then the Gold sequence family generated from the preferred pair of m-sequences with index 9 is arranged first in the order, and the Gold sequence family generated from the preferred pair of m-sequences with index 1 is arranged fifth in the order.

In some embodiments, the indexing order of the M Gold sequence families is the ascending order of the product of the indices of the two m-sequences included in each of the M preferred pairs of m-sequences. For example, if preferred pair A of m-sequences includes m-sequences with indices 2 and 3, then the product of the indices of the two m-sequences included in preferred pair A of m-sequence is 6. If preferred pair B of m-sequences includes m-sequences with indices 0 and 5, then the product of the indices of the two m-sequences included in preferred pair B of m-sequence is 0. Therefore, the Gold sequence family corresponding to preferred pair A of m-sequences is arranged after the Gold sequence family corresponding to preferred pair B of m-sequences in the order.

In some embodiments, the indexing order of the M Gold sequence families is the descending order of the product of the indices of the two m-sequences included in each of the M preferred pairs of m-sequences.

In some embodiments, the indexing order of the M Gold sequence families is the ascending order of the sum of the indices of the two m-sequences included in each of the M preferred pairs of m-sequences. For example, if preferred pair A of m-sequences includes m-sequences with indices 2 and 3, then the sum of the indices of the two m-sequences included in preferred pair A of m-sequence is 5. If preferred pair C of m-sequences includes m-sequences with indices 0 and 1, then the sum of the indices of the two m-sequences included in preferred pair B of m-sequence is 1. Therefore, the Gold sequence family corresponding to preferred pair A of m-sequences is arranged after the Gold sequence family corresponding to preferred pair C of m-sequences in the order.

In some embodiments, the indexing order of the M Gold sequence families is the descending order of the sum of the indices of the two m-sequences included in each of the M preferred pairs of m-sequences.

In some embodiments, the M Gold sequence families are ordered first based on the m-sequence with the smaller index in each preferred pair, and then based on the m-sequence with the larger index in each preferred pair. Alternatively, the M Gold sequence families are ordered first based on the m-sequence with the larger index in each preferred pair, and then based on the m-sequence with the smaller index in each preferred pair.

Suppose in a preferred pair of m-sequences, the m-sequence with the smaller index value is called sequence E, and the m-sequence with the larger index value is called sequence F. For example, if preferred pair C of m-sequences is {0,1}, then in preferred pair C of m-sequences, the m-sequence indexed by 0 is sequence E, and the m-sequence indexed by 1 is sequence F. As another example, if preferred pair D of m-sequences is {1,2}, then in preferred pair D of m-sequences, the m-sequence indexed by 1 is sequence E, and the m-sequence indexed by 2 is sequence F.

For example, assuming that the M preferred pairs of m-sequences are {0,1}, {1,2}, {0,3}, {4,6}, and {1,5}, if they are first sorted in the ascending order of the index of sequence E (the m-sequence with the smaller index) in each preferred pair, then there are two preferred pairs of m-sequences both having sequence E with index 0 and two preferred pairs of m-sequences both having sequence E with index 1. The M preferred pairs of m-sequences are then sorted in ascending order of the index of sequence F (the m-sequence with the larger index) in each preferred pair, thus the resulting order of the M preferred pairs of m-sequences is {0,1}, {0,3}, {1,2}, {1,5}, {4,6}.

For example, assuming that the M preferred pairs of m-sequences are {0,1}, {1,2}, {0,3}, {4,6}, and {1,5}, if the M preferred pairs of m-sequences are first sorted in the descending order of the index of sequence E in each preferred pair, then there are two preferred pairs of m-sequences both having sequence E with index 0 and two preferred pairs of m-sequences both having sequence E with index 1. The M preferred pairs of m-sequences are then sorted in the descending order of the index of sequence F in each preferred pair, thus the resulting order of the M preferred pairs of m-sequences is {4,6}, {1,5}, {1,2}, {0,3}, {0,1}.

For example, assuming that the M preferred pairs of m-sequences are {0,1}, {1,2}, {0,3}, {4,6}, and {1,5}, if they are first sorted in descending order of the index of sequence F in each preferred pair, then the resulting order of the M preferred pairs of m-sequences is {4,6}, {1,5}, {0,3}, {1,2}, {0,1}.

For example, assuming that the M preferred pairs of m-sequences are {0,1}, {1,2}, {0,3}, {4,6}, and {1,5}, if they are first sorted in ascending order of the index of sequence F in each preferred pair, then the resulting order of the M preferred pairs of m-sequences is {0,1}, {1,2}, {0,3}, {1,5}, {4,6}.

It is understood that when sorting based on sequence E and sequence F in each preferred pair, the ordering is not limited to ascending or descending index values. Other criteria, such as the coefficients of the primitive polynomial or their binary numbers, can also be used, as detailed in the previously described sorting rules.

In some embodiments, the M Gold sequence families are ordered first based on the 1-st m-sequence in the each preferred pair, and then based on the 2-nd m-sequence in each preferred pair. Alternatively, the M Gold sequence families are ordered first based on the 2-nd m-sequence in the each preferred pair, and then based on the 1-st m-sequence in each preferred pair.

For example, if preferred pair C of m-sequences is {0,1}, then the 1-st m-sequence in pair C is the one on the left, i.e., the m-sequence indexed by 0; the 2-nd m-sequence is the one on the right, i.e., the m-sequence indexed by 1. As another example, if preferred pair D of m-sequences is {2,1}, then the 1-st m-sequence in pair D is the one on the left, i.e., the m-sequence indexed by 2, and the 2-nd m-sequence is the one on the right, i.e., the m-sequence indexed by 1.

For example, the M preferred pairs of m-sequences are {0,1}, {2,1}, {0,3}, {4,6}, and {1,5}, and if they are first sorted in ascending order of the index of the 1-st m-sequence in each preferred pair, then there are two preferred pairs of m-sequences both having a 1-st m-sequence with index 0. The M preferred pairs of m-sequences are then sorted in ascending order of the index of the 2-nd m-sequence in each preferred pair, thus the resulting order of the M preferred pairs of m-sequences is {0,1}, {0,3}, {1,5}, {2,1}, {4,6}.

For example, the M preferred pairs of m-sequences are {0,1}, {2,1}, {0,3}, {4,6}, and {1,5}, and if they are first sorted in descending order of the index of the 2-nd m-sequence in each preferred pair, then there are two preferred pairs of m-sequences both having a 2-nd m-sequence with index 1. The M preferred pairs of m-sequences are then sorted in descending order of the index of the 1-st m-sequence in each preferred pair, thus the resulting order of the M preferred pairs of m-sequences is {4,6}, {1,5}, {0,3}, {2,1}, {0,1}.

It is understood that when sorting based on the first one and the second one in each preferred pair of m-sequences, the ordering is not limited to ascending or descending index values. Other criteria, such as the coefficients of the primitive polynomial or their binary numbers, can also be used, as detailed in the previously described sorting rules.

In addition to designing the indexing order of the M Gold sequence families, the internal indexing order within each Gold sequence family can also be designed. The indexing order of Gold sequences within each Gold sequence family may be a default order, a random order, an order arranged according to a specific rule, specified by a communication protocol, or indicated by a network device.

For example, the indexing order of Gold sequences within each Gold sequence family is arranged in ascending or descending order of cyclic shift offsets.

Optionally, the rules for the internal indexing order may be the same or different across different Gold sequence families. As an example of the case of different rules, based on the indices of the preferred pairs of m-sequences, the M Gold sequence families are first ordered as 0,1,2 ··· ,8. The Gold sequences within the Gold sequence family with index 0 are then sorted in ascending order of cyclic shift offsets, while the Gold sequences in all other Gold sequence families are sorted in a descending order of cyclic shift offsets. If the sorting rules are the same, the internal indexing orders for all M Gold sequence families might, for instance, is an ascending order of cyclic shift offsets or a descending order of cyclic shift offsets.

In some embodiments, the design of the indexing order can be understood as a scenario where the Gold sequence families have both a logical index and a physical index. The logical index refers to the sequential order of the Gold sequence family's index in terms of data logic, which can be understood as the index 0,1,2 ··· , M - 1 or the index 1,2 ··· , M in the embodiments of the present application. The physical index refers to the position of the Gold sequence family's index in memory or in a predefined mapping relationship, which can be understood as the indexing order (e.g., 2,0, M - 1 ··· ,1) in the embodiments of the present application. The logical index and physical index of a Gold sequence family can be the same or different. The reason for a potentially shuffled indexing order is to account for the correlation between Gold sequences. For example, by changing the indexing order, Gold sequences with good correlation properties are arranged adjacently, which in turn can lead to better correlation between the first signals of adjacent cells. Additionally, data storage may be affected by factors such as memory allocation methods and operating system memory management, necessitating adjustments to the indexing order of Gold sequences based on storage conditions. Therefore, it is possible to adjust the indexing order of Gold sequences, i.e., their physical indices, according to practical situations.

In simple terms, the indexing order discussed in the present application can be interpreted as either a logical order or a physical order, and it supports adjustments based on practical situations, communication requirements, and agreements in the communication protocol.

After understanding the M preferred pairs of m-sequences/M Gold sequence families, the following section describes how to determine the target m-sequence preferred pair from the M preferred pairs of m-sequences, i.e., how to determine the target Gold sequence family from the M Gold sequence families.

It is understood that to facilitate downlink synchronization and RRM measurement for each cell, different first signals should be designed for different cells, enabling a UE to perform cell-specific RRM measurement and synchronization based on the first signal. Different first signals can be achieved through variations in at least one of the following aspects: the index of the target m-sequence, the index of the target Gold sequence family, the index of the first m-sequence, the index of the second m-sequence, the cyclic shift step, or the cell identity.

In some embodiments, the index of the target Gold sequence family is determined based on the cell identity. Since different cells have different cell IDs, this design naturally establishes a mapping between cells and target Gold sequence families, ensuring that each cell has a corresponding target Gold sequence family for generating the first signal, thereby supporting downlink synchronization and RRM measurement for each cell.

In some embodiments, the index of the target Gold sequence family corresponding to each cell ID, and/or the index of the target preferred pair of m-sequences corresponding to each cell ID are specified by a communication protocol.

In some embodiments, the rule for determining the index of the target Gold sequence family based on the cell ID is specified by a communication protocol. For example, the communication protocol may define a mathematical operation between each cell ID and the target Gold sequence family.

For example, the index of the target Gold sequence family is equal to the cell ID ${N}_{ID}^{cell}$. For example, the index of the target Gold sequence family is equal to the modulo result of the cell ID ${N}_{ID}^{cell}$ and M, i.e., the index of the target Gold sequence family is equal to ${N}_{ID}^{cell} mod M$. For example, the index of the target Gold sequence family is determined based on the quotient of the cell ID and M, e.g., the index of the target Gold sequence family is equal to $\left⌊{N}_{ID}^{cell}/M\right⌋$.

In some embodiments, the network device indicates to the terminal device the index of the target Gold sequence family and/or the index of the target preferred pair of m-sequences. For example, the network device indicates the index of the target Gold sequence family and/or the index of the target preferred pair of m-sequences to the terminal device via at least one of a broadcast message, a system message, RRC signaling, or an MAC CE.

The network device may directly indicate the index of the target Gold sequence family or indicate information used to determine the index of the target Gold sequence family. For example, the network device indicates to the terminal device at least one of the following: the index of the target Gold sequence among M*Q Gold sequences, a first starting value e, the indexing order of the M Gold sequence families, or the indexing order of the M preferred pairs of m-sequences. The terminal device may directly obtain the index of the target Gold sequence family from the received information or determine the index of the target Gold sequence family based on the received information.

If it is desired for different cells to use different first signals, the mapping between cells and target Gold sequence families may be achieved by the network device indicating different indices of target Gold sequence families for different cells, or by the network device indicating different information used to determine the index of the target Gold sequence family for different cells, ensuring that each cell has a corresponding target Gold sequence family to generate the first signal, thereby supporting downlink synchronization and RRM measurement for each cell.

In some embodiments, the index of the target Gold sequence family is determined based on the index I_{SS} of the target Gold sequence among M*Q Gold sequences, where Q represents the number of Gold sequences included in each Gold sequence family. Optionally, the index I_{SS} of the target Gold sequence among M*Q Gold sequences is determined by the network device, specified by a communication protocol, or determined by the terminal device.

In some embodiments, the index of the target Gold sequence family is determined based on at least one of the following: I_{SS}, a first starting value e, Q, or the indexing order of M Gold sequence families.

The first starting value e is used to indicate a starting position, which is the starting position used to determining the starting position of the Gold sequence family of the target Gold sequence within the M Gold sequence families. For example, if the indexing order of the M Gold sequence families is 5,1,0,4,3,2,7,8,6 and the first starting value e is equal to 3, this indicates that when determining the target Gold sequence, the Gold sequence family at the 3rd position, i.e., the Gold sequence family indexed by 0, is considered first.

For example, the target Gold sequence family is the Gold sequence family at position $e + \left⌊{I}_{SS}/Q\right⌋$ among the M Gold sequence families. If the indexing order of the M Gold sequence families is 5,1,0,4,3,2,7,8,6, e=3, I_{SS} = 35, and Q=12, then the target Gold sequence family is the Gold sequence family at the 5-th position among the M Gold sequence families, i.e., the Gold sequence family with index 3.

**Once the target Gold sequence family or target preferred pair of m-sequences is identified based on the preceding content, the target Gold sequence can be generated based on the target preferred pair of m-sequences.**

Assuming that the target preferred pair of m-sequences includes a first m-sequence and a second m-sequence, then the first m-sequence is one m-sequence in the preferred pair of m-sequences, and the second m-sequence is the other m-sequence in the preferred pair of m-sequences.

In some embodiments, the sequence element indexed by n in the target Gold sequence is determined based on the sequence element indexed by a in the first m-sequence and the sequence element indexed by b in the second m-sequence, which can be understood as that the value of the n-th bit in the target Gold sequence is determined based on the value of the a-th bit in the first m-sequence and the value of the b-th bit in the second m-sequence.

In some embodiments, a is determined based on at least one of the following: n, a parameter m₀, or a first length value, and b is determined based on at least one of the following: n, a parameter m₁, or the first length value. Here, the parameter m₀ denotes the cyclic shift offset of the first m-sequence when used to generate the target Gold sequence, and the parameter m₁ denotes the cyclic shift offset of the second m-sequence when used to generate the target Gold sequence.

The first length value is the length value of the first m-sequence, which is also the length value of the second m-sequence. The n is greater than or equal to 0 and less than the first length value.

In some embodiments, a is determined based on a first modulo result. The first modulo result is the modulo result of a first sum value and the first length value. The first sum value is the sum of n and the parameter m₀.

In some embodiments, b is determined based on a second modulo result. The second modulo result is the modulo result of a second sum value and the first length value. The second sum value is the sum of n and the parameter m₁.

In some embodiments, the sequence element indexed by n in the target Gold sequence is a first product, which can be understood as that the value of the n-th bit in the target Gold sequence equals to the first product. The first product is the product of a first difference and a second difference. The first difference is the difference between the value 1 and a second product, which is the product of the value 2 and the sequence element indexed by a in the first m-sequence. The second difference is the difference between the value 1 and a third product, which is the product of the value 2 and the sequence element indexed by b in the second m-sequence.

For example, the target Gold sequence can be represented by Equation (9), where d_{SS}(n) denotes the target Gold sequence, x₀(n) denotes the first m-sequence used to generate the target Gold sequence, x₁(n) denotes the second m-sequence used to generate the target Gold sequence, and L denotes the first length value. ${d}_{SS} \left(n\right) = \left[1-2{x}_{0}\left(\left(n+{m}_{0}\right)mod L\right)\right] ⋅ \left[1-2{x}_{1}\left(\left(n+{m}_{1}\right)mod L\right)\right]$ (9)

In some embodiments, Equation (9) is applicable to the case where the first signal is obtained through BPSK modulation.

In some embodiments, the sequence element indexed by n in the target Gold sequence is the modulo-2 result of the sum of the sequence element indexed by a in the first m-sequence and the sequence element indexed by b in the second m-sequence, which can be understood as that the value of the n-th bit in the target Gold sequence is equal to the modulo-2 result of the sum of the value of the a-th bit in the first m-sequence and the value of the b-th bit in the second m-sequence.

For example, the target Gold sequence can be represented by Equation (10), where d_{SS}(n) denotes the target Gold sequence, x₀(n) denotes the first m-sequence used to generate the target Gold sequence, x₁(n) denotes the second m-sequence used to generate the target Gold sequence, and L denotes the first length value. ${d}_{SS} \left(n\right) = \left[{x}_{0}\left(\left(n+{m}_{0}\right)mod L\right)+{x}_{1}\left(\left(n+{m}_{1}\right)mod L\right)\right] mod 2$ (10)

In some embodiments, Equation (10) is applicable to the case where the first signal is obtained through OOK modulation.

In some embodiments, the parameter m₀ and the parameter m₁ are determined based on a cell identity ${N}_{ID}^{cell}$.

In some embodiments, the parameter m₀ is determined based on a first sub-identity, and the parameter m₁ is determined based on a second sub-identity. The first sub-identity and the second sub-identity are determined based on the cell identity ${N}_{ID}^{cell}$. Assume that the first sub-identity is represented as ${N}_{ID}^{\left(1\right)}$ and the second sub-identity is represented as ${N}_{ID}^{\left(2\right)}$.

In some embodiments, the first sub-identity ${N}_{ID}^{\left(1\right)}$ and the second sub-identity ${N}_{ID}^{\left(2\right)}$ are determined based on the cell identity ${N}_{ID}^{cell}$ and a parameter k., where 1 ≤ k ≤ S, S denotes the total number of cells in the communication system.

In some embodiments, ${N}_{ID}^{cell} = k ∗ {N}_{ID}^{\left(1\right)} + {N}_{ID}^{\left(2\right)}$, where ${N}_{ID}^{\left(1\right)} ∈ \left\{0,1⋯,\left⌊\frac{S}{k}\right⌋-1\right\} , { N}_{ID}^{\left(2\right)} ∈ \left\{0,1⋯,k-1\right\}$ .

As can be seen from the equations above, a pair of a first sub-identity and a second sub-identity can be uniquely determined from the cell identity, the pair of a first sub-identity and a second sub-identity in turn can be used to uniquely determine a pair of the parameter m₀ and the parameter m₁. Furthermore, a pair of a first m-sequence and a second m-sequence is uniquely determined based on the methods previously described. When the first m-sequence, the second m-sequence, the parameter m₀, and the parameter m₁ are all uniquely determined, the target Gold sequence d_{SS}(n) can be uniquely generated. This establishes a one-to-one correspondence between the cell identity and the target Gold sequence. Since the target Gold sequence is the sequence used to generate the first signal, a one-to-one correspondence between the cell identity and the first signal is also established, thereby supporting the terminal device in performing RRM measurement and synchronization for the corresponding cell based on the first signal.

In some embodiments, the index of the first m-sequence is specified by a communication protocol, indicated by a network device, or determined according to a rule specified by the communication protocol. For example, the network device directly indicates the index of the first m-sequence, or indicates the index of the target Gold sequence family, or indicates the index of the target preferred pair of m-sequences, or indicates information used to determine the target Gold sequence family.

In some embodiments, the index of the second m-sequence is specified by a communication protocol, indicated by a network device, or determined according to a rule specified by the communication protocol. For example, the network device directly indicates the index of the second m-sequence, or indicates the index of the target Gold sequence family, or indicates the index of the target preferred pair of m-sequences, or indicates information used to determine the target Gold sequence family.

In some embodiments, the index of the preferred pair of m-sequences is specified by a communication protocol, indicated by a network device, or determined according to a rule specified by the communication protocol.

### Regarding the determination of the parameter m₀ and the parameter m₁, the embodiments of the present application provide two calculation methods.

### Calculation Method 1:

In some embodiments, the parameter m₀ is determined based on the modulo result of the first sub-identity and a parameter G, and the parameter m₁ is determined based on the modulo result of the second sub-identity and a parameter F.

In some embodiments, the parameter m₀ is equal to the modulo result of the first sub-identity and the parameter G, and the parameter m₁ is equal to the modulo result of the second sub-identity and the parameter F. That is, ${m}_{0} = {N}_{ID}^{\left(1\right)} mod G$, and ${m}_{1} = {N}_{ID}^{\left(2\right)} mod F$.

In some embodiments, the parameter m₀ is equal to q₁ times the modulo result of the first sub-identity and the parameter G, and the parameter m₁ is equal to q₂ times the modulo result of the second sub-identity and the parameter F. That is, ${m}_{0} = {q}_{1} \left({N}_{ID}^{\left(1\right)} mod G\right)$, and ${m}_{1} = {q}_{2} {N}_{ID}^{\left(2\right)} mod F$, where q₁ is a positive integer, and q₂ is a positive integer.

Optionally, the parameter G is less than the first length value, i.e., G < L. Optionally, the parameter F is less than the first length value, i.e., F < L.

Optionally, the parameter m₀ is less than the first length value, i.e., **m₀** < L. Optionally, the parameter m₁ is less than the first length value, i.e., m₁ < L.

In some embodiments, the parameter G and the parameter F are determined based on the total number S of cells in the communication system.

In some embodiments, assume that the total number of cells in the communication system is S, then the product of the parameter G and the parameter F is equal to S, i.e., G * F = S, which can also be understood as that the parameter G and the parameter F are both the divisors of S. For example, if S = 64, then G = 8 and F = 8, or G = 1 and F = 64, or G = 2 and F = 32, or G = 4 and F = 16, or G = 1 and F = 64, or G = 16 and F = 4, or G = 32 and F = 2, or G = 64 and F = 1.

In some embodiments, the sum of the parameter G and the parameter F is equal to S, i.e., G + F = S. Alternatively, an integer multiple of the product of the parameter G and the parameter F is equal to S.

In some embodiments, F = k, and $G = \left⌊S/k\right⌋$, where 1 ≤ k ≤ S.

**Example 1:** Assume that the total number of cells in the communication system is S = 64 (S ≥ 1), the the range of indices or numbers for these 64 cells is from 0 to 63. If the cell identity corresponding to the first signal transmitted this time is ${N}_{ID}^{cell} = 30$, and the number M of preferred pairs of m-sequences is equal to 2 (i.e., M=2) when the number of stages of the shift register is r, then, the index of the target Gold sequence family is equal to $\left⌊{N}_{ID}^{cell}/M\right⌋ = 15$. In this case, the first m-sequence x₀(n) and the second m-sequence x₁(n) correspond to the Gold sequence family with index 15 among the M Gold sequence families. There is an assumption that the parameter G and the parameter F are both divisors of S, for example, G = 8, F = 8, and that the length of the target Gold sequence is L = 63, where k = 3.

Then, according to ${N}_{ID}^{cell} = k ∗ {N}_{ID}^{\left(1\right)} + {N}_{ID}^{\left(2\right)} = 30$, it can be obtained that ${N}_{ID}^{\left(1\right)} = 10$ and ${N}_{ID}^{\left(2\right)} = 0$.

Therefore, ${m}_{0} = {N}_{ID}^{\left(1\right)} mod G = 10 mod 8 = 2$, and ${m}_{1} = {N}_{ID}^{\left(2\right)} mod F = 0 mod 8 = 0$.

If calculated using Equation (9), it can be obtained that d_{SS}(n) = [1 - 2x₀((n + 2) mod 63)]. [1 - 2x₁((n + 0) mod 63)], where 0 ≤ n < 63.

If calculated using Equation (10), it can be obtained that d_{SS}(n) = [x₀((n + 2) mod 63) + x₁((n + 0) mod 63)] mod 2, where 0 ≤ n < 63.

**Example 2:** There are following assumptions: the total number of cells in the communication system is S = 64 (S ≥ 1), and the range of indices or numbers for these 64 cells is from 0 to 63; the cell identity corresponding to the first signal transmitted this time is ${N}_{ID}^{cell} = 31$; the network device indicates that the index of the target Gold sequence family is equal to 15, L = 63, k = 3, q₁ = 3, and q₂ = 4; one Gold sequence family includes Q=12 Gold sequences, where $\left⌊{I}_{s}/Q\right⌋ = 1$; and the network device indicates a second starting information is 2. Then, the target Gold sequence family is the Gold sequence family at the 2+1=3-rd position among the M Gold sequence families. In this case, the first m-sequence x₀(n) and the second m-sequence x₁(n) correspond to the Gold sequence family at the 3-rd position among the M Gold sequence families.

Then, according to ${N}_{ID}^{cell} = k ∗ {N}_{ID}^{\left(1\right)} + {N}_{ID}^{\left(2\right)} = 31$, it can be obtained that ${N}_{ID}^{\left(1\right)} = 10$, and ${N}_{ID}^{\left(2\right)} = 1$.

According to F = k and G = [S/k], it can be obtained that F = 3, and $G = \left⌊64/3\right⌋ = 21$.

Therefore, ${m}_{0} = {q}_{1} \left({N}_{ID}^{\left(1\right)} mod G\right) = 3 \left(10 mod 21\right) = 30$, and ${m}_{1} = {q}_{2} {N}_{ID}^{\left(2\right)} mod F = 4 ∗ 1 mod 3 = 1$ .

If calculated using Equation (9), it can be obtained that d_{SS}(n) = [1 - 2x₀((n + 30) mod 63)] · [1 - 2x₁((n + 1) mod 63)], where 0 ≤ n < 63.

If calculated using Equation (10), it can be obtained that d_{SS}(n) = [x₀((n + 30) mod 63) + x₁((n + 1) mod 63)] mod 2, where 0 ≤ n < 63.

### Calculation Method 2:

In some embodiments, the parameter m₀ is determined based on the first sub-identity and the second sub-identity, and the parameter m₁ is determined based on the first sub-identity.

In some embodiments, the parameter m₀ is determined based on the quotient of the first sub-identity and a parameter B, as well as the second sub-identity, and the parameter m₁ is based on the modulo result of the first sub-identity and the parameter B.

For example, ${m}_{0} = {f}_{1} \left⌊{N}_{ID}^{\left(1\right)}/B\right⌋ + {f}_{2} {N}_{ID}^{\left(2\right)}$, and ${m}_{1} = {N}_{ID}^{\left(1\right)} mod B$. Optionally, B is a positive integer, f₁ is a positive integer, and f₂ is a positive integer. Optionally, ${f}_{2} {N}_{ID}^{\left(2\right)} < {f}_{1}$. Optionally, B is less than the first length value, i.e., B < L.

Optionally, the parameter m₀ is less than the first length value, i.e., m₀ < L. Optionally, the parameter m₁ is less than the first length value, i.e., m₁ < L.

**Example 3:** Assuming that the total number of cells in the communication system is S = 1008, and that the range of indices or numbers for these 1008 cells is from 0 to 1007, if the cell identity corresponding to the first signal transmitted this time is ${N}_{ID}^{cell} = 331$, and the number M of preferred pairs of m-sequences is equal to 6 (i.e., M=6) when the number of stages of the shift register is r, then, the index of the target Gold sequence family is equal to ${N}_{ID}^{cell} mod M = 1$. In this case, the first m-sequence x₀(n) and the second m-sequence x₁(n) correspond to the Gold sequence family with index 1 among the M Gold sequence families. There is an assumption that the length of the target Gold sequence is L = 127, f₁ = 15, f₂ = 5, B = 112, and k = 2.

Then, according to ${N}_{ID}^{cell} = k ∗ {N}_{ID}^{\left(1\right)} + {N}_{ID}^{\left(2\right)} = 331$, it can be obtained that ${N}_{ID}^{\left(1\right)} = 165$, and ${N}_{ID}^{\left(2\right)} = 1$ .

Therefore, ${m}_{0} = {f}_{1} \left⌊{N}_{ID}^{\left(1\right)}/B\right⌋ + {f}_{2} {N}_{ID}^{\left(2\right)} = 15 ∗ \left⌊165/112\right⌋ + 5 ∗ 1 = 20$, and ${m}_{1} = {N}_{ID}^{\left(1\right)} mod B = 165 mod 112 = 53$ .

If calculated using Equation (9), it can be obtained that d_{SS}(n) = [1 - 2x₀((n + 20) mod 127)] . [1 - 2x₁((n + 53) mod 127)], where 0 ≤ n < 127.

If calculated using Equation (10), it can be obtained that d_{SS}(n) = [x₀((n + 20) mod 127) + x₁((n + 53) mod 127)] mod 2, where 0 ≤ n < 127.

**Example 4:** There are following assumptions: the total number of cells in the communication system is S = 1008 (S ≥ 1), and the range of indices or numbers for these 1008 cells is from 0 to 1007; the cell identity corresponding to the first signal transmitted this time is ${N}_{ID}^{cell} = 331$; the network device indicates that the index of the target Gold sequence family is equal to 15 and k = 3; one Gold sequence family includes Q=12 Gold sequences, where $\left⌊{I}_{s}/Q\right⌋ = 1$; and the network device indicates a second starting information is 2. Then, the target Gold sequence family is the Gold sequence family at the 2+1=3-rd position among the M Gold sequence families. In this case, the first m-sequence x₀(n) and the second m-sequence x₁(n) correspond to the Gold sequence family at the 3-rd position among the M Gold sequence families. There are following assumptions: the length L of the target Gold sequence is equal to 63 (i.e., L = 63), f₁ = 10, f₂ = 3, and B = 56.

Then, according to ${N}_{ID}^{cell} = k ∗ {N}_{ID}^{\left(1\right)} + {N}_{ID}^{\left(2\right)} = 331$, it can be obtained that ${N}_{ID}^{\left(1\right)} = 110$, and ${N}_{ID}^{\left(2\right)} = 1$ .

Therefore, ${m}_{0} = {f}_{1} \left⌊{N}_{ID}^{\left(1\right)}/B\right⌋ + {f}_{2} {N}_{ID}^{\left(2\right)} = 10 ∗ \left⌊110/56\right⌋ + 3 ∗ 1 = 13$, and ${m}_{1} = {N}_{ID}^{\left(1\right)} mod B = 110 mod 56 = 54$ .

If calculated using Equation (9), it can be obtained that d_{SS}(n) = [1 - 2x₀((n + 13) mod 63)] . [1 - 2x₁((n + 54) mod 63)], where 0 ≤ n < 63.

If calculated using Equation (10), it can be obtained that d_{SS}(n) = [x₀((n + 13) mod 63) + x₁((n + 54) mod 63)] mod 2, where 0 ≤ n < 63.

It should be noted that for both Calculation Method 1 and Calculation Method 2, the calculation methods for m₀ and m₁ can be interchanged. For example, the parameter m₀ is determined based on the second sub-identity, and the parameter m₁ is determined based on the first sub-identity. For example, the parameter m₀ is equal to the modulo result of the second sub-identity and the parameter F, and the parameter m₁ is equal to the modulo result of the first sub-identity and the parameter G. For example, ${m}_{1} = {N}_{ID}^{\left(1\right)} mod G$, and ${m}_{0} = {N}_{ID}^{\left(2\right)} mod F$. For example, ${m}_{1} = {q}_{1} \left({N}_{ID}^{\left(1\right)} mod G\right)$, and ${m}_{0} = {q}_{2} { N}_{ID}^{\left(2\right)} mod F$. For example, the parameter m₁ is determined based on the first sub-identity and the second sub-identity, and the parameter m₀ is determined based on the first sub-identity. For example, the parameter m₁ is determined based on the quotient of the first sub-identity and the parameter B, as well as the second sub-identity, and the parameter m₀ is determined based on the modulo result of the first sub-identity and the parameter B. For example, ${m}_{1} = {f}_{1} \left⌊{N}_{ID}^{\left(1\right)}/B\right⌋ + {f}_{2} {N}_{ID}^{\left(2\right)}$ , and ${m}_{0} = {N}_{ID}^{\left(1\right)} mod B$.

In some embodiments, the network device transmits at least one of the following information: the index of the Gold sequence, the index of the first m-sequence, the index of the second m-sequence, the index of the preferred pair of m-sequences, the index of the m-sequence, a cyclic shift step, the indexing order of m-sequences in an m-sequence set, or the index of an m-sequence subset.

In summary, based on Gold sequences, the method provided in the embodiments of the present application offers a low-complexity and feasible solution for transmitting synchronization signals and measurement signals. Because Gold sequences possess good autocorrelation and cross-correlation properties, the first signal generated from Gold sequences retains these favorable properties, which helps to improve the reliability and efficiency of downlink synchronization and RRM measurement. Furthermore, by applying cyclic shifts to preferred pairs of m-sequences, a massive number of Gold sequences can be obtained, providing available Gold sequences for a massive number of cells to generate the first signal.

**Next, using the generation of the first signal based on m-sequences as an example, the relevant content of generating the first signal based on m-sequences will be further introduced on the basis of Step 1010.**

FIG. 12 shows a schematic flowchart of a signal transmission method provided by an exemplary embodiment of the present application. The method is performed by a network device and includes the following step.

In **Step 1210**, transmit a first signal, where the first signal is used for RRM measurement and/or downlink synchronization, and the first signal is generated based on m-sequence(s).

In some embodiments, the first signal is generated based on a first m-sequence or a second m-sequence.

The first m-sequence is the m-sequence generated according to a primitive polynomial as described previously. A primitive polynomial of degree r can generate a first m-sequence of degree r.

Table 1 shows the upper limit on the number of first m-sequences that can be generated by shift registers of different degrees, and the upper limit on the number of first m-sequences is equal to the number of primitive polynomials. For example, when the degree r is equal to 7, there are 18 primitive polynomials, so the upper limit on the number of first m-sequences is 18.

**Table 1 Upper limit on the number of first m-sequences under different degrees**

| Number r of stages of shift register | Upper limit on the number of first m-sequences |
|---|---|
| 2 | 1 |
| 3 | 2 |
| 4 | 2 |
| 5 | 6 |
| 6 | 6 |
| 7 | 18 |
| 8 | 16 |
| 9 | 48 |
| 10 | 60 |
| 11 | 176 |

The second m-sequence is obtained by applying a cyclic shift to the first m-sequence, which can be understood as that a second m-sequence is a cyclically shifted sequence of the first m-sequence.

In the present application, the first m-sequence may also be referred to as at least one of the following: a basic m-sequence, a root m-sequence, a primary m-sequence, a first-level m-sequence, etc. The second m-sequence may also be referred to as at least one of the following: a shifted sequence, a displaced sequence, a cyclically shifted sequence, an extended m-sequence, a secondary m-sequence, a slave m-sequence, an auxiliary m-sequence, a second-level m-sequence, etc.

The concepts in cyclic shift are introduced here. As the name implies, the cyclic shift involves cyclically moving the values in a sequence. There are two common types of cyclic shifts: cyclic left shift and cyclic right shift. In a cyclic left shift, the high-order bits that are shifted out are placed at the low-order end of the sequence. In a cyclic right shift, the low-order bits that are shifted out are placed at the high-order end of the sequence. The number of bits shifted out in one cyclic shift is called the cyclic shift offset of that shift, and the sequence obtained through the cyclic shift can be called a shifted sequence. Taking the basic m-sequence "10110101" as an example, FIG. 13 shows the process of a cyclic shift with a cyclic shift offset of 2 bits. The process of a cyclic left shift is shown in FIG. 12(a), and the process of a cyclic right shift is shown in FIG. 12(b). The cyclic shift in the embodiments of the present application can be either a cyclic left shift or a cyclic right shift. The cyclic shift offset can also be called the cyclic shift amount.

As known from the preceding description, the maximum period of a first m-sequence under stage r is 2^{r} - 1. If the cyclic shift offset for each cyclic shift is 1, a maximum of 2^{r} - 2 second m-sequences can be generated. Therefore, by applying cyclic shifts with a cyclic shift offset of 1 to the first m-sequence, a total of at most 2^{r} - 1 m-sequences can be obtained (including the first m-sequence itself).

If the cyclic shift step of the first m-sequence is N_{CS}, then a maximum of $\left⌊\left({2}^{r}-1\right)/{N}_{CS}\right⌋$ m-sequences can be obtained, which includes one basic m-sequence and $\left⌊\left({2}^{r}-1\right)/{N}_{CS}\right⌋ - 1$ cyclically shifted sequences. In the present application, "└ ┘" denotes the floor function, and "┌ ┐" denotes the ceiling function, which will not be reiterated below.

Assuming the number of first m-sequences under a degree r is N, after applying cyclic shifts to these N first m-sequences with a cyclic shift step of N_{CS}, a maximum of $N ∗ \left⌊\left({2}^{r}-1\right)/{N}_{CS}\right⌋$ m-sequences can be obtained, which includes N first m-sequences themselves and $\left(N∗\left⌊\left({2}^{r}-1\right)/{N}_{CS}\right⌋-N\right)$ second m-sequences.

It can be understood that a cyclic shift offset can be obtained based on the cyclic shift step N_{CS}, and by applying a cyclic shift to the first m-sequence according to the cyclic shift offset, several second m-sequences can be obtained. Furthermore, the smaller the cyclic shift step N_{CS}, the more the second m-sequences can be obtained.

Assuming the first m-sequence is x(n), then the second m-sequence can be represented as x((n + C) mod L), where L is the length of the first m-sequence, C is the cyclic shift offset of the second m-sequence relative to the first m-sequence, and mod represents the modulo operation. Theoretically, the cyclic shift offset C can be any integer from 0 to L.

However, in some cases, an excessively small cyclic shift offset may make it difficult for the receiving end to distinguish between two adjacent cyclically shifted sequences, especially when the chip corresponding to each bit of the m-sequence is small. Therefore, the present application also supports further restricting the value of the cyclic shift offset in some embodiments to ensure the reception quality of the synchronization signal. For example, the cyclic shift offset is set to be greater than a first threshold, where the first threshold is specified by a communication protocol, indicated by a network device, or determined based on the chip length of the m-sequence.

In the embodiments of the present application, the m-sequence used to generate the first signal is referred to as the target m-sequence. The first signal can be obtained by modulating the target m-sequence.

In some embodiments, the target m-sequence is one m-sequence in an m-sequence set. The m-sequence set is determined based on the number r of stages of the shift register. The m-sequence set includes first m-sequences and/or second m-sequences; therefore, the target m-sequence may be a first m-sequence or a second m-sequence.

### First, the m-sequence set will be introduced.

Assuming that for a shift register of r stages, there are X first m-sequences, if applying cyclic shifts to the X first m-sequences according to a cyclic shift step, then Y second m-sequences are obtained. The m-sequence set includes W of these m-sequences, where W≤X+Y. The embodiments of the present application use W=X+Y as an illustrative example.

In some embodiments, the indexing order of m-sequences in the m-sequence set is default, random, arranged according to a specific rule, specified by a communication protocol, or determined by a network device.

In some embodiments, all m-sequences in the m-sequence set are first arranged according to a specific rule, and then indices are assigned to the m-sequences to form W m-sequences with an indexing order of 0,1,2 ··· , W - 1. Alternatively, all m-sequences in the m-sequence set are first arranged randomly, and then indices are assigned to the m-sequences to W m-sequences with an indexing order of 0,1,2 ··· , W - 1.

In some embodiments, indices are first assigned to all m-sequences in the m-sequence set, and then all m-sequences are arranged according to a specific rule. Alternatively, indices are first assigned to all m-sequences in the m-sequence set, and then all m-sequences are arranged randomly. Therefore, the final indexing order within the m-sequence set may be disordered and not in sequential order from 0 to W - 1.

In some embodiments, each m-sequence in the m-sequence set has a unique corresponding index. The indexing order of m-sequences in the m-sequence set is arranged in ascending order of index values or in descending order of index values.

In some embodiments, the indexing order of first m-sequences in the m-sequence set is determined based on at least one of the following: the corresponding primitive polynomial coefficients, the binary numbers of the corresponding primitive polynomial coefficients, or the index values of the first m-sequences.

In some embodiments, the first m-sequences in the m-sequence set are arranged in ascending order of the index values of the first m-sequences, or in descending order of the index values of the first m-sequences.

In some embodiments, the indexing order of the first m-sequences in the m-sequence set is arranged based on the primitive polynomial coefficients that generate the first m-sequences. For example, all first m-sequences are arranged in order of the primitive polynomial coefficients from the highest power to the lowest power. For example, all first m-sequences are arranged in order of the primitive polynomial coefficients from the lowest power to the highest power.

In some embodiments, the indexing order of the first m-sequences in the m-sequence set is arranged based on the binary numbers of the corresponding primitive polynomial coefficients. For example, the primitive polynomial coefficients are represented in binary, and all first m-sequences are arranged in ascending order of the corresponding binary numbers of the primitive polynomials. For example, all first m-sequences are arranged in descending order of the corresponding binary numbers of the primitive polynomials.

In some embodiments, the indexing order of second m-sequences in the m-sequence set is determined based on at least one of the following: the cyclic shift offset, the indexing order of the corresponding first m-sequences, the corresponding primitive polynomial coefficients, the binary numbers of the corresponding primitive polynomial coefficients, or the index values of the second m-sequences.

In some embodiments, the second m-sequences in the m-sequence set are arranged in ascending order of the index values of the second m-sequences, or in descending order of the index values of the second m-sequences.

In some embodiments, the indexing order of the second m-sequences in the m-sequence set is arranged based on the cyclic shift offset. For example, the second m-sequences are arranged in ascending order of cyclic shift offsets. For example, the second m-sequences are arranged in descending order of cyclic shift offsets.

In some embodiments, within the m-sequence set, all first m-sequences are arranged first (which can be arranged according to binary numbers and/or primitive polynomial coefficients and/or index values, as previously described), and then all second m-sequences are arranged (which can be arranged according to cyclic shift offsets and/or the indexing order of the first m-sequences and/or binary numbers and/or primitive polynomial coefficients and/or index values, as previously described), with all second m-sequences positioned after all first m-sequences. For example, if all first m-sequences are denoted as M_{1,1}, M_{1,2} ··· , M_{1,X}, and all second m-sequences are denoted as M_{2,1}, M_{2,2} ··· , M_{2,Y}, then the arrangement order of the m-sequences in the m-sequence set is M_{1,1}, M_{1,2} ··· , M_{1,X}, M_{2,1}, M_{2,2} ··· , M_{2,Y}, or M_{1,X}, M_{1,X-1} ··· , M_{1,1}, M_{2,Y}, M_{2,Y-1} ··· , M_{2,1}.

In some embodiments, within the m-sequence set, all second m-sequences are arranged first (which can be arranged according to cyclic shift offsets and/or the indexing order of the first m-sequences and/or binary numbers and/or primitive polynomial coefficients and/or index values, as previously described), and then all first m-sequences are arranged (which can be arranged according to binary numbers and/or primitive polynomial coefficients and/or index values, as previously described), with all first m-sequences positioned after all second m-sequences.

In some embodiments, within the m-sequence set, the first m-sequences and the second m-sequences are interleaved. For example, within the m-sequence set, X first m-sequences are arranged first (which can be arranged according to binary numbers and/or primitive polynomial coefficients and/or index values, as previously described), and all second m-sequences are arranged after their corresponding first m-sequences in ascending order of cyclic shift offset. For example, within the m-sequence set, X first m-sequences are arranged first, and all second m-sequences are arranged after their corresponding first m-sequences in descending order of cyclic shift offset. For example, within the m-sequence set, X first m-sequences are arranged first, and all second m-sequences are arranged after their corresponding first m-sequences in ascending order of index value. For example, within the m-sequence set, X first m-sequences are arranged first, and all second m-sequences are arranged after their corresponding first m-sequences in descending order of index value.

The rules for the indexing order of the first m-sequences and the second m-sequences may be identical or different. For example, both the first m-sequences and the second m-sequences are arranged according to their index values. For example, the first m-sequences are arranged according to primitive polynomial coefficients, while the second m-sequences are arranged according to cyclic shift offsets. Other possibilities can be referenced in the preceding content and will not be reiterated here.

### The method for determining the target m-sequence is described as follows.

In some embodiments, S m-sequences are selected from the aforementioned m-sequence set, which includes W m-sequences. S represents the total number of cells in the communication system.

Optionally, the S m-sequences are randomly selected from the m-sequence set. Alternatively, the S m-sequences are the default S m-sequences in the m-sequence set. Alternatively, the S m-sequences are S m-sequences specified by a communication protocol within the m-sequence set. Alternatively, the S m-sequences are S m-sequences selected from the m-sequence set according to a specific rule.

For example, the S m-sequences are the m-sequences with odd-numbered indices in the m-sequence set by default. As another example, the S m-sequences are the m-sequences with indices from 0 to S-1 in the m-sequence set. As another example, the S m-sequences are the m-sequences arranged in the first S positions in the m-sequence set. As another example, the S m-sequences are the m-sequences arranged in the last S positions in the m-sequence set, and so on.

In some embodiments, when generating the first signal, the S m-sequences retain their indices from the m-sequence set. For example, if the S m-sequences are indexed from (W-1-S) to (W-1) in the m-sequence set, then the same indices (W-1-S) to (W-1) are assigned to these S m-sequences when used to generate the first signal. For example, if the S m-sequences are indexed from 1 to S in the m-sequence set, then the same indices 1 to S are assigned to these S m-sequences when used to generate the first signal.

In some embodiments, when generating the first signal, the indices of the S m-sequences are different from their indices in the m-sequence set. For example, if the S m-sequences are indexed from (W-1-S) to (W-1) in the m-sequence set, the indices of these S m-sequence when used to generate the first signal may be 0 to S-1, or 1 to S, respectively.

In some embodiments, when generating the first signal, the S m-sequences retain their indexing order from the m-sequence set. That is, the indexing order of these S m-sequences when used to generate the first signal is identical to their indexing order in the m-sequence set.

In some embodiments, when generating the first signal, the indexing order of the S m-sequences is different from their indexing order within the m-sequence set. For example, these S m-sequences may be arranged in ascending order of index value, or in descending order of index value, or in order from the lowest power to the highest power of the primitive polynomial coefficients, or in order from the highest power to the lowest power of the primitive polynomial coefficients, or in descending order of the binary numbers of the primitive polynomials, or in ascending order of the binary numbers of the primitive polynomials, and so on. For example, the indexing order of the S m-sequences is 0,1,2 ··· , S - 1, or the indexing order of the S m-sequences is S - 1, S - 2, S - 3 ··· ,1,0.

After sorting the m-sequences in the m-sequence set and the S m-sequences using the methods described above, S m-sequences in one-to-one correspondence with S cells can be obtained. The indices of the S m-sequences can correspond to the indices of the sequences of S first signals. For example, the m-sequence with index 0 among the S m-sequences corresponds to the sequence of the first signal with index 0; the m-sequence with index 1 among the S m-sequences corresponds to the sequence of the first signal with index 1; and so on. For example, the m-sequence with index 0 among the S m-sequences corresponds to the sequence of the first signal with index 1; the m-sequence with index 1 among the S m-sequences corresponds to the sequence of the first signal with index 2; and so on.

It is understood that to facilitate downlink synchronization and RRM measurement for each cell, different first signals should be designed for different cells, enabling a UE to perform cell-specific RRM measurement and synchronization based on the first signal. Different first signals can be achieved through variations in at least one of the following aspects: the index of the target m-sequence, the cyclic shift step, or the cell identity.

In some embodiments, the index of the target m-sequence is determined based on the cell identity. Because different cells have different cell identities, this design naturally implements a mapping between cells and target m-sequences, ensuring that each cell has a corresponding m-sequence for generating a first signal, thereby supporting downlink synchronization and RRM measurement for each cell.

In some embodiments, the index of the target m-sequence corresponding to each cell identity is specified by a communication protocol.

In some embodiments, the rule for determining the index of the target m-sequence based on the cell identity is specified by a communication protocol. For example, the communication protocol may define a mathematical operation rule between each cell identity and the corresponding target m-sequence.

In some embodiments, the index of the target m-sequence is determined based on the cell identity ${N}_{ID}^{cell}$. That is, the first signal corresponding to each cell is associated with its own cell identity. The cell identity ${N}_{ID}^{cell}$ is related to the total number S of cells in the communication system. For example, $0 \leq {N}_{ID}^{cell} \leq S - 1$ .

In some embodiments, the index of the target m-sequence is identical to the cell identity ${N}_{ID}^{cell}$. For example, if ${N}_{ID}^{cell} = 30$, then the index of the target m-sequence is 30, that is, the target m-sequence is the m-sequence indexed by 30 among the S m-sequences.

In some embodiments, the index of the target m-sequence is equal to the modulo result of the cell identity ${N}_{ID}^{cell}$ and S, that is, the index of the target m-sequence is equal to ${N}_{ID}^{cell} mod S$. Alternatively, the index of the target m-sequence is determined based on the quotient of the cell identity ${N}_{ID}^{cell}$ and S, e.g., the index of the target m-sequence is equal to $\left⌊{N}_{ID}^{cell}/S\right⌋$.

In some embodiments, the network device indicates the index of the target m-sequence to the terminal device. For example, the network device indicates the index of the target m-sequence to the terminal device via at least one of a broadcast message, a system message, RRC signaling, or an MAC CE.

The network device may directly indicate the index of the target m-sequence, or indicate information used to determine the index of the target m-sequence. For example, the network device indicates to the terminal device at least one of the following: the index of the target m-sequence among the S m-sequences, or the indexing order of the S m-sequences. The terminal device may directly obtain the index of the target m-sequence from the received information or determine the index of the target m-sequence based on the received information.

If it is desired for different cells to use different first signals, the mapping between cells and target m-sequences may be achieved by the network device indicating different indices of target m-sequences for different cells, or by the network device indicating different information used for determining the indices of the target m-sequences for different cells, ensuring that each cell has a corresponding target m-sequence to generate the first signal, thereby supporting downlink synchronization and RRM measurement for each cell.

In some embodiments, the network device transmits at least one of the following information: the index of the Gold sequence, the index of the first m-sequence, the index of the second m-sequence, the index of a preferred pair of m-sequences, the index of the m-sequence, a cyclic shift step, the indexing order of m-sequences in an m-sequence set, or the index of an m-sequence subset.

In summary, based on m-sequences, the method provided in the embodiments of the present application offers a low-complexity and feasible solution for transmitting synchronization signals and measurement signals. Because m-sequences have favorable autocorrelation and cross-correlation properties, the first signal generated from a Gold sequence also retains these favorable properties, which contributes to improving the reliability and efficiency of downlink synchronization and RRM measurement.

Furthermore, by constructing an m-sequence set, a massive number of m-sequences can be obtained, which can provide available m-sequences for a massive number of cells to generate first signals.

The embodiments illustrated in the aforementioned FIG. 11 and FIG. 12 can meet the requirements for RRM measurement and downlink synchronization. The number of first signals received and detected by a WUR (corresponding to the number of cell identities to be measured or synchronized) can be configured by a main radio, therefore, the number of first signals can be relatively limited, and the WUR only needs to process a finite number of first signals to perform RRM measurement and downlink synchronization. However, when a low-power device performs RRM measurement and downlink synchronization through a low-power receiver, the cell search and measurement must be performed independently by the low-power receiver. Consequently, when the total number of cells in the communication system is large and the range of cell identity values is wide, the number of possible sequences of the first signals is also large, meaning the low-power receiver needs to detect a large number of first signals. For instance, if there are 1008 cells in the communication system, this implies the existence of 1008 first signals in one-to-one correspondence with 1008 cell identities. In this scenario, the low-power device might need to receive and detect 1008 sequences, which would undoubtedly increase its power consumption.

Therefore, based on the configurations in FIGS. 11 and 12, to save power consumption for low-power devices and also appropriately reduce the power consumption of the WUR, one may consider reducing the number of potential first signals that the terminal device needs to detect.

One approach is to reduce the number of cell identities, but this may compromise the flexibility of network-side deployment and planning. For example, when deploying low-power cells based on a conventional network topology, a simpler approach is still to reuse traditional cell identities.

Another approach is to reduce the complexity for the terminal device in detecting the first signal by constructing suitable binary sequences. The present application provides a scheme as illustrated in FIG. 14, in which the first signal is designed to be generated from two binary sequences, each carrying a portion of the cell identity information.

FIG. 14 is a schematic flowchart of a signal transmission method provided by an exemplary embodiment of the present application, which is executed by a network device and includes the following step.

In **Step 1410**, transmit a first signal, which is used for RRM measurement and/or downlink synchronization and is generated based on two m-sequences.

For the determination of the target preferred pair of m-sequences, reference can be made to the embodiment illustrated in FIG. 11. The detailed steps for this process are not reiterated here.

Assuming that the target preferred pair of m-sequences includes a first m-sequence and a second m-sequence, then the first m-sequence is one of the m-sequences in the preferred pair of m-sequences, and the second m-sequence is the other m-sequence in the preferred pair of m-sequences.

The first signal is generated from two binary sequences, where one binary sequence is the first m-sequence, and the other binary sequence is the second m-sequence.

In some embodiments, the first signal includes two sub-signals, namely a first sub-signal and a second sub-signal. The sequence of the first sub-signal is generated based on the first m-sequence, and the sequence of the second sub-signal is generated based on the second m-sequence.

In some embodiments, the index of the first m-sequence is specified by a communication protocol, indicated by a network device, or determined according to a rule specified by a communication protocol. For example, the network device directly indicates the index of the first m-sequence, or indicates the index of a target Gold sequence family, or indicates the index of the target preferred pair of m-sequences, or indicates information used to determine the target Gold sequence family.

In some embodiments, the index of the second m-sequence is specified by a communication protocol, indicated by a network device, or determined according to a rule specified by a communication protocol. For example, the network device directly indicates the index of the second m-sequence, or indicates the index of a target Gold sequence family, or indicates the index of the target preferred pair of m-sequences, or indicates information used to determine the target Gold sequence family.

In some embodiments, the index of the preferred pair of m-sequences is specified by a communication protocol, indicated by a network device, or determined according to a rule specified by a communication protocol.

In some embodiments, the sequence element with index n₁ in the sequence of the first sub-signal is determined based on the sequence element with index a in the first m-sequence. This can also be understood as that the value of the n₁-th bit in the sequence of the first sub-signal is determined based on the value of the a-th bit in the first m-sequence.

In some embodiments, the sequence element with index n₂ in the sequence of the second sub-signal is determined based on the sequence element with index b in the second m-sequence. This can also be understood as that the value of the n₂-th bit in the sequence of the second sub-signal is determined based on the value of the b-th bit in the second m-sequence.

In some embodiments, a is determined based on at least one of the following: n₁, a parameter m₀, or a first length value, and b is determined based on at least one of the following: n₁, a parameter m₁, or a first length value. Here, the parameter m₀ represents the cyclic shift offset of the first m-sequence when used to generate the first sub-signal, and the parameter m₁ represents the cyclic shift offset of the second m-sequence when used to generate the second sub-signal.

The first length value is the length of the first m-sequence, which is also the length of the second m-sequence. The n is greater than or equal to 0 and less than the first length value.

In some embodiments, a is determined based on a first modulo result. The first modulo result is the modulo result of a first sum value and the first length value. The first sum value is the sum of n₁ and the parameter m₀.

In some embodiments, b is determined based on a second modulo result. The second modulo result is the modulo result of a second sum value and the first length value. The second sum value is the sum of n₁ and parameter m₁.

In some embodiments, the sequence element with index n₁ in the sequence of the first sub-signal is a first difference, which can also be understood as that the value of the n₁-th bit in the sequence of the first sub-signal is equal to the first difference. The first difference is the difference between the value 1 and a second product, and the second product is the product of the value 2 and the sequence element with index a in the first m-sequence.

In some embodiments, the sequence element with index n₂ in the sequence of the second sub-signal is a second difference, which can also be understood as that the value of the n₂-th bit in the sequence of the second sub-signal is equal to the second difference. The second difference is the difference between the value 1 and a third product, and the third product is the product of the value 2 and the sequence element with index b in the second m-sequence.

For example, the sequence of the first sub-signal can be represented by Equation (11), and the sequence of the second sub-signal can be represented by Equation (12). In these equations, d_{SS1}(n₁) denotes the sequence of the first sub-signal, x₀(n) denotes the first m-sequence used to generate the sequence of the first sub-signal, d_{SS2}(n₂) denotes the sequence of the second sub-signal, x₀(n) denotes the second m-sequence used to generate the sequence of the second sub-signal. and L denotes the first length value. ${d}_{SS 1} \left({n}_{1}\right) = \left[1-2{x}_{0}\left(\left({n}_{1}+{m}_{0}\right)mod L\right)\right]$ (11) ${d}_{SS 2} \left({n}_{2}\right) = \left[1-2{x}_{1}\left(\left({n}_{1}+{m}_{1}\right)mod L\right)\right]$ (12)

Optionally, n₂ = n₁ + L, which means the indices of the first m-sequence and the second m-sequence are consecutive. Optionally, n₂ > n₁ + L, which means there is an index gap between the first m-sequence and the second m-sequence.

In some embodiments, Equation (11) and Equation (12) are applicable the case where the first signal is obtained through BPSK modulation.

In some embodiments, the sequence element with index n₁ in the sequence of the first sub-signal is the sequence element with index a in the first m-sequence, which can also be understood as that the value of the n₁-th bit in the sequence of the first sub-signal is equal to the value of the a-th bit in the first m-sequence.

In some embodiments, the sequence element with index n₂ in the sequence of the second sub-signal is the sequence element with index b in the second m-sequence, which can also be understood as that the value of the n₂-th bit in the sequence of the second sub-signal is equal to the value of the b-th bit in the second m-sequence.

For example, the sequence of the first sub-signal can be represented by Equation (13), and the sequence of the second sub-signal can be represented by Equation (14). In these equations, d_{SS1}(n₁) denotes the sequence of the first sub-signal, x₀(n) denotes the first m-sequence used to generate the sequence of the first sub-signal, d_{SS2}(n₂) denotes the sequence of the second sub-signal, x₁(n) denotes the second m-sequence used to generate the sequence of the second sub-signal, and L denotes the first length value. ${d}_{SS 1} \left({n}_{1}\right) = \left[{x}_{0}\left(\left({n}_{1}+{m}_{0}\right)mod L\right)\right]$ (13) ${d}_{SS 2} \left({n}_{2}\right) = \left[{x}_{1}\left(\left({n}_{1}+{m}_{1}\right)mod L\right)\right]$ (14)

Optionally, n₂ = n₁ + L, which means the indices of the first m-sequence and the second m-sequence are consecutive. Optionally, n₂ > n₁ + L, which means there is an index gap between the first m-sequence and the second m-sequence.

In some embodiments, Equation (13) and Equation (14) are applicable the case where the first signal is obtained through OOK modulation.

Referring to the embodiment shown in FIG. 11, parameter m₀ and parameter m₁ can be determined via Calculation Method 1 or via Calculation Method 2.

### Calculation Method 1:

In some embodiments, the parameter m₀ is determined based on the modulo result of the first sub-identity and a parameter G, and parameter m₁ is determined based on the modulo result of the second sub-identity and a parameter F.

In some embodiments, the parameter m₀ is equal to the modulo result of the first sub-identity and the parameter G, and the parameter m₁ is equal to the modulo result of the second sub-identity and the parameter F. That is, ${m}_{0} = {N}_{ID}^{\left(1\right)} mod G$, and ${m}_{1} = {N}_{ID}^{\left(2\right)} mod F$.

In some embodiments, parameter m₀ is equal to q₁ times the modulo result of the first sub-identity and the parameter G, and the parameter m₁ is equal to q₂ times the modulo result of the second sub-identity and the parameter F. That is, ${m}_{0} = {q}_{1} \left({N}_{ID}^{\left(1\right)} mod G\right)$, and ${m}_{1} = {q}_{2} {N}_{ID}^{\left(2\right)} mod F$, where q₁ is a positive integer, and q₂ is a positive integer.

Optionally, the parameter G is less than the first length value, i.e., G < L. Optionally, the parameter F is less than the first length value, i.e., F < L.

Optionally, the parameter m₀ is less than the first length value, i.e., m₀ < L. Optionally, the parameter m₁ is less than the first length value, i.e., m₁ < L.

In some embodiments, the parameter G and the parameter F are determined based on the total number S of cells in the communication system.

In some embodiments, assume that the total number of cells in the communication system is S, then the product of the parameter G and the parameter F is equal to S, i.e., G * F = S. This can also be understood as that the parameter G and the parameter F are both the divisors of S. For example, if S = 64, then G = 8 and F = 8; or G = 1 and F = 64; or G = 2 and F = 32; or G = 4 and F = 16; or G = 1 and F = 64; or G = 16 and F = 4; or G = 32 and F = 2; or G = 64 and F = 1.

In some embodiments, the sum of the parameter G and the parameter F is equal to S, i.e., G + F = S. Alternatively, an integer multiple of the product of the parameter G and the parameter F is equal to S, and so on.

In some embodiments, F = k, and $G = \left⌊S/k\right⌋$, where 1 ≤ k ≤ S.

### Calculation Method 2:

In some embodiments, the parameter m₀ is determined based on the first sub-identity and the second sub-identity, and the parameter m₁ is determined based on the first sub-identity.

In some embodiments, the parameter m₀ is determined based on the quotient of the first sub-identity and a parameter B, as well as the second sub-identity, while the parameter m₁ is based on the modulo result of the first sub-identity and the parameter B.

For example, ${m}_{0} = {f}_{1} \left⌊{N}_{ID}^{\left(1\right)}/B\right⌋ + {f}_{2} {N}_{ID}^{\left(2\right)}$ and ${m}_{1} = {N}_{ID}^{\left(1\right)} mod B$. Optionally, B is a positive integer, f₁ is a positive integer, and f₂ is a positive integer. Optionally, ${f}_{2} {N}_{ID}^{\left(2\right)} < {f}_{1}$. Optionally, B is less than the first length value, i.e., B < L.

Optionally, the parameter m₀ is less than the first length value, i.e., m₀ < L. Optionally, the parameter m₁ is less than the first length value, i.e., m₁ < L.

As can be seen from the equations above, a pair of a first sub-identity and a second sub-identity can be uniquely determined from the cell identity, and this pair of a first sub-identity and a second sub-identity in turn can be used to uniquely determine a pair of parameter m₀ and parameter m₁. After the target Gold sequence family is determined according to the methods described previously, a pair of a first m-sequence and a second m-sequence can be uniquely determined. When both the first m-sequence and parameter m₀ are uniquely determined, the sequence of the first sub-signal can be uniquely generated. Similarly, when both the second m-sequence and parameter m₁ are uniquely determined, the sequence of the second sub-signal can naturally be uniquely generated. Once the first sub-signal and the second sub-signal are uniquely determined, a one-to-one correspondence between the cell identity and the combination of the first and second sub-signals is established, which in turn establishes a one-to-one correspondence between the cell identity and the first signal, thereby supporting the terminal device in performing RRM measurement and synchronization for the corresponding cell based on the first signal.

Since the first sub-signal and the second sub-signal each carry a portion of the cell identity information, the combination of the first sub-signal and the second sub-signal is in a one-to-one correspondence with the cell identity.

As previously described, if there are S cell identities in the system, it is necessary to design S types of first signals to correspond with the S cells. If the previously mentioned scheme is used, where the first signal is generated from one Gold sequence or one m-sequence, it is evident that S Gold sequences or S m-sequences would be required. This would mean that the UE might need to perform S sequence detections.

However, in the embodiments of the present application, a first signal is generated from a combination of two m-sequences. Assuming the number of the first m-sequences is Z₁ and the number of the second m-sequences is Z₂, then as long as the condition Z₁ * Z₂=S is met, S types of first signals can be generated to have a one-to-one correspondence with S cells. Since there are only Z₁ first m-sequences and Z₂ second m-sequences, the UE needs to detect at most Z₁ + Z₂ sequences.

Taking S=1008 as an example, if Z₁ and Z₂ meet Z₁ * Z₂=S, then Z₁ and Z₂ are divisors of S. Assuming Z₁=3 and Z₂=336, the UE needs to perform at most 336+3=339 sequence detections, which is far fewer than 1008. This greatly reduces the number of detections and significantly lowers the power consumption of the UE.

Furthermore, based on mathematical principles, it can be understood that the closer the values of Z₁ and Z₂ are, the smaller the sum of Z₁ and Z₂ will be. For example, if Z₁=36 and Z₂=28, then the UE needs to perform at most 64 detections, which is far fewer than 339 and 1008. Therefore, in consideration of energy-saving effect, Z₁ and Z₂ can be designed with values that are close to each other, so as to significantly reduce the power consumption of the UE.

The values of Z₁ and Z₂ can be obtained from the parameter m₀ and the parameter m₁, respectively. Parameter m₀ and parameter m₁ denote the cyclic shift offsets of the first and second m-sequences when used to generate the first signal, respectively. Therefore, by designing parameter m₀ and parameter m₁, the number Z₁ of first m-sequences, and the number Z₂ of second m-sequences can be determined. Furthermore, parameter m₀ and parameter m₁ can be adjusted by one or more parameters such as G, F, B, q₁, q₂, f₁, and f₂. For details, please refer to Calculation Method 1 and Calculation Method 2 described above.

**Example** 1: There are following assumptions: the total number of cell IDs is S=1008, and the range of indices or numbers for these 1008 cells is from 0 to 1007; parameter G and parameter F are divisors of S, e.g., G = 56 and F = 18; n₂ = n₁ + L; the length of the sequence of the first sub-signal is equal to the length of the sequence of the second sub-signal, which are both denoted by L, L=63; k = 3; the cell identity corresponding to the first signal transmitted this time is ${N}_{ID}^{cell} = 30$; and the number M of preferred pairs of m-sequences is 2 (i.e., M=2) when the number of stages of the shift register is r. Under these assumptions, the index of the target Gold sequence family is equal to $\left⌊{N}_{ID}^{cell}/M\right⌋ = 15$, and the first m-sequence x₀(n) and the second m-sequence x₁(n) correspond to the Gold sequence family with index 15 among the M Gold sequence families.

According to ${N}_{ID}^{cell} = k ∗ {N}_{ID}^{\left(1\right)} + {N}_{ID}^{\left(2\right)} = 3 ∗ {N}_{ID}^{\left(1\right)} + {N}_{ID}^{\left(2\right)} = 30$, it can be obtained that ${N}_{ID}^{\left(1\right)} = 10$ and ${N}_{ID}^{\left(2\right)} = 0$.

Therefore, ${m}_{0} = {N}_{ID}^{\left(1\right)} mod 56 = 10$**,** and ${m}_{1} = {N}_{ID}^{\left(2\right)} mod 18 = 0$.

Then, d_{SS1}(n₁) = [x₀((n₁ + 10) mod 63)] , and d_{SS2}(n₂) = d_{SS2} (n₁ + 63) = [x₁((n₁ + 0) mod 63)], where 0 ≤ n₁ < 63.

**Example 2:** There are following assumptions: the total number of cell IDs is S=1008, and the range for the indices or numbers of these 1008 cells is 0 to 1007; parameter G and parameter F are divisors of S, e.g., G = 56, F = 18; q₁ = 2, and q₂ = 1; n₂ = n₁ + L; the length of the sequence of the first sub-signal is equal to the length of the sequence of the second sub-signal, which are both denoted by L, L=63; k = 3; and the cell identity corresponding to the first signal transmitted this time is ${N}_{ID}^{cell} = 31$.

According to ${N}_{ID}^{cell} = k ∗ {N}_{ID}^{\left(1\right)} + {N}_{ID}^{\left(2\right)} = 3 ∗ {N}_{ID}^{\left(1\right)} + {N}_{ID}^{\left(2\right)} = 31$, it can be obtained that ${N}_{ID}^{\left(1\right)} = 10$ and ${N}_{ID}^{\left(2\right)} = 1$.

Therefore, ${m}_{0} = {q}_{1} \left({N}_{ID}^{\left(1\right)} mod G\right) = 2 \left(10 mod 56\right) = 20$, and ${m}_{1} = {q}_{2} {N}_{ID}^{\left(2\right)} mod F = 1 ∗ 1 mod 18 = 1$ .

Then, d_{SS1}(n₁) = [x₀((n₁ + 20) mod 63)], and d_{SS2}(n₂) = d_{SS2}(n₁ + 63) = [x₁((n₁ + 1) mod 63)], where 0 ≤ n₁ < 63.

**Example 3:** There are following assumptions: the total number of cell IDs is S=1008, and the range of the indices or numbers for these 1008 cells is from 0 to 1007; n₂ = n₁ + L; the sequence of the first sub-signal is equal to the length of the sequence of the second sub-signal, which are both denoted by L, L=63; f₁ = 10, f₂ = 4, B = 20, and k = 3; and the cell identity corresponding to the first signal transmitted this time is ${N}_{ID}^{cell} = 112$.

According to ${N}_{ID}^{cell} = k ∗ {N}_{ID}^{\left(1\right)} + {N}_{ID}^{\left(2\right)} = 3 ∗ {N}_{ID}^{\left(1\right)} + {N}_{ID}^{\left(2\right)} = 112$, it can be obtained that ${N}_{ID}^{\left(1\right)} = 37$ and ${N}_{ID}^{\left(2\right)} = 1$.

Therefore, ${m}_{0} = {f}_{1} \left⌊{N}_{ID}^{\left(1\right)}/B\right⌋ + {f}_{2} {N}_{ID}^{\left(2\right)} = 10 ∗ \left⌊37/20\right⌋ + 4 ∗ 1 = 14$, and ${m}_{1} = {N}_{ID}^{\left(1\right)} mod B = 37 mod 20 = 17$ .

Then, d_{SS1}(n₁) = [x₀((n₁ + 14) mod 63)], and d_{SS2}(n₂) = d_{SS2}(n₁ + 63) = [x₁((n₁ + 17) mod 63)], where 0 ≤ n₁ < 63.

In some embodiments, the network device transmits at least one of the following information: the index of the Gold sequence, the index of the first m-sequence, the index of the second m-sequence, the index of a preferred pair of m-sequences, the index of an m-sequence, a cyclic shift step, the indexing order of m-sequences within an m-sequence set, or the index of an m-sequence subset.

In summary, based on m-sequences, the method provided in the embodiments of the present application offers a low-complexity and feasible solution for transmitting synchronization signals and measurement signals. Since m-sequences possess excellent autocorrelation and cross-correlation properties, the first signal generated from m-sequences retains these favorable properties, which helps improve the reliability and efficiency of downlink synchronization and RRM measurement. The design of generating the first signal from two m-sequences allows each of the two m-sequences to carry a portion of the cell identity information, which can significantly reduce the number of first signals that the terminal device needs to detect. Furthermore, by applying cyclic shifts to preferred pairs of m-sequences, a massive number of Gold sequences can be obtained, providing available Gold sequences for a large number of cells to generate the first signal. Moreover, generating the first signal from two binary sequences greatly reduces the complexity for the terminal device to detect the first signal, significantly decreases the number of detections for synchronization signals and measurement signals, and further achieves energy savings for the terminal device.

The first signal illustrated in FIGS. 11, 12 and 14 may be transmitted periodically or aperiodically.

In some embodiments, the network device transmits the first signal over a channel according to parameters such as the sequence, modulation scheme, sequence length, and cyclic shift offset of the first signal.

In some embodiments, if the length of a binary sequence is L, the modulated binary sequence corresponds to L modulation symbols.

In some embodiments, if the first signal is generated from two binary sequences, and the length of each binary sequence is L, then the two modulated binary sequences respectively correspond to L modulation symbols.

In some embodiments, the first signal is a time-domain signal. Optionally, the time-domain resources occupied by the first signal are continuous or discontinuous. This can also be interpreted as that the time-domain units occupied by the first signal are continuous time-domain units to which the modulated binary sequence is mapped, or discontinuous time-domain units to which the modulated binary sequence is mapped.

In the present application, a time-domain unit includes at least one of the following: a frame, a subframe, a slot, a mini-slot, a sub-slot, a symbol, a symbol group, or a time-domain unit based on other time-domain units.

As an example, in the embodiments illustrated in FIG. 11 and FIG. 12, when the length of the binary sequence is L, the modulated binary sequence is mapped to a set of continuous or discontinuous time-domain units. That is, L modulation symbols are mapped to a set of continuous or discontinuous time-domain units.

As an example, in the embodiment illustrated in FIG. 14, when the first signal is generated from two binary sequences, each with a length of L, the two modulated binary sequences are respectively mapped to two segments of time-domain resources, where each segment includes a set of time-domain units. That is, 2*L modulation symbols are mapped to two sets of time-domain units. Optionally, a time-domain gap may or may not exist between the two segments of time-domain resources. Optionally, each set of time-domain units can be continuous or discontinuous.

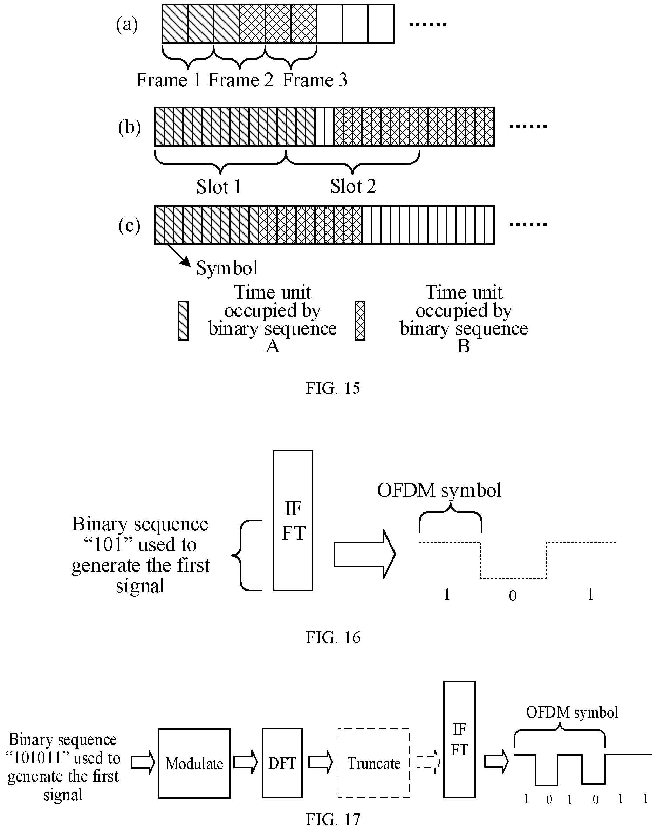

For example, the time-domain units occupied by the two segments of time-domain resources can be identical or partially overlapping. Taking a subframe as an example of a time-domain unit, the subframes corresponding to the two binary sequences in the time domain are the same or partially overlap, as shown in FIG. 15(a), where the time-domain resources occupied by both binary sequence A and binary sequence B include subframe 2. Taking a slot as an example of a time-domain unit, the slots corresponding to the two binary sequences in the time domain are the same or partially overlap, as shown in FIG. 15(b), where the time-domain resources occupied by both binary sequence A and binary sequence B include slot 3. Taking a symbol as an example of a time-domain unit, the symbols corresponding to the two binary sequences in the time domain are different, as shown in FIG. 15(c), where the symbols occupied by binary sequence A and binary sequence B are different.

As an example, the first signal is divided into multiple segments, with each segment occupying a segment of time-domain resources in the time domain. Optionally, a time-domain gap may or may not exist between the multiple segments of time-domain resources. Optionally, each segment of time-domain resources includes continuous or discontinuous time-domain units.

The modulation scheme for the first signal illustrated in FIG. 11, FIG. 12, and FIG. 14 includes at least one of the following: OOK modulation, PSK modulation, BPSK modulation, or FSK modulation.

Assuming the modulation scheme is PSK modulation, the sequence elements with values "1" and "0" in the first signal sequence correspond respectively to a phase continuity (+1) and a phase transition (0 or -1) in the PSK sequence. For example, a sequence element with a value of "1" in the first signal sequence corresponds to a phase continuity (+1) in the PSK sequence, and a sequence element with a value of "0" corresponds to a phase transition (0 or -1); alternatively, a sequence element with a value of "1" in the first signal sequence corresponds to a phase transition (0 or -1) in the PSK sequence, and a sequence element with a value of "0" in the first signal sequence corresponds to phase continuity (+1) in the PSK sequence.

Assuming the modulation scheme is BPSK modulation, the sequence elements with values "1" and "0" in the first signal sequence correspond respectively to a positive level (+1) and a negative level (-1) in the BPSK sequence. For example, a sequence element with a value of "1" in the first signal sequence corresponds to a positive level (+1) in the BPSK sequence, and a sequence element with a value of "0" in the first signal sequence corresponds to a negative level (-1) the BPSK sequence; alternatively, a sequence element with a value of "1" in the first signal sequence corresponds to a negative level (-1) the BPSK sequence, and a sequence element with a value of "0" in the first signal sequence corresponds to a positive level (+1) the BPSK sequence.

Assuming the modulation scheme is FSK modulation, the sequence elements with values "1" and "0" in the first signal sequence correspond respectively to two carrier frequencies of the FSK sequence. For example, a sequence element with a value of "1" in the first signal sequence corresponds to carrier frequency 1 of the FSK sequence, and a sequence element with a value of "0" in the first signal sequence corresponds to carrier frequency 0 of the FSK sequence; alternatively, a sequence element with a value of "1" in the first signal sequence corresponds to carrier frequency 0 of the FSK sequence, and a sequence element with a value of "0" in the first signal sequence corresponds to carrier frequency 1 of the FSK sequence.

Assuming the modulation scheme is OOK modulation, the sequence elements with values "1" and "0" in the first signal sequence correspond respectively to a high level and a low level in the OOK sequence. For example, a sequence element with a value of "1" in the first signal sequence corresponds to a high level in the OOK sequence, and a sequence element with a value of "0" in the first signal sequence corresponds to a low level in the OOK sequence; alternatively, a sequence element with a value of "1" in the first signal sequence corresponds to a low level in the OOK sequence, and a sequence element with a value of "0" in the first signal sequence corresponds to a high level in the OOK sequence.

In some embodiments, if a network device is equipped with an OFDM transmitter, or in a scenario where the first signal is transmitted in-band on an OFDM carrier, using an OFDM waveform to transmit the first signal can be considered.

Taking OOK modulation as an example, the first signal illustrated in FIG. 11, FIG. 12, and FIG. 14 may be a time-domain signal mapped based on the OOK-1 scheme, or it may be a time-domain signal mapped based on the OOK-4 scheme.

### OOK-1 Scheme:

Assume the sequence of the first signal is an OOK sequence obtained by modulating a binary sequence. When transmitting the OOK sequence using an OFDM transmitter, one OOK symbol is mapped onto one OFDM symbol. Mapping this OFDM symbol to all ones (or other non-zero values) in the frequency domain indicates the transmission of a high-level OOK signal on this OFDM symbol (where a high level can represent 1 or 0, depending on definition or specification). Mapping this OFDM symbol to all zeros in the frequency domain indicates the transmission of a low-level OOK signal on this OFDM symbol (where a low level can represent 0 or 1, depending on definition or specification).

As an example, as illustrated in FIG. 16, in the OOK-1 scheme, there is a one-to-one correspondence between OFDM symbols and OOK symbols. That is, each OFDM symbol carries 1 bit.

When mapping is performed using the OOK-1 scheme, if the length of the binary sequence is L, the modulated binary sequence is mapped to L OFDM symbols. That is, L OOK symbols are mapped to L OFDM symbols. These L OFDM symbols may be continuous or discontinuous.

### OOK-4 Scheme:

As illustrated in FIG. 17, assume the sequence of the first signal is an OOK sequence obtained by modulating a binary sequence, and the OOK sequence includes a total of M₁ bits. The M₁ bits are upsampled by a factor of k₁ to generate a sequence of length k₁M₁. This sequence undergoes a discrete Fourier transform (DFT) and is then mapped to k₁M₁ resource elements (REs). It is multiplexed in the frequency domain with other OFDM signals (if any), and then transformed to the time domain via an inverse discrete Fourier transform (IDFT), followed by filtering and shaping, and finally transmitted by a transmitter. It can be seen that in the OOK-4 scheme, M₁ OOK symbols can be mapped onto a single OFDM symbol, that is, each OFDM symbol carries M₁ bits.

When mapping is performed using the OOK-4 scheme, if the length of the binary sequence is L, the modulated binary sequence is mapped to $\left⌈L/{M}_{1}\right⌉$ OFDM symbols. That is, L OOK symbols are mapped to $\left⌈L/{M}_{1}\right⌉$ OFDM symbols, with each OFDM symbol carrying M₁ bits. These $\left⌈L/{M}_{1}\right⌉$ OFDM symbols may be continuous or discontinuous.

Furthermore, taking a slot including 14 symbols as an example, if $\left⌈L/{M}_{1}\right⌉ < 14$, then these $\left⌈L/{M}_{1}\right⌉$ OFDM symbols can be located within a single slot or across multiple different slots. Taking the case where $\left⌈L/{M}_{1}\right⌉$ OFDM symbols are located within a single slot as an example, these $\left⌈L/{M}_{1}\right⌉$ OFDM symbols may be the first $\left⌈L/{M}_{1}\right⌉$ symbols of a slot, the last $\left⌈L/{M}_{1}\right⌉$ symbols of a slot, the middle $\left⌈L/{M}_{1}\right⌉$ symbols of a slot, or $\left⌈L/{M}_{1}\right⌉$ discontinuous symbols in a slot.

Taking a slot including 14 symbols as an example, if $\left⌈L/{M}_{1}\right⌉ > 14$, then these $\left⌈L/{M}_{1}\right⌉$ OFDM symbols can be located in multiple different slots. These multiple different slots can belong to the same subframe or different subframes. These multiple slots may be adjacent or non-adjacent.

When mapping is performed using the OOK-4 scheme, if the first signal is generated from two binary sequences with lengths L₁ and L₂ respectively, then L₁ OOK symbols are mapped to $\left⌈{L}_{1}/{M}_{1}\right⌉$ OFDM symbols, and L₂ OOK symbols are mapped to $\left⌈{L}_{2}/{M}_{1}\right⌉$ OFDM symbols. A time-domain gap exists or does not exist between the $\left⌈{L}_{1}/{M}_{1}\right⌉$ OFDM symbols and the $\left⌈{L}_{2}/{M}_{1}\right⌉$ OFDM symbols. The $\left⌈{L}_{1}/{M}_{1}\right⌉$ OFDM symbols may be continuous or discontinuous, and the $\left⌈{L}_{2}/{M}_{1}\right⌉$ OFDM symbols may be continuous or discontinuous.

Furthermore, taking a slot including 14 symbols as an example, if $\left⌈{L}_{1}/{M}_{1}\right⌉ + \left⌈{L}_{2}/{M}_{1}\right⌉ < 14$, then these $\left⌈{L}_{1}/{M}_{1}\right⌉ + \left⌈{L}_{2}/{M}_{1}\right⌉$ OFDM symbols can be located within a single slot or across multiple different slots. Taking the case where $\left⌈{L}_{1}/{M}_{1}\right⌉ + \left⌈{L}_{2}/{M}_{1}\right⌉$ OFDM symbols are located within a single slot as an example, these $\left⌈{L}_{1}/{M}_{1}\right⌉ + \left⌈{L}_{2}/{M}_{1}\right⌉$ OFDM symbols may be the first $\left⌈{L}_{1}/{M}_{1}\right⌉ + \left⌈{L}_{2}/{M}_{1}\right⌉$ symbols of a slot, the last $\left⌈{L}_{1}/{M}_{1}\right⌉ + \left⌈{L}_{2}/{M}_{1}\right⌉$ symbols of a slot, the middle $\left⌈{L}_{1}/{M}_{1}\right⌉ + \left⌈{L}_{2}/{M}_{1}\right⌉$ symbols of a slot, or $\left⌈{L}_{1}/{M}_{1}\right⌉ + \left⌈{L}_{2}/{M}_{1}\right⌉$ discontinuous symbols in a slot.

Taking a slot including 14 symbols as an example, if $\left⌈{L}_{1}/{M}_{1}\right⌉ + \left⌈{L}_{2}/{M}_{1}\right⌉ > 14$, then these $\left⌈{L}_{1}/{M}_{1}\right⌉ + \left⌈{L}_{2}/{M}_{1}\right⌉$ OFDM symbols may be located in multiple different slots. These multiple different slots may belong to the same subframe or different subframes. These multiple slots may be adjacent or non-adjacent.

In some embodiments, the first signal illustrated in FIG. 11, FIG. 12, and FIG. 14 is a sequence undergoing scrambling processing.

In some embodiments, after the binary sequence is modulated, it is further scrambled to obtain the first signal. For example, the scrambling sequence is at least one of the following: a ZC sequence, a QPSK sequence, or a QAM sequence. For instance, a binary sequence is modulated to obtain an OOK sequence, and the OOK sequence is multiplied point-wise with a ZC sequence used for scrambling to obtain the first signal.

After scrambling, the spectrum or power spectrum can be flattened. The scrambling process can prevent the energy distribution of the first signal from concentrating in the center of the bandwidth, making the energy distribution of the first signal more uniform in the frequency domain, thereby providing better resistance against frequency-selective fading.

In some embodiments, the length of the binary sequence and the length of the scrambling sequence may be equal or unequal. If the length of the scrambling sequence is longer than that of the binary sequence, the scrambling sequence can be truncated for point-wise multiplication. If the length of the scrambling sequence is shorter than that of the binary sequence, the scrambling sequence can be repeated several times for point-wise multiplication.

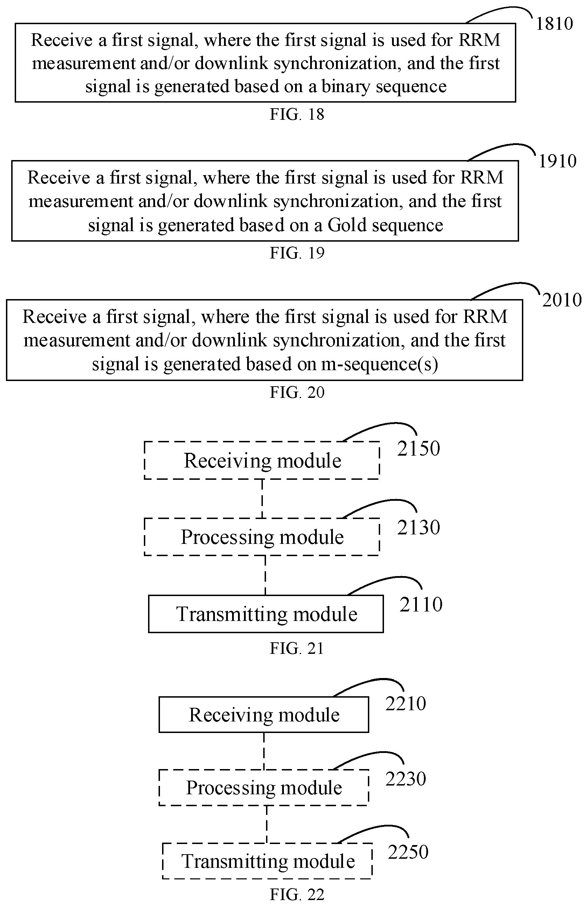

FIG. 18 is a schematic flowchart of a signal reception method provided by an exemplary embodiment of the present application, and the method is performed by a terminal device and includes the following step.

In **Step 1810**, receive a first signal, where the first signal is used for RRM measurement and/or downlink synchronization, and the first signal is generated based on a binary sequence.

The first signal may also be referred to as at least one of the following: a first measurement signal, a first reference signal, an LP-SS, or an LP-RS.

A binary sequence only includes sequence elements taking two distinct values; therefore, a sequence of the first signal also only includes sequence elements taking two distinct values. For example, the sequence of the first signal only includes "0"s and "1"s, or the sequence of the first signal only includes "+1"s and "-1"s.

In some embodiments, the first signal is generated based on at least one of the following: m-sequence(s), a Gold sequence, or a Walsh sequence.

In some embodiments, the modulation scheme for the first signal includes at least one of the following: OOK modulation, PSK modulation, BPSK modulation, or FSK modulation.

It should be noted that the types of binary sequences provided in the present application are not limited to m-sequences, Gold sequences, or Walsh sequences. Other binary sequences or other sequences with properties similar to binary sequences are also applicable to the methods provided in the embodiments of the present application.

The terminal device executing Step 1810 may be the terminal device 120 or terminal device 130 as shown in FIG. 1, the terminal device 140 belonging to low-power devices as shown in FIG. 2 (which may include a low-power receiver), the terminal device including a WUR as shown in FIG. 6, or a terminal device operating in the millimeter-wave frequency band, etc.

In summary, in the method provided by the embodiments of the present application, since the first signal is generated based on a binary sequence, it can be easily combined with non-OFDM waveforms such as OOK, PSK, and FSK waveforms. This provides a possibility of transmitting synchronization signals and measurement signals for communication scenarios where OFDM waveforms are difficult to adopt, thereby offering a new feasible solution for downlink synchronization and RRM measurement. If the receiver of the first signal is a low-power device or a terminal device including a WUR, then downlink synchronization and RRM measurement can be achieved while maintaining favorable characteristics of low complexity and low power consumption. If the receiver of the first signal is a terminal device operating in the millimeter-wave band, the first signal has advantages such as simple generation, easy implementation, and power saving. Combined with the high reliability and narrow beam characteristics of millimeter-wave transmission, the first signal can satisfy the requirements of downlink synchronization and RRM measurement in the millimeter-wave band .

FIG. 19 is a schematic flowchart of a signal reception method provided by an exemplary embodiment of the present application, and the method is performed by a terminal device and includes the following step.

In **Step 1910**, receive a first signal, where the first signal is used for RRM measurement and/or downlink synchronization, and the first signal is generated based on a Gold sequence.

For details regarding the Gold sequence and the first signal, refer to Step 1110, and the repeated description is omitted here.

It should be noted that to accurately receive and detect the first signal, the terminal device should also correspondingly determine the corresponding first signal for each cell. Specifically, due to factors such as oscillator mismatch, Doppler shift, and noise interference, deviations between the first signal transmitted from the transmitting end and the one arriving at the receiver inevitably occur in the time domain and frequency domain. To ensure a high accuracy of the detection result for the first signal, the terminal device needs to perform a correlation detection between the received first signal and a local version of the first signal to obtain timing information and/or frequency offset estimation results. Based on the timing information, the received first signal is calibrated in the time domain, and based on the frequency offset estimation results, the received first signal is calibrated in the frequency domain, thereby facilitating accurate detection. The local first signal required for this detection process should be generated by the terminal device itself.

The method for generating the first signal based on a Gold sequence, as illustrated in FIG. 11, is also applicable to the terminal device. That is, the network device and the terminal device should respectively determine the Gold sequence used to generate the first signal.

Regardless of whether the methods used by the network device and the terminal device to determine the first signal corresponding to the same cell are identical, the first signal generated by the network device and the terminal device for the same cell should be the same. This ensures that after receiving the first signal, the terminal device can clearly identify which cell the first signal corresponds to.

In some embodiments, the terminal device determines the index of the target Gold sequence family based on at least one of the following: cell identity, I_{SS}, the first initial value e, Q, or the indexing order of M Gold sequence families.

In some embodiments, the terminal device determines the indexing order of M Gold sequence families based on at least one of the following: the index of the preferred pair of m-sequences, the number r of stages, the number of Gold sequences in a Gold sequence family, the length of Gold sequences in a Gold sequence family, the index of the Gold sequence family, the index of Gold sequences in a Gold sequence family, the index of the corresponding m-sequence, the indexing order of the corresponding m-sequences, the corresponding primitive polynomial coefficients, the binary numbers of the corresponding primitive polynomial coefficients, or the cyclic shift offset.

In some embodiments, the terminal device determines the parameter m₀, that is, the cyclic shift offset of the first m-sequence when used to generate the target Gold sequence.

In some embodiments, the terminal device determines the parameter m₁, that is, the cyclic shift offset of the second m-sequence when used to generate the target Gold sequence.

In some embodiments, the terminal device receives at least one of the following: the index of the Gold sequence, the index of the first m-sequence, the index of the second m-sequence, the index of the preferred pair of m-sequences, the index of the m-sequence, the cyclic shift step, the indexing order of m-sequences in the m-sequence set, or the index of the m-sequence subset.

In summary, based on Gold sequences, the method provided in the embodiments of the present application offers a low-complexity and feasible solution for receiving synchronization signals and measurement signals. Since Gold sequences possess good autocorrelation and cross-correlation properties, the first signal generated from Gold sequences retains these favorable properties, which helps improve the reliability and efficiency of downlink synchronization and RRM measurement.

Furthermore, by applying cyclic shifts to preferred pairs of m-sequences, a massive number of Gold sequences can be obtained, providing available Gold sequences for a large number of cells to generate the first signal.

FIG. 20 is a schematic flowchart of a signal reception method provided by an exemplary embodiment of the present application, and the method is performed by a terminal device and includes the following step.

In **Step 2010**, receive a first signal, where the first signal is used for RRM measurement and/or downlink synchronization, and the first signal is generated based on m-sequence(s).

For details regarding the m-sequence(s) and the first signal, refer to Step 1210 and Step 1410, and the repeated description is omitted here.

It should be noted that to accurately receive and detect the first signal, the terminal device should also correspondingly determine the corresponding first signal for each cell. The reasons for this can be referred to in Step 1910 and are not repeated here.

The method for generating the first signal based on an m-sequence, as illustrated in FIGS. 12 and 14, is also applicable to the terminal device. That is, the network device and the terminal device should respectively determine the m-sequence used to generate the first signal.

Regardless of whether the methods used by the network device and the terminal device to determine the first signal corresponding to the same cell are identical, the first signal generated by the network device and the terminal device for the same cell should be the same. This ensures that after receiving the first signal, the terminal device can clearly identify which cell the first signal corresponds to.

In some embodiments, the terminal device determines the index of the target Gold sequence family based on at least one of the following: cell identity, I_{SS}, the first initial value e, Q, or the indexing order of M Gold sequence families.

In some embodiments, the terminal device determines the number of m-sequences in the m-sequence set based on the number of stages of the shift register.

In some embodiments, the terminal device determines the indexing order of the m-sequences in the m-sequence set.

In some embodiments, the terminal device determines the target m-sequence based on the cell identity.

In some embodiments, the terminal device receives at least one of the following: the index of the Gold sequence, the index of the first m-sequence, the index of the second m-sequence, the index of the preferred pair of m-sequences, the index of the m-sequence, the cyclic shift step, the indexing order of m-sequences in the m-sequence set, or the index of the m-sequence subset.

In summary, based on m-sequences, the method provided in the embodiments of the present application offers a low-complexity and feasible solution for transmitting synchronization signals and measurement signals. Because m-sequences have favorable autocorrelation and cross-correlation properties, the first signal generated from a Gold sequence also retains these favorable properties, which contributes to improving the reliability and efficiency of downlink synchronization and RRM measurement. Furthermore, by constructing an m-sequence set, a massive number of m-sequences can be obtained, providing available m-sequences for a large number of cells to generate the first signal.

FIG. 21 is a block schematic diagram of a signal transmission apparatus provided by an exemplary embodiment of the present application. The apparatus can be implemented as the network device shown in FIG. 10, FIG. 11, FIG. 12, or FIG. 14, or as a part of the network device shown in FIG. 10, FIG. 11, FIG. 12, or FIG. 14. The apparatus includes a transmitting module 2110. Optionally, the apparatus further includes a processing module 2130 and/or a receiving module 2150.

The transmitting module 2110 is configured to transmit a first signal, where the first signal is generated based on a binary sequence, and the first signal is used for radio resource management (RRM) measurement and/or downlink synchronization.

In some embodiments, the binary sequence is associated with a cell identity.

In some embodiments, the binary sequence includes a Gold sequence, and different cell identities correspond to different Gold sequences.

In some embodiments, the sequence element indexed by n in the Gold sequence is determined based on the sequence element indexed by a in a first m-sequence and the sequence element indexed by b in a second m-sequence; where the first m-sequence is one m-sequence in a preferred pair of m-sequences, and the second m-sequence is the other m-sequence in the preferred pair of m-sequences.

In some embodiments, the apparatus further includes a processing module 2130, which is configured to determine the sequence element indexed by n in the Gold sequence.

In some embodiments, the sequence element indexed by n in the Gold sequence is a first product, which is the product of a first difference and a second difference; where the first difference is the difference between a value 1 and a second product, and the second product is the product of a value 2 and the sequence element indexed by a in the first m-sequence; the second difference is the difference between the value 1 and a third product, and the third product is the product of the value 2 and the sequence element indexed by b in the second m-sequence.

In some embodiments, the sequence element indexed by n in the Gold sequence is the modulo-2 result of the sum of the sequence element indexed by a in the first m-sequence and the sequence element indexed by b in the second m-sequence.

In some embodiments, a is determined based on at least one of the following: n, a parameter m₀, or a first length value; b is determined based on at least one of the following: n, a parameter m₁, or the first length value; where n is greater than or equal to 0 and less than the first length value, the first length value is the length of the first m-sequence and the second m-sequence, the parameter m₀ represents the cyclic shift offset of the first m-sequence when used to generate the Gold sequence, and parameter m₁ represents the cyclic shift offset of the second m-sequence when used to generate the Gold sequence.

In some embodiments, a is determined based on a first modulo result, where the second modulo result is the modulo result of a first sum value and the first length value, and the first sum value is the sum of n and the parameter m₀; b is determined based on a second modulo result, where the second modulo result is the modulo result of a second sum value and the first length value, and the second sum value is the sum of n and the parameter m₁.

In some embodiments, the index of the first m-sequence is specified by a communication protocol, indicated by the network device, or determined according to a rule specified by a communication protocol; the index of the second m-sequence is specified by a communication protocol, indicated by the network device, or determined according to a rule specified by a communication protocol.

In some embodiments, the processing module 2130 is further configured to determine a and/or b.

In some embodiments, the Gold sequence is a first Gold sequence, and the first Gold sequence is obtained by modulo-2 addition of a first m-sequence and a cyclically shifted sequence of a second m-sequence, where the first m-sequence and the second m-sequence form a preferred pair of m-sequences.

In some embodiments, the processing module 2130 is further configured to perform cyclic shifts.

In some embodiments, the Gold sequence is a second Gold sequence, and the second Gold sequence is obtained by modulo-2 addition of a cyclically shifted sequence of a first m-sequence and a cyclically shifted sequence of a second m-sequence, where the first m-sequence and the second m-sequence form a preferred pair of m-sequences.

In some embodiments, the Gold sequence is a third Gold sequence, and the third Gold sequence is obtained by performing cyclic shifts on a first Gold sequence, where the first Gold sequence is obtained by modulo-2 addition of a first m-sequence and a cyclically shifted sequence of a second m-sequence, and the first m-sequence and the second m-sequence form a preferred pair of m-sequences.

In some embodiments, the binary sequence includes m-sequence(s), and different cell identities correspond to different m-sequences.

In some embodiments, the m-sequence(s) include two m-sequences from an m-sequence set, and the two m-sequences includes a first m-sequence and a second m-sequence; where the first m-sequence is one m-sequence in a preferred pair of m-sequences, and the second m-sequence is the other m-sequence in the preferred pair of m-sequences.

In some embodiments, the first signal includes a first sub-signal and a second sub-signal, where the first sub-signal is generated based on the first m-sequence, and the second sub-signal is generated based on the second m-sequence.

In some embodiments, the sequence element indexed by n₁ in the sequence of the first sub-signal is determined based on the sequence element indexed by a in the first m-sequence; the sequence element indexed by n₂ in the sequence of the second sub-signal is determined based on the sequence element indexed by b in the second m-sequence.

In some embodiments, the processing module 2130 is further configured to determine the sequence element indexed by n₁ in the sequence of the first sub-signal, and/or, the sequence element indexed by n₂ in the sequence of the second sub-signal.

In some embodiments, the sequence element indexed by n₁ in the sequence of the first sub-signal is a first difference, and the sequence element indexed by n₂ in the sequence of the second sub-signal is a second difference; where the first difference is the difference between the value 1 and a second product, and the second product is the product of the value 2 and the sequence element indexed by a in the first m-sequence; the second difference is the difference between the value 1 and a third product, and the third product is the product of the value 2 and the sequence element indexed by b in the second m-sequence.

In some embodiments, the binary sequence includes m-sequences, and the indices of the m-sequences are specified by a communication protocol, indicated by the network device, or determined according to a rule specified by a communication protocol.

In some embodiments, the index of the preferred pair of m-sequences is specified by a communication protocol, indicated by the network device, or determined according to a rule specified by a communication protocol.

In some embodiments, a is determined based on at least one of the following: n₁, a parameter m₀, or a first length value; b is determined based on at least one of the following: n₁, a parameter m₁, or the first length value; where n is greater than or equal to 0 and less than the first length value, the first length value is the length value of the first m-sequence and the second m-sequence, the parameter m₀ represents the cyclic shift offset of the first m-sequence when used to generate the sequence of the first sub-signal, and the parameter m₁ represents the cyclic shift offset of the second m-sequence when used to generate the sequence of the first sub-signal.

In some embodiments, the parameter m₀ is determined based on a first sub-identity, and the parameter m₁ is determined based on a second sub-identity; or, the parameter m₀ is determined based on the second sub-identity, and the parameter m₁ is determined based on the first sub-identity; or, the parameter m₀ is determined based on the first sub-identity and the second sub-identity, and the parameter m₁ is determined based on the first sub-identity; or, the parameter m₀ is determined based on the first sub-identity, and the parameter m₁ is determined based on the first sub-identity and the second sub-identity.

In some embodiments, the processing module 2130 is further configured to determine the parameter m₀ and/or the parameter m₁.

In some embodiments, the first sub-identity and the second sub-identity are determined based on a cell identity and/or a cyclic shift step.

In some embodiments, the processing module 2130 is further configured to determine the first sub-identity and/or the second sub-identity.

In some embodiments, the parameter m₀ is determined based on a modulo result of the first sub-identity and a parameter G, and the parameter m₁ is determined based on a modulo result of the second sub-identity and a parameter F; or, the parameter m₁ is determined based on a modulo result of the first sub-identity and a parameter G, and the parameter m₀ is determined based on a modulo result of the second sub-identity and a parameter F.

In some embodiments, the parameter m₀ is determined based on the quotient of the first sub-identity and a parameter B, as well as the second sub-identity, and the parameter m₁ is determined based on the modulo result of the first sub-identity and the parameter B; or, the parameter m₁ is determined based on the quotient of the first sub-identity and a parameter B, as well as the second sub-identity, and the parameter m₀ is determined based on the modulo result of the first sub-identity and the parameter B; where the parameter B is less than the first length value.

In some embodiments, the parameter m₀ is less than or equal to the first length value, and the parameter m₁ is less than or equal to the first length value.

In some embodiments, the m-sequence(s) is an m-sequence in an m-sequence subset, and the index of the m-sequence in the m-sequence subset is determined based on a cell identity; where m-sequences in the m-sequence subset are in a one-to-one correspondence with cell identities in a communication system.

In some embodiments, the index of the m-sequence in the m-sequence set is equal to the cell identity.

In some embodiments, the number of m-sequences in the m-sequence set is determined based on the number of stages of a shift register and/or a cyclic shift step.

In some embodiments, the indexing order of m-sequences in the m-sequence set is specified by a communication protocol, or is indicated by the network device, or is a default order, or is determined by a terminal device.

In some embodiments, the indexing order of the m-sequences in the m-sequence set is determined according to one of the following orders: an order of primitive polynomial coefficients from highest power to lowest power, an order of primitive polynomial coefficients from lowest power to highest power, an ascending order of binary numbers of primitive polynomial coefficients, a descending order of binary numbers of primitive polynomial coefficients, an ascending order of cyclic shift offsets, or a descending order of cyclic shift offsets.

In some embodiments, cyclically shifted sequences in the m-sequence set are arranged after their corresponding basic m-sequences in ascending order of cyclic shift offset; or, cyclically shifted sequences in the m-sequence set are arranged after their corresponding basic m-sequences in descending order of cyclic shift offset; or, all cyclically shifted sequences in the m-sequence set are arranged after all basic m-sequences in ascending order of cyclic shift offset; or, all cyclically shifted sequences in the m-sequence set are arranged after all basic m-sequences in descending order of cyclic shift offset.

In some embodiments, the time-domain resources occupied by the first signal are continuous or discontinuous.

In some embodiments, the time-domain resources occupied by the first signal include at least two groups of time-domain units, where a time-domain gap exist or does not exist between the at least two groups of time-domain units, and each group of the at least two groups of time-domain units is continuous or discontinuous.

In some embodiments, the first signal is obtained by performing a first modulation on the binary sequence, and the first modulation includes one of the following: OOK modulation, PSK modulation, BPSK modulation, or FSK modulation.

In some embodiments, one first modulation symbol is mapped to a first time-domain unit, or multiple first modulation symbols are mapped to a first time-domain unit; where the first time-domain unit is a time-domain unit occupied by the first signal, and the first modulation symbol is a modulation symbol of the first modulation.

In some embodiments, the first signal is obtained by performing scrambling processing on the binary sequence; where the sequence used for the scrambling processing includes at least one of the following: a ZC sequence, a QPSK sequence, or a QAM sequence.

In some embodiments, the transmitting module 2110 is further configured to transmit at least one of the following information: an index of a Gold sequence, an index of a first m-sequence, an index of a second m-sequence, an index of a preferred pair of m-sequences, an index of an m-sequence, a cyclic shift step, an indexing order of m-sequences in an m-sequence set, and an index of an m-sequence subset.

In some embodiments, the processing module 2130 is further configured to perform at least one of the following steps: modulation, scrambling, or mapping.

In some embodiments, the apparatus further includes a receiving module 2150, which is configured to receive signals and/or data transmitted by a terminal device. For example, the receiving module 2150 is configured to receive signals and/or data transmitted by the terminal device based on a synchronization result of the first signal. For example, the receiving module 2150 is configured to receive RRM measurement results reported by the terminal device.

In summary, the apparatus provided in the embodiments of the present application offers a feasible and low-complexity solution for transmitting synchronization signals and measurement signals by using Gold sequences and m-sequences. Since Gold sequences and m-sequences possess favorable auto-correlation and cross-correlation properties, the first signal generated from Gold sequences and m-sequences also retains these properties, which contributes to improving the reliability and efficiency of downlink synchronization and RRM measurement. Furthermore, a massive number of Gold sequences and m-sequences can be obtained through cyclic shifts, providing a large volume of available Gold sequences and m-sequences for a massive number of cells to generate the first signal.

FIG. 22 shows a block schematic diagram of a signal reception apparatus provided by an exemplary embodiment of the present application. The apparatus can be implemented as the terminal device shown in FIG. 18, FIG. 19, or FIG. 20, or implemented as a part of the terminal device shown in FIG. 18, FIG. 19, or FIG. 20. The apparatus includes a receiving module 2210. Optionally, the apparatus further includes a processing module 2230 and/or a transmitting module 2250.

The receiving module 2210 is configured to receive a first signal, where the first signal is generated based on a binary sequence, and the first signal is used for radio resource management (RRM) measurement and/or downlink synchronization.

In some embodiments, the binary sequence is associated with a cell identity.

In some embodiments, the binary sequence includes a Gold sequence, and different cell identities correspond to different Gold sequences.

In some embodiments, a sequence element indexed n in the Gold sequence is determined based on a sequence element indexed a in a first m-sequence and a sequence element indexed b in a second m-sequence; where the first m-sequence is one m-sequence in a preferred pair of m-sequences, and the second m-sequence is the other m-sequence in the preferred pair of m-sequences.

In some embodiments, the apparatus further includes a processing module 2230 configured to determine the sequence element indexed n in the Gold sequence.

In some embodiments, the sequence element indexed n in the Gold sequence is a first product, which is the product of a first difference and a second difference; where the first difference is the difference between the value 1 and a second product, and the second product is the product of the value 2 and the sequence element indexed a in the first m-sequence; and the second difference is the difference between the value 1 and a third product, and the third product is the product of the value 2 and the sequence element indexed b in the second m-sequence.

In some embodiments, the sequence element indexed n in the Gold sequence is the modulo-2 result of the sum of the sequence element indexed a in the first m-sequence and the sequence element indexed b in the second m-sequence.

In some embodiments, a is determined based on at least one of the following: n, a parameter m₀, or a first length value; b is determined based on at least one of the following: n, a parameter m₁, or the first length value; where n is greater than or equal to 0 and less than the first length value, the first length value is the length of the first m-sequence and the second m-sequence, the parameter m₀ represents the cyclic shift offset of the first m-sequence when used to generate the Gold sequence, and the parameter m₁ represents the cyclic shift offset of the second m-sequence when used to generate the Gold sequence.

In some embodiments, a is determined based on a first modulo result, where the second modulo result is the modulo result of a first sum value and the first length value, and the first sum value is the sum of n and the parameter m₀; b is determined based on a second modulo result, where the second modulo result is the modulo result of a second sum value and the first length value, and the second sum value is the sum of n and the parameter m₁.

In some embodiments, the index of the first m-sequence is specified by a communication protocol, indicated by a network device, or determined according to a rule specified by a communication protocol; and the index of the second m-sequence is specified by a communication protocol, indicated by a network device, or determined according to a rule specified by a communication protocol.

In some embodiments, the processing module 2230 is further configured to determine the a and/or the b.

In some embodiments, the Gold sequence is a first Gold sequence, and the first Gold sequence is obtained by modulo-2 addition of a first m-sequence and a cyclically shifted sequence of a second m-sequence, where the first m-sequence and the second m-sequence form a preferred pair of m-sequences.

In some embodiments, the processing module 2230 is further configured to perform cyclic shifts.

In some embodiments, the Gold sequence is a second Gold sequence, and the second Gold sequence is obtained by modulo-2 addition of a cyclically shifted sequence of a first m-sequence and a cyclically shifted sequence of a second m-sequence, where the first m-sequence and the second m-sequence form a preferred pair of m-sequences.

In some embodiments, the Gold sequence is a third Gold sequence, and the third Gold sequence is obtained by performing cyclic shifts on a first Gold sequence, where the first Gold sequence is obtained by modulo-2 addition of a first m-sequence and a cyclically shifted sequence of a second m-sequence, and the first m-sequence and the second m-sequence form a preferred pair of m-sequences.

In some embodiments, the binary sequence includes m-sequence(s), and different cell identities correspond to different m-sequences.

In some embodiments, the m-sequence(s) include two m-sequences from an m-sequence set, where the two m-sequences include a first m-sequence and a second m-sequence, the first m-sequence is one m-sequence in a preferred pair of m-sequences, and the second m-sequence is the other m-sequence in the preferred pair of m-sequences.

In some embodiments, the first signal includes a first sub-signal and a second sub-signal, where the first sub-signal is generated based on the first m-sequence, and the second sub-signal is generated based on the second m-sequence.

In some embodiments, a sequence element indexed n₁ in a sequence of the first sub-signal is determined based on a sequence element indexed a in the first m-sequence; a sequence element indexed n₂ in a sequence of the second sub-signal is determined based on a sequence element indexed b in the second m-sequence.

In some embodiments, the processing module 2230 is further configured to determine the sequence element indexed n₁ in the sequence of the first sub-signal and/or the sequence element indexed n₂ in the sequence of the second sub-signal.

In some embodiments, the sequence element indexed n₁ in the sequence of the first sub-signal is a first difference, and the sequence element indexed n₂ in the sequence of the second sub-signal is a second difference; where the first difference is the difference between the value 1 and a second product, and the second product is the product of the value 2 and the sequence element indexed a in the first m-sequence; and the second difference is the difference between the value 1 and a third product, and the third product is the product of the value 2 and the sequence element indexed b in the second m-sequence.

In some embodiments, the binary sequence includes m-sequences, and the indices of the m-sequences are specified by a communication protocol, indicated by a network device, or determined according to a rule specified bya communication protocol.

In some embodiments, the index of the preferred pair of m-sequences is specified by a communication protocol, indicated by a network device, or determined according to a rule specified by a communication protocol.

In some embodiments, a is determined based on at least one of the following: n₁, a parameter m₀, or a first length value; b is determined based on at least one of the following: n₁, a parameter m₁, or the first length value; where n is greater than or equal to 0 and less than the first length value, the first length value is the length of the first m-sequence and the second m-sequence, the parameter m₀ represents the cyclic shift offset of the first m-sequence when used to generate the sequence of the first sub-signal, and the parameter m₁ represents the cyclic shift offset of the second m-sequence when used to generate the sequence of the first sub-signal.

In some embodiments, the parameter m₀ is determined based on a first sub-identity, and the parameter m₁ is determined based on a second sub-identity; or, the parameter m₀ is determined based on the second sub-identity, and the parameter m₁ is determined based on the first sub-identity; or, the parameter m₀ is determined based on the first sub-identity and the second sub-identity, and the parameter m₁ is determined based on the first sub-identity; or, the parameter m₀ is determined based on the first sub-identity, and the parameter m₁ is determined based on the first sub-identity and the second sub-identity.

In some embodiments, the processing module 2230 is further configured to determine the parameter m₀ and/or the parameter m₁.

In some embodiments, the first sub-identity and the second sub-identity are determined based on a cell identity and/or a cyclic shift step.

In some embodiments, the processing module 2230 is further configured to determine the first sub-identity and/or the second sub-identity

In some embodiments, the parameter m₀ is determined based on a modulo result of the first sub-identity and a parameter G, and the parameter m₁ is determined based on a modulo result of the second sub-identity and a parameter F; or, the parameter m₁ is determined based on a modulo result of the first sub-identity and the parameter G, and the parameter m₀ is determined based on a modulo result of the second sub-identity and the parameter F.

In some embodiments, the parameter m₀ is determined based on the second sub-identity and the quotient of the first sub-identity and a parameter B, and the parameter m₁ is determined based on the modulo result of the first sub-identity and the parameter B; or, the parameter m₁ is determined based on the second sub-identity and the quotient of the first sub-identity and the parameter B, and the parameter m₀ is determined based on the modulo result of the first sub-identity and the parameter B; where the parameter B is less than the first length value.

In some embodiments, the parameter m₀ is less than or equal to the first length value, and the parameter m₁ is less than or equal to the first length value.

In some embodiments, the m-sequence(s) is an m-sequence from an m-sequence subset, and the index of the m-sequence in the m-sequence subset is determined based on a cell identity; where m-sequences in the m-sequence subset are in a one-to-one correspondence with identities in a communication system.

In some embodiments, the index of the m-sequence in the m-sequence set is equal to the cell identity.

In some embodiments, the number of m-sequences in the m-sequence set is determined based on the number of stages of a shift register and/or a cyclic shift step.

In some embodiments, the indexing order of m-sequences in the m-sequence set is specified by a communication protocol, or is indicated by a network device, or is a default order, or is determined by the terminal device.

In some embodiments, the indexing order of the m-sequences in the m-sequence set is determined according to one of the following orders: an order of primitive polynomial coefficients from highest power to lowest power, an order of primitive polynomial coefficients from lowest power to highest power, an an ascending order of binary numbers of primitive polynomial coefficients, a descending order of binary numbers of primitive polynomial coefficients, an ascending order of cyclic shift offsets, or a descending order of cyclic shift offsets.

In some embodiments, cyclically shifted sequences in the m-sequence set are arranged after their corresponding basic m-sequences in ascending order of cyclic shift offset; or, cyclically shifted sequences in the m-sequence set are arranged after their corresponding basic m-sequences in descending order of cyclic shift offset; or, all cyclically shifted sequences in the m-sequence set are arranged after all basic m-sequences in ascending order of cyclic shift offset; or, all cyclically shifted sequences in the m-sequence set are arranged after all basic m-sequences in descending order of cyclic shift offset.

In some embodiments, the time-domain resources occupied by the first signal are continuous or discontinuous.

In some embodiments, the time-domain resources occupied by the first signal include at least two groups of time-domain units, where a time-domain gap exists or does not exist between the at least two groups of time-domain units, and each group of the at least two groups of time-domain units is continuous or discontinuous.

In some embodiments, the first signal is obtained by performing a first modulation on the binary sequence,, where the first modulation includes one of the following: OOK modulation, PSK modulation, BPSK modulation, or FSK modulation.

In some embodiments, one first modulation symbol is mapped to a first time-domain unit, or multiple first modulation symbols are mapped to a first time-domain unit; where the first time-domain unit is a time-domain unit occupied by the first signal, and the first modulation symbol is a modulation symbol of the first modulation.

In some embodiments, the first signal is obtained by performing scrambling processing on the binary sequence; where the sequence used for the scrambling processing includes at least one of the following: a ZC sequence, a QPSK sequence, or a QAM sequence.

In some embodiments, the processing module 2230 is further configured to perform at least one of the following steps: modulation, scrambling, or mapping.

In some embodiments, the apparatus further includes a transmitting module 2250, which is configured to transmit signals and/or data to a network device. For example, the transmitting module 2250 is configured to transmit signals and/or data to the network device based on a synchronization result of the first signal. For example, the transmitting module 2250 is configured to report RRM measurement results to the network device.

In some embodiments, the receiving module 2210 is further configured to receive at least one of the following information: an index of a Gold sequence, an index of a first m-sequence, an index of a second m-sequence, an index of a preferred pair of m-sequences, an index of an m-sequence, a cyclic shift step, an indexing order of m-sequences in an m-sequence set, and an index of an m-sequence subset.

In summary, the apparatus provided in the embodiments of the present application offers a feasible and low-complexity solution for downlink synchronization and RRM measurement by using Gold sequences and m-sequences. Since Gold sequences and m-sequences possess favorable auto-correlation and cross-correlation properties, the first signal generated using Gold sequences and m-sequences also retains these properties, which contributes to improving the reliability and efficiency of downlink synchronization and RRM measurement. Furthermore, a massive number of Gold sequences and m-sequences can be obtained through cyclic shifts, providing a large volume of available Gold sequences and m-sequences for a massive number of cells to generate the first signal.

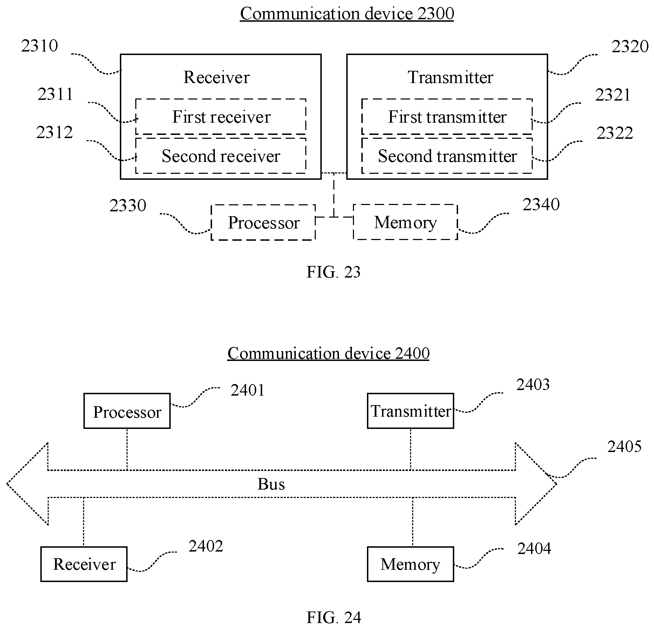

FIG. 23 shows a block schematic diagram of a communication device 2300 provided by an exemplary embodiment of the present application, which includes a receiver 2310 and a transmitter 2320. The communication device 2300 can be used to perform at least some of the steps performed by the terminal device shown in FIG. 18, FIG. 19, or FIG. 20.

The receiver 2310 and the transmitter 2320 can be implemented as a communication component, which may be a communication chip, and the communication component may be referred to as a transceiver.

In some embodiments, the receiver 2310 can be used to implement the functions and steps of the aforementioned receiving module 2210. Optionally, the receiver 2310 can be implemented as a first receiver 2311 and/or a second receiver 2312.

In some embodiments, the transmitter 2320 can be used to implement the functions and steps of the aforementioned transmitting module 2250. Optionally, the transmitter 2320 can be implemented as a first transmitter 2321 and/or a second transmitter 2322.

Optionally, the communication device 2300 may also include a processor 2330. The processor 2330 includes one or more processing cores, and executes various functional applications and information processing by running software programs and modules. Optionally, the processor 2330 can be used to implement the functions and steps of the aforementioned processing module 2230.

Optionally, the communication device 2300 may also include a memory 2340. The memory 2340 can be used to store at least one instruction, which is executed by the processor 2310 to implement the various steps in the foregoing method embodiments. In addition, the memory 2340 may be implemented by any type of volatile or non-volatile storage device or a combination thereof, including but not limited to: a magnetic disk or an optical disc, an electrically-erasable programmable read-only memory (EEPROM), an erasable programmable read-only memory (EPROM), a static random access memory (SRAM), a read-only memory (ROM), a magnetic memory, a flash memory, or a programmable read-only memory (PROM).

Optionally, the communication device 2300 may also include a bus (not shown in the figure). Optionally, the memory 2340 is connected to the processor 2330 via the bus.

In some embodiments, the receiver 2310 independently performs signal/data reception, or the processor 2330 controls the receiver 2310 to perform signal/data reception, or the processor 2330 requests the receiver 2310 to perform signal/data reception, or the processor 2330 cooperates with the receiver 2310 to perform signal/data reception.

In some embodiments, the transmitter 2320 independently performs signal/data transmission, or the processor 2330 controls the transmitter 2320 to perform signal/data transmission, or the processor 2330 requests the transmitter 2320 to perform signal/data transmission, or the processor 2330 cooperates with the transmitter 2320 to perform signal/data transmission.

In some embodiments, the first receiver 2311 is implemented as a wake-up receiver (WUR), and/or the second receiver 2312 is implemented as a main receiver.

In some embodiments, the receiver 2310 is implemented as a combined receiver of a WUR and a main receiver.

In some embodiments, the first transmitter 2321 is implemented as a main transmitter, and/or the second transmitter 2322 is implemented as a backscatter transmitter.

In some embodiments, the transmitter 2320 is implemented as a combined transmitter of a main transmitter and a backscatter transmitter.

In some embodiments, the processor 2330 and the receiver 2310 can be implemented as a single module, or the processor 2330 can be implemented as part of the receiver 2310.

In some embodiments, the processor 2330 and the transmitter 2320 can be implemented as a single module, or the processor 2330 can be implemented as part of the transmitter 2320.

In some embodiments, the communication device 2300 includes one or more processors 2330, and different processors are used to perform the same or different steps among the processing-related steps described above.

FIG. 24 shows a block schematic diagram of a communication device 2400 provided by an exemplary embodiment of the present application, which includes: a processor 2401, a receiver 2402, a transmitter 2403, a memory 2404, and a bus 2405. The communication device 2400 can be used to perform at least some of the steps performed by the terminal device shown in FIG. 18, FIG. 19, or FIG. 20, or can be used to perform at least some of the steps performed by the network device shown in FIG. 10, FIG. 11, FIG. 12, or FIG. 14.

The processor 2401 includes one or more processing cores, and executes various functional applications and information processing by running software programs and modules. In some embodiments, the processor 2401 can be used to implement the functions and steps of the aforementioned processing module 2130 and/or processing module 2230.

The receiver 2402 and the transmitter 2403 can be implemented as a communication component, which can be a communication chip, and this communication component can be referred to as a transceiver. In some embodiments, the receiver 2402 can be used to implement the functions and steps of the aforementioned receiving module 2150 and/or receiving module 2210, and the transmitter 2403 can be used to implement the functions and steps of the aforementioned transmitting module 2110 and/or transmitting module 2250.

The memory 2404 is connected to the processor 2401 via the bus 2405.

The memory 2404 can be used to store at least one instruction, which is executed by the processor 2401 to implement the various steps in the foregoing method embodiments.

In addition, the memory 2404 may be implemented by any type of volatile or non-volatile storage device or a combination thereof, including but not limited to: a magnetic disk or an optical disc, an EEPROM, an EPROM, an SRAM, a ROM, a magnetic memory, a flash memory, and a PROM.

In some embodiments, the receiver 2402 independently performs signal/data reception, or the processor 2401 controls the receiver 2402 to perform signal/data reception, or the processor 2401 requests the receiver 2402 to perform signal/data reception, or the processor 2401 cooperates with the receiver 2402 to perform signal/data reception.

In some embodiments, the transmitter 2403 independently performs signal/data transmission, or the processor 2401 controls the transmitter 2403 to perform signal/data transmission, or the processor 2401 requests the transmitter 2403 to perform signal/data transmission, or the processor 2401 cooperates with the transmitter 2403 to perform signal/data transmission.

In an exemplary embodiment of the present application, a computer-readable storage medium is also provided. The computer-readable storage medium stores at least one program segment, and the at least one program segment is loaded and executed by the processor to implement the signal transmission method provided in the foregoing method embodiments.

In an exemplary embodiment of the present application, a chip is also provided. The chip includes a programmable logic circuit and/or program instructions, and the chip is configured to, when running on a communication device, implement the signal transmission method provided in the foregoing method embodiments.

In an exemplary embodiment of the present application, a computer program product is also provided. When the computer program product runs on a processor of a computer device, it causes the computer device to execute the foregoing signal transmission method.

In an exemplary embodiment of the present application, a computer program is also provided. The computer program includes computer instructions, and a processor of a computer device executes the computer instructions to cause the computer device to execute the foregoing signal transmission method.

A person of ordinary skill in the art can understand that all or some of the steps of the foregoing embodiments may be implemented by hardware, or by a program instructing relevant hardware. The program may be stored in a computer-readable storage medium. The aforementioned storage medium may be a read-only memory, a magnetic disk, an optical disc, or the like.

The foregoing descriptions are merely optional embodiments of the present application and are not intended to limit the present application. Any modifications, equivalent replacements, improvements, etc., made within the spirit and principles of the present application shall be included in the scope of protection of the present application.

## Claims

1. A signal transmission method, wherein the method is performed by a network device, and the method comprises:
transmitting a first signal, wherein the first signal is generated based on a binary sequence, and the first signal is used for radio resource management (RRM) measurement and/or downlink synchronization.

2. The method according to claim 1, wherein the binary sequence is associated with a cell identity.

3. The method according to claim 1 or 2, wherein the binary sequence comprises a Gold sequence, and different cell identities correspond to different Gold sequences.

4. The method according to claim 3, wherein a sequence element indexed by n in the Gold sequence is determined according to a sequence element indexed by a in a first m-sequence and a sequence element indexed by b in a second m-sequence; wherein the first m-sequence is one m-sequence in a preferred pair of m-sequences, and the second m-sequence is another m-sequence in the preferred pair of m-sequences.

5. The method according to claim 4, wherein the sequence element indexed by n in the Gold sequence is a first product, and the first product is a product of a first difference and a second difference; wherein the first difference is a difference between a value 1 and a second product, and the second product is a product of a value 2 and the sequence element indexed by a in the first m-sequence; and the second difference is a difference between the value 1 and a third product, and the third product is a product of the value 2 and the sequence element indexed by b in the second m-sequence.

6. The method according to claim 4, wherein the sequence element indexed by n in the Gold sequence is a modulo-2 result of a sum of the sequence element indexed by a in the first m-sequence and the sequence element indexed by b in the second m-sequence.

7. The method according to any one of claims 4 to 6, wherein the a is determined according to at least one of the n, a parameter m₀, or a first length value, and the b is determined according to at least one of the n, a parameter m₁, or the first length value; wherein the n is greater than or equal to 0 and less than the first length value, the first length value is a length value of the first m-sequence and the second m-sequence, the parameter m₀ represents a cyclic shift offset of the first m-sequence when used to generate the Gold sequence, and the parameter m₁ represents a cyclic shift offset of the second m-sequence when used to generate the Gold sequence.

8. The method according to claim 7, wherein the a is determined according to a first modulo result, the second modulo result is a modulo result of a first sum value and the first length value, and the first sum value is a sum of the n and the parameter m₀; and the b is determined according to a second modulo result, the second modulo result is a modulo result of a second sum value and the first length value, and the second sum value is a sum of the n and the parameter m₁.

9. The method according to any one of claims 4 to 8, wherein an index of the first m-sequence is specified by a communication protocol, or is indicated by the network device, or is determined according to a rule specified by a communication protocol; and an index of the second m-sequence is specified by a communication protocol, or is indicated by the network device, or is determined according to a rule specified by a communication protocol.

10. The method according to any one of claims 4 to 8, wherein an index of the preferred pair of m-sequences is specified by a communication protocol, or is indicated by the network device, or is determined according to a rule specified by a communication protocol.

11. The method according to any one of claims 3 to 10, wherein the Gold sequence is a first Gold sequence, the first Gold sequence is obtained by modulo-2 addition of a first m-sequence and a cyclically shifted sequence of a second m-sequence, and the first m-sequence and the second m-sequence form a preferred pair of m-sequences.

12. The method according to any one of claims 3 to 10, wherein the Gold sequence is a second Gold sequence, the second Gold sequence is obtained by modulo-2 addition of a cyclically shifted sequence of a first m-sequence and a cyclically shifted sequence of a second m-sequence, and the first m-sequence and the second m-sequence form a preferred pair of m-sequences.

13. The method according to any one of claims 3 to 10, wherein the Gold sequence is a third Gold sequence, the third Gold sequence is obtained by performing cyclic shifts on a first Gold sequence, the first Gold sequence is obtained by modulo-2 addition of a first m-sequence and a cyclically shifted sequence of a second m-sequence, and the first m-sequence and the second m-sequence form a preferred pair of m-sequences.

14. The method according to claim 1 or 2, wherein the binary sequence comprises m-sequence(s), and different cell identities correspond to different m-sequences.

15. The method according to claim 14, wherein the m-sequence(s) comprise two m-sequences from an m-sequence set, the two m-sequences comprise a first m-sequence and a second m-sequence, the first m-sequence is one m-sequence in a preferred pair of m-sequences, and the second m-sequence is another m-sequence in the preferred pair of m-sequences.

16. The method according to claim 15, wherein the first signal comprises a first sub-signal and a second sub-signal, the first sub-signal is generated based on the first m-sequence, and the second sub-signal is generated based on the second m-sequence.

17. The method according to claim 16, wherein a sequence element indexed by n₁ in a sequence of the first sub-signal is determined according to a sequence element indexed by a in the first m-sequence; and a sequence element indexed by n₂ in a sequence of the second sub-signal is determined according to a sequence element indexed by b in the second m-sequence.

18. The method according to claim 17, wherein the sequence element indexed by n₁ in the sequence of the first sub-signal is a first difference, and the sequence element indexed by n₂ in the sequence of the second sub-signal is a second difference; wherein the first difference is a difference between a value 1 and a second product, and the second product is a product of a value 2 and the sequence element indexed by a in the first m-sequence; and the second difference is a difference between the value 1 and a third product, and the third product is a product of the value 2 and the sequence element indexed by b in the second m-sequence.

19. The method according to any one of claims 14 to 18, wherein an index of an m-sequence comprised in the binary sequence is specified by a communication protocol, or is indicated by the network device, or is determined according to a rule specified by a communication protocol.

20. The method according to any one of claims 15 to 18, wherein an index of the preferred pair of m-sequences is specified by a communication protocol, or is indicated by the network device, or is determined according to a rule specified by a communication protocol.

21. The method according to claim 17 or 18, wherein the a is determined according to at least one of the n₁, a parameter m₀, or a first length value, and the b is determined according to at least one of the n₁, a parameter m₁, or the first length value; wherein n is greater than or equal to 0 and less than the first length value, the first length value is a length value of the first m-sequence and the second m-sequence, the parameter m₀ represents a cyclic shift offset of the first m-sequence when used to generate the sequence of the first sub-signal, and the parameter m₁ represents a cyclic shift offset of the second m-sequence when used to generate the sequence of the first sub-signal.

22. The method according to claim 7, 8, or 21, wherein the parameter m₀ is determined according to a first sub-identity, and the parameter m₁ is determined according to a second sub-identity; or, the parameter m₀ is determined according to the second sub-identity, and the parameter m₁ is determined according to the first sub-identity; or, the parameter m₀ is determined according to the first sub-identity and the second sub-identity, and the parameter m₁ is determined according to the first sub-identity; or, the parameter m₀ is determined according to the first sub-identity, and the parameter m₁ is determined according to the first sub-identity and the second sub-identity.

23. The method according to claim 22, wherein the first sub-identity and the second sub-identity are determined according to the cell identity and/or a cyclic shift step.

24. The method according to claim 22 or 23, wherein the parameter m₀ is determined according to a modulo result of the first sub-identity and a parameter G, and the parameter m₁ is determined according to a modulo result of the second sub-identity and a parameter F; or, the parameter m₁ is determined according to a modulo result of the first sub-identity and the parameter G, and the parameter m₀ is determined according to a modulo result of the second sub-identity and the parameter F.

25. The method according to claim 22 or 23, wherein the parameter m₀ is determined according to the second sub-identity and a quotient of the first sub-identity and a parameter B, and the parameter m₁ is determined according to a modulo result of the first sub-identity and the parameter B; or, the parameter m₁ is determined according to the second sub-identity and a quotient of the first sub-identity and the parameter B, and the parameter m₀ is determined according to a modulo result of the first sub-identity and the parameter B; wherein the parameter B is less than the first length value.

26. The method according to any one of claims 7, 8, or 21 to 25, wherein the parameter m₀ is less than or equal to the first length value, and the parameter m₁ is less than or equal to the first length value.

27. The method according to claim 14, wherein the m-sequence(s) is one m-sequence from an m-sequence subset, and an index of the m-sequence in the m-sequence subset is determined according to a cell identity; wherein m-sequences in the m-sequence subset are in a one-to-one correspondence with cell identities in a communication system.

28. The method according to claim 27, wherein the index of the m-sequence in the m-sequence set is equal to the cell identity.

29. The method according to claim 15, 27, or 28, wherein a number of m-sequences in the m-sequence set is determined according to a number of stages of a shift register and/or a cyclic shift step.

30. The method according to claim 15, 27, 28, or 29, wherein an indexing order of m-sequences in the m-sequence set is specified by a communication protocol, or is indicated by the network device, or is a default order, or is determined by a terminal device.

31. The method according to claim 30, wherein the indexing order of the m-sequences in the m-sequence set is determined according to one of the following orders: an order of primitive polynomial coefficients from highest power to lowest power, an order of primitive polynomial coefficients from lowest power to highest power, an ascending order of binary numbers of primitive polynomial coefficients, a descending order of binary numbers of primitive polynomial coefficients, an ascending order of cyclic shift offsets, or a descending order of cyclic shift offsets.

32. The method according to claim 30 or 31, wherein cyclically shifted sequences in the m-sequence set are arranged after their corresponding basic m-sequences in ascending order of cyclic shift offset; or, cyclically shifted sequences in the m-sequence set are arranged after their corresponding basic m-sequences in descending order of cyclic shift offset; or, all cyclically shifted sequences in the m-sequence set are arranged after all basic m-sequences in ascending order of cyclic shift offset; or, all cyclically shifted sequences in the m-sequence set are arranged after all basic m-sequences in descending order of cyclic shift offset.

33. The method according to any one of claims 1 to 32, wherein the method further comprises:
transmitting at least one of the following information: an index of a Gold sequence, an index of a first m-sequence, an index of a second m-sequence, an index of a preferred pair of m-sequences, an index of an m-sequence, a cyclic shift step, an indexing order of m-sequences in an m-sequence set, or an index of an m-sequence subset.

34. The method according to any one of claims 1 to 33, wherein time-domain resources occupied by the first signal are continuous or discontinuous.

35. The method according to claim 34, wherein the time-domain resources occupied by the first signal comprise at least two groups of time-domain units, a time-domain gap exists or does not exist between the at least two groups of time-domain units, and each group of the at least two groups of time-domain units is continuous or discontinuous.

36. The method according to any one of claims 1 to 35, wherein the first signal is obtained by performing a first modulation on the binary sequence, and the first modulation comprises one of the following: OOK modulation, PSK modulation, BPSK modulation, or FSK modulation.

37. The method according to claim 36, wherein one first modulation symbol is mapped to a first time-domain unit, or multiple first modulation symbols are mapped to a first time-domain unit; wherein the first time-domain unit is a time-domain unit occupied by the first signal, and the first modulation symbol is a modulation symbol of the first modulation.

38. The method according to any one of claims 1 to 37, wherein the first signal is obtained by performing scrambling processing on the binary sequence; wherein a sequence used for the scrambling processing comprises at least one of the following: a ZC sequence, a QPSK sequence, or a QAM sequence.

39. A signal reception method, wherein the method is performed by a terminal device, and the method comprises:
receiving a first signal, wherein the first signal is generated based on a binary sequence, and the first signal is used for radio resource management (RRM) measurement and/or downlink synchronization.

40. The method according to claim 39, wherein the binary sequence is associated with a cell identity.

41. The method according to claim 39 or 40, wherein the binary sequence comprises a Gold sequence, and different cell identities correspond to different Gold sequences.

42. The method according to claim 41, wherein a sequence element indexed by n in the Gold sequence is determined according to a sequence element indexed by a in a first m-sequence and a sequence element indexed by b in a second m-sequence;
wherein the first m-sequence is one m-sequence in a preferred pair of m-sequences, and the second m-sequence is another m-sequence in the preferred pair of m-sequences.

43. The method according to claim 42, wherein the sequence element indexed by n in the Gold sequence is a first product, the first product is a product of a first difference and a second difference; wherein the first difference is a difference between a value 1 and a second product, and the second product is a product of a value 2 and the sequence element indexed by a in the first m-sequence; and the second difference is a difference between the value 1 and a third product, and the third product is a product of the value 2 and the sequence element indexed by b in the second m-sequence.

44. The method according to claim 42, wherein the sequence element indexed by n in the Gold sequence is a modulo-2 result of a sum of the sequence element indexed by a in the first m-sequence and the sequence element indexed by b in the second m-sequence.

45. The method according to any one of claims 42 to 44, wherein the a is determined according to at least one of the n, a parameter m₀, or a first length value, and the b is determined according to at least one of the n, a parameter m₁, or the first length value; wherein n is greater than or equal to 0 and less than a first length value, the first length value is a length value of the first m-sequence and the second m-sequence, the parameter m₀ represents a cyclic shift offset of the first m-sequence when used to generate the Gold sequence, and the parameter m₁ represents a cyclic shift offset of the second m-sequence when used to generate the Gold sequence.

46. The method according to claim 45, wherein the a is determined according to a first modulo result, the second modulo result is a modulo result of a first sum value and the first length value, and the first sum value is a sum of the n and the parameter m₀; and the b is determined according to a second modulo result, the second modulo result is a modulo result of a second sum value and the first length value, and the second sum value is a sum of the n and the parameter m₁.

47. The method according to any one of claims 42 to 46, wherein an index of the first m-sequence is specified by a communication protocol, or is indicated by a network device, or is determined by the terminal device according to a rule specified by a communication protocol; and an index of the second m-sequence is specified by a communication protocol, or is indicated by a network device, or is determined by the terminal device according to a rule specified by a communication protocol.

48. The method according to any one of claims 42 to 46, wherein an index of the preferred pair of m-sequences is specified by a communication protocol, or is indicated by a network device, or is determined by the terminal device according to a rule specified by a communication protocol.

49. The method according to any one of claims 41 to 48, wherein the Gold sequence is a first Gold sequence, the first Gold sequence is obtained by modulo-2 addition of a first m-sequence and a cyclically shifted sequence of a second m-sequence, and the first m-sequence and the second m-sequence form a preferred pair of m-sequences.

50. The method according to any one of claims 41 to 48, wherein the Gold sequence is a second Gold sequence, the second Gold sequence is obtained by modulo-2 addition of a cyclically shifted sequence of a first m-sequence and a cyclically shifted sequence of a second m-sequence, and the first m-sequence and the second m-sequence form a preferred pair of m-sequences.

51. The method according to any one of claims 41 to 48, wherein the Gold sequence is a third Gold sequence, the third Gold sequence is obtained by performing cyclic shifts on a first Gold sequence, the first Gold sequence is obtained by modulo-2 addition of a first m-sequence and a cyclically shifted sequence of a second m-sequence, and the first m-sequence and the second m-sequence form a preferred pair of m-sequences.

52. The method according to claim 39 or 40, wherein the binary sequence comprises m-sequence(s), and different cell identities correspond to different m-sequences.

53. The method according to claim 52, wherein the m-sequence(s) comprise two m-sequences from a m-sequence set, the two m-sequences comprise a first m-sequence and a second m-sequence, the first m-sequence is one m-sequence in a preferred pair of m-sequences, and the second m-sequence is another m-sequence in the preferred pair of m-sequences.

54. The method according to claim 53, wherein the first signal comprises a first sub-signal and a second sub-signal, the first sub-signal is generated based on the first m-sequence, and the second sub-signal is generated based on the second m-sequence.

55. The method according to claim 54, wherein a sequence element indexed by n₁ in a sequence of the first sub-signal is determined according to a sequence element indexed by a in the first m-sequence; and a sequence element indexed by n₂ in a sequence of the second sub-signal is determined according to a sequence element indexed by b in the second m-sequence.

56. The method according to claim 55, wherein the sequence element indexed by n₁ in the sequence of the first sub-signal is a first difference, and the sequence element indexed by n₂ in the sequence of the second sub-signal is a second difference; wherein the first difference is a difference between a value 1 and a second product, and the second product is a product of a value 2 and the sequence element indexed by a in the first m-sequence; and the second difference is a difference between the value 1 and a third product, and the third product is a product of the value 2 and the sequence element indexed by b in the second m-sequence.

57. The method according to any one of claims 52 to 56, wherein an index of an m-sequence comprised in the binary sequence is specified by a communication protocol, or is indicated by a network device, or is determined according to a rule specified by a communication protocol.

58. The method according to any one of claims 53 to 56, wherein an index of the preferred pair of m-sequences is specified by a communication protocol, or is indicated by a network device, or is determined according to a rule specified by a communication protocol.

59. The method according to claim 55 or 56, wherein the a is determined according to at least one of the n₁, a parameter m₀, or a first length value, and the b is determined according to at least one of the n₁, a parameter m₁, or the first length value; wherein n is greater than or equal to 0 and less than the first length value, the first length value is a length value of the first m-sequence and the second m-sequence, the parameter m₀ represents a cyclic shift offset of the first m-sequence when used to generate the sequence of the first sub-signal, and the parameter m₁ represents a cyclic shift offset of the second m-sequence when used to generate the sequence of the first sub-signal.

60. The method according to claim 45, 46, or 59, wherein the parameter m₀ is determined according to a first sub-identity, and the parameter m₁ is determined according to a second sub-identity; or, the parameter m₀ is determined according to the second sub-identity, and the parameter m₁ is determined according to the first sub-identity; or, the parameter m₀ is determined according to the first sub-identity and the second sub-identity, and the parameter m₁ is determined according to the first sub-identity; or, the parameter m₀ is determined according to the first sub-identity, and the parameter m₁ is determined according to the first sub-identity and the second sub-identity.

61. The method according to claim 60, wherein the first sub-identity and the second sub-identity are determined according to the cell identity and/or a cyclic shift step.

62. The method according to claim 60 or 61, wherein the parameter m₀ is determined according to a modulo result of the first sub-identity and a parameter G, and the parameter m₁ is determined according to a modulo result of the second sub-identity and a parameter F; or, the parameter m₁ is determined according to a modulo result of the first sub-identity and the parameter G, and the parameter m₀ is determined according to a modulo result of the second sub-identity and the parameter F.

63. The method according to claim 60 or 61, wherein the parameter m₀ is determined according to the second sub-identity and a quotient of the first sub-identity and a parameter B, and the parameter m₁ is determined according to a modulo result of the first sub-identity and the parameter B; or, the parameter m₁ is determined according to the second sub-identity and a quotient of the first sub-identity and a parameter B, and the parameter m₀ is determined according to a modulo result of the first sub-identity and the parameter B; wherein the parameter B is less than the first length value.

64. The method according to any one of claims 45, 46, or 59 to 63, wherein the parameter m₀ is less than or equal to the first length value, and the parameter m₁ is less than or equal to the first length value.

65. The method according to claim 64, wherein the m-sequence(s) is one m-sequence from an m-sequence subset, and an index of the m-sequence in the m-sequence subset is determined according to a cell identity; wherein m-sequences in the m-sequence subset are in a one-to-one correspondence with identities in a communication system.

66. The method according to claim 65, wherein the index of the m-sequence in the m-sequence set is equal to the cell identity.

67. The method according to claim 53, 65, or 66, wherein the number of m-sequences in the m-sequence set is determined according to a number of stages of a shift register and/or a cyclic shift step.

68. The method according to claim 53, 65, 66, or 67, wherein an indexing order of m-sequences in the m-sequence set is specified by a communication protocol, or is indicated by a network device, or is a default order, or is determined by the terminal device.

69. The method according to claim 68, wherein the indexing order of the m-sequences in the m-sequence set is determined according to one of the following orders: an order of primitive polynomial coefficients from highest power to lowest power, an order of primitive polynomial coefficients from lowest power to highest power, an an ascending order of binary numbers of primitive polynomial coefficients, a descending order of binary numbers of primitive polynomial coefficients, an ascending order of cyclic shift offsets, or a descending order of cyclic shift offsets.

70. The method according to claim 68 or 69, wherein cyclically shifted sequences in the m-sequence set are arranged after their corresponding basic m-sequences in ascending order of cyclic shift offset; or, cyclically shifted sequences in the m-sequence set are arranged after their corresponding basic m-sequences in descending order of cyclic shift offset; or, all cyclically shifted sequences in the m-sequence set are arranged after all basic m-sequences in ascending order of cyclic shift offset; or, all cyclically shifted sequences in the m-sequence set are arranged after all basic m-sequences in descending order of cyclic shift offset.

71. The method according to any one of claims 39 to 70, wherein the method further comprises:
receiving at least one of the following information: an index of a Gold sequence, an index of a first m-sequence, an index of a second m-sequence, an index of a preferred pair of m-sequences, an index of an m-sequence, a cyclic shift step, an indexing order of m-sequences in an m-sequence set, or an index of an m-sequence subset.

72. The method according to any one of claims 39 to 71, wherein time-domain resources occupied by the first signal are continuous or discontinuous.

73. The method according to claim 72, wherein the time-domain resources occupied by the first signal comprise at least two groups of time-domain units, a time-domain gap exists or does not exist between the at least two groups of time-domain units, and each group of the at least two groups of time-domain units is continuous or discontinuous.

74. The method according to any one of claims 39 to 73, wherein the first signal is obtained by performing a first modulation on the binary sequence, and the first modulation comprises one of the following: OOK modulation, PSK modulation, BPSK modulation, or FSK modulation.

75. The method according to claim 74, wherein one first modulation symbol is mapped to a first time-domain unit, or multiple first modulation symbols are mapped to a first time-domain unit; wherein the first time-domain unit is a time-domain unit occupied by the first signal, and the first modulation symbol is a modulation symbol of the first modulation.

76. The method according to any one of claims 39 to 75, wherein the first signal is obtained by performing scrambling processing on the binary sequence; wherein a sequence used for the scrambling processing comprises at least one of the following: a ZC sequence, a QPSK sequence, or a QAM sequence.

77. A signal transmission apparatus, wherein the apparatus comprises:
a transmitting module, configured to transmit a first signal; wherein the first signal is generated based on a binary sequence, and the first signal is used for radio resource management (RRM) measurement and/or downlink synchronization.

78. A signal reception apparatus, wherein the apparatus comprises:
a receiving module, configured to receive a first signal; wherein the first signal is generated based on a binary sequence, and the first signal is used for radio resource management (RRM) measurement and/or downlink synchronization.

79. A communication device, wherein the communication device comprises:
a processor, a receiver and/or a transmitter coupled to the processor, and a memory configured to store executable instructions for the processor; wherein the communication device is configured to implement the signal transmission method according to any one of claims 1 to 38, or the signal reception method according to any one of claims 39 to 76.

80. A communication device, wherein the communication device comprises: a receiver and/or a transmitter, and the communication device is configured to implement the signal reception method according to any one of claims 39 to 76.

81. A computer-readable storage medium, wherein the readable storage medium stores executable instructions, and the executable instructions are loaded and executed by a processor to implement the signal transmission method according to any one of claims 1 to 38, or the signal reception method according to any one of claims 39 to 76.

82. A chip, wherein the chip comprises a programmable logic circuit or a program, and the chip is configured to implement the signal transmission method according to any one of claims 1 to 38, or the signal reception method according to any one of claims 39 to 76.

83. A computer program product, wherein the computer program product comprises computer instructions stored on a computer-readable storage medium, a processor of a computer device reads the computer instructions from the computer-readable storage medium, and the processor executes the computer instructions to cause the computer device to perform the signal transmission method according to any one of claims 1 to 38, or the signal reception method according to any one of claims 39 to 76.

84. A computer program, wherein the computer program comprises computer instructions, and a processor of a computer device executes the computer instructions to cause the computer device to perform the signal transmission method according to any one of claims 1 to 38, or the signal reception method according to any one of claims 39 to 76.
